(19)

Europäisches Patentamt
European Patent Office
Office européen des brevets

(11) **EP 4 632 442 A1**

(12) **EUROPEAN PATENT APPLICATION**
published in accordance with Art. 153(4) EPC

(43) Date of publication:
**15.10.2025 Bulletin 2025/42**

(21) Application number: **23900680.2**

(22) Date of filing: **06.12.2023**

(51) International Patent Classification (IPC):
**G02B 1/111** (2015.01)   **B32B 7/022** (2019.01)
**B32B 7/023** (2019.01)   **B32B 27/20** (2006.01)
**G02B 1/14** (2015.01)   **G02B 5/30** (2006.01)

(52) Cooperative Patent Classification (CPC):
**B32B 7/022; B32B 7/023; B32B 27/20;
G02B 1/111; G02B 1/14; G02B 5/30**

(86) International application number:
**PCT/JP2023/043607**

(87) International publication number:
**WO 2024/122567 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 JP 2022195209
06.12.2022 JP 2022195211**

(71) Applicant: **Dai Nippon Printing Co., Ltd.
Tokyo 162-8001 (JP)**

(72) Inventors:
• **HATA, Kentaro**
**Tokyo 162-8001 (JP)**
• **KAWASE, Michihiro**
**Tokyo 162-8001 (JP)**
• **TAKEI, Michiaki**
**Tokyo 162-8001 (JP)**
• **WATANABE, Osamu**
**Tokyo 162-8001 (JP)**
• **IKEDA, Keisuke**
**Tokyo 162-8001 (JP)**

(74) Representative: **Cabinet Beau de Loménie
103, rue de Grenelle / CS 90800
75340 Paris Cedex 07 (FR)**

(54) **OPTICAL SHEET, SHEET ARTICLE, POLARIZING PLATE, DISPLAY DEVICE, PANEL, OPTICAL SHEET SELECTION METHOD, AND OPTICAL SHEET MANUFACTURING METHOD**

(57)    An optical sheet is an optical sheet having a first surface and a second surface opposite the first surface. The optical sheet includes a substrate and a functional layer in order from the second surface toward the first surface. The functional layer contains a binder resin, hollow silica particles, and metal oxide particles other than silica particles. The arithmetical mean roughness Sa on the first surface is 5.2 nm or less.

EP 4 632 442 A1

FIG. 1

## Description

Technical Field

The present disclosure relates to an optical sheet, a sheet article, a polarizing plate, a display device, a panel, an optical sheet selection method, and an optical sheet manufacturing method.

Background Art

As disclosed in PTL 1 and PTL 2, optical sheets including a functional layer having a low refractive index are known. The functional layer contains hollow silica particles. The refractive index of the functional layer is low as a result of adjustment by the hollow silica particles. The functional layer having a low refractive index has a reflection-reducing function that reduces the reflection of light. In PTL 1, the low-refractive-index layer contains inorganic oxide particles in addition to the hollow silica particles. The inorganic oxide particles form projections on the surface. The projections protect the hollow silica particles, which are prone to breakage and detachment due to their hollow structure. In PTL 1, the projections protect the hollow silica particles, whereby improvement in abrasion resistance is sought.

PTL 1: WO 2021/020504A

PTL 2: WO 2019/208786A

Summary of Invention

With the means disclosed in PTL 1, the abrasion resistance of the optical sheet cannot be sufficiently improved. An object of the present disclosure is to improve the abrasion resistance of an optical sheet containing hollow silica.

An optical sheet according to a first embodiment of the present disclosure is:

an optical sheet having a first surface and a second surface opposite the first surface, the optical sheet including:

a substrate and a functional layer in order from the second surface toward the first surface, wherein:

the functional layer contains a binder component, hollow silica particles, and metal oxide particles other than silica particles; and
an arithmetical mean roughness Sa on the first surface is 5.2 nm or less.

A sheet article according to the first embodiment of the present disclosure includes a plurality of the optical sheets according to the first embodiment of the present disclosure.

A polarizing plate according to the first embodiment of the present disclosure includes:

a first protection sheet, a polarizer, and a second protection sheet, wherein:

the first protection sheet and/or the second protection sheet includes the optical sheet according to the first embodiment of the present disclosure.

A display device according to the first embodiment of the present disclosure includes:

an image formation unit; and
the optical sheet according to the first embodiment of the present disclosure stacked to the image formation unit.

A panel according to the first embodiment of the present disclosure includes:

a bonding target article; and
the optical sheet according to the first embodiment of the present disclosure bonded to the bonding target article.

An optical sheet selection method according to the first embodiment of the present disclosure relates to:

optical sheets having a first surface and a second surface opposite the first surface, the optical sheets including:

a substrate and a functional layer in order from the second surface toward the first surface, wherein:

the functional layer contains a binder component, hollow silica particles, and metal oxide particles other than silica particles, the method including:

measuring an arithmetical mean roughness Sa on the first surface; and
selecting an optical sheet for which the arithmetical mean roughness Sa is 5.2 nm or less.

An optical sheet manufacturing method according to the first embodiment of the present disclosure includes: producing optical sheets having a first surface and a second surface opposite the first surface, the optical sheets including: a substrate and a functional layer in order from the second surface toward the first surface, wherein:

the functional layer contains a binder component, hollow silica particles, and metal oxide particles other than silica particles; and
evaluating an arithmetical mean roughness Sa on the first surface and selecting an optical sheet for which the arithmetical mean roughness Sa is 5.2 nm or less.

An optical sheet according to a second embodiment of the present disclosure is:
an optical sheet having a first surface and a second surface opposite the first surface, the optical sheet including: a substrate and a functional layer in order from the second surface toward the first surface, wherein:

the functional layer contains a binder component and hollow silica particles;
an indentation hardness of the first surface as determined with an press-in depth set to 100 nm is 0.45 GPa or more; and
a standard deviation of composite elastic modulus at ten different points on the first surface as determined with a press-in depth set to 30 nm is 1.1 GPa or less.

A sheet article according to the second embodiment of the present disclosure includes a plurality of the optical sheets according to the second embodiment of the present disclosure.
A polarizing plate according to the second embodiment of the present disclosure includes:
a first protection sheet, a polarizer, and a second protection sheet, wherein:
the first protection sheet and/or the second protection sheet includes the optical sheet according to the second embodiment of the present disclosure.
A display device according to the second embodiment of the present disclosure includes:

an image formation unit; and
the optical sheet according to the second embodiment of the present disclosure overlaid on the image formation unit.

A panel according to the second embodiment of the present disclosure includes:

a bonding target article; and

the optical sheet according to the second embodiment of the present disclosure bonded to the bonding target article.

An optical sheet selection method according to the second embodiment of the present disclosure relates to: optical sheets having a first surface and a second surface opposite the first surface, the optical sheets including: a substrate and a functional layer in order from the second surface toward the first surface, wherein: the functional layer contains a binder component and hollow silica particles, the method including:

measuring an indentation hardness of the first surface with an press-in depth set to 100 nm and composite elastic modulus of the first surface with an press-in depth set to 30 nm; and

selecting an optical sheet based on the indentation hardness and a standard deviation of the composite elastic modulus at ten different points on the first surface.

An optical sheet manufacturing method according to the second embodiment of the present disclosure includes: producing optical sheets having a first surface and a second surface opposite the first surface, the optical sheets including: a substrate and a functional layer in order from the second surface toward the first surface, wherein:

the functional layer contains a binder component and hollow silica particles; and

selecting an optical sheet for which an indentation hardness of the first surface as determined with an press-in depth set to 100 nm is 0.45 GPa or more, and for which a standard deviation of composite elastic modulus at ten different points on the first surface as determined with an press-in depth set to 30 nm is 1.1 GPa or less.

According to the present disclosure, the abrasion resistance of an optical sheet containing hollow silica can be improved.

Brief Description of Drawings

[Fig. 1] Fig. 1 is a diagram for describing the first embodiment and is a cross-sectional view illustrating an example of an optical sheet.

[Fig. 2] Fig. 2 is an electron microscope image illustrating the functional layer of an optical sheet.

[Fig. 3] Fig. 3 is a diagram corresponding to Fig. 1 and is a cross-sectional view illustrating another example of an optical sheet.

[Fig. 4] Fig. 4 is a perspective view illustrating an example of a sheet article including optical sheets.

[Fig. 5] Fig. 5 is a cross-sectional view illustrating an example of a polarizing plate including an optical sheet.

[Fig. 6] Fig. 6 is a cross-sectional view illustrating an example of a display device including an optical sheet.

[Fig. 7] Fig. 7 is a cross-sectional view illustrating an example of a panel including an optical sheet.

[Fig. 8] Fig. 8 is a grayscale image illustrating the surface of Example 1.

[Fig. 9] Fig. 9 is a grayscale image illustrating the surface of Example 2.

[Fig. 10] Fig. 10 is a grayscale image illustrating the surface of Example 3.

[Fig. 11] Fig. 11 is a grayscale image illustrating the surface of Comparative Example 1.

[Fig. 12] Fig. 12 is a grayscale image illustrating the surface of Comparative Example 2.

[Fig. 13] Fig. 13 is a diagram for describing the second embodiment and is a cross-sectional view illustrating an example of an optical sheet.

[Fig. 14] Fig. 14 is a graph illustrating an example of a load-displacement curve acquired by nanoindentation.

[Fig. 15] Fig. 15 is a diagram corresponding to Fig. 13 and is a cross-sectional view illustrating another example of an optical sheet.

Description of Embodiments

The first and second embodiments of the present disclosure relate to the following [1] to [29].

[1] An optical sheet having a first surface and a second surface opposite the first surface, the optical sheet including: a substrate and a functional layer in order from the second surface toward the first surface, wherein:

the functional layer contains a binder component, hollow silica particles, and metal oxide particles other than silica particles; and

an arithmetical mean roughness Sa on the first surface is 5.2 nm or less.

[2] The optical sheet according to [1], wherein the arithmetical mean roughness Sa is 4.2 nm or less.

[3] The optical sheet according to [1] or [2], wherein a dynamic coefficient of friction of the first surface against felt under an applied load of 500 g is 0.20 or less.

[4] The optical sheet according to any one of [1] to [3], wherein a dynamic coefficient of friction of the first surface against steel wool under an applied load of 500 g is 0.25 or less.

[5] The optical sheet according to any one of [1] to [4], wherein an average particle diameter of the metal oxide particles is smaller than an average thickness of the functional layer.

[6] The optical sheet according to any one of [1] to [5], wherein an average particle diameter of the metal oxide particles is smaller than an average particle diameter of the hollow silica particles.

[7] The optical sheet according to any one of [1] to [6], wherein the metal oxide particles contain alumina.

[8] The optical sheet according to any one of [1] to [7], wherein the functional layer contains solid silica particles.

[9] The optical sheet according to any one of [1] to [8], further comprising a resin layer positioned between the substrate and the functional layer,
wherein the resin layer contains a cured product of a curable resin composition.

[10] The optical sheet according to any one of [1] to [9], wherein:

an indentation hardness of the first surface as determined with an press-in depth set to 100 nm is 0.45 GPa or more; and

a standard deviation of composite elastic modulus at ten different points on the first surface as determined with an press-in depth set to 30 nm is 1.1 GPa or less.

[11] An optical sheet having a first surface and a second surface opposite the first surface, the optical sheet including: a substrate and a functional layer in order from the second surface toward the first surface, wherein:

the functional layer contains a binder component and hollow silica particles;

an indentation hardness of the first surface as determined with an press-in depth set to 100 nm is 0.45 GPa or more; and

a standard deviation of composite elastic modulus at ten different points on the first surface as determined with an press-in depth set to 30 nm is 1.1 GPa or less.

[12] The optical sheet according to [10] or [11], wherein the indentation hardness is 0.55 GPa or more.

[13] The optical sheet according to any one of [10] to [12], wherein the standard deviation of the composite elastic modulus is 0.80 GPa or less.

[14] The optical sheet according to any one of [1] to [13], wherein an average thickness of the functional layer is 80 nm or more and 150 nm or less.

[15] The optical sheet according to any one of [1] to [14], wherein an average particle diameter of the hollow silica particles is 50 nm or more and 100 nm or less.

[16] The optical sheet according to any one of [1] to [15], further comprising a resin layer positioned between the substrate and the functional layer and adjacent to the functional layer, wherein

the resin layer contains a cured product of a curable resin composition; and
an average thickness of the resin layer is 0.1 $\mu$m or more and 100 $\mu$m or less.

[17] The optical sheet according to any one of [1] to [16], further comprising a second functional layer positioned between the substrate and the functional layer and adjacent to the functional layer, wherein

the second functional layer contains a binder component and particles; and

an average thickness of the second functional layer is 50 nm or more and 200 nm or less.

[18] The optical sheet according to [17], further comprising a resin layer positioned between the substrate and the second functional layer and adjacent to the second functional layer, wherein

the resin layer contains a cured product of a curable resin composition; and
an average thickness of the resin layer is 0.1 $\mu$m or more and 100 $\mu$m or less.

[19] The optical sheet according to any one of [1] to [18], wherein the optical sheet has resistance to an abrasion resistance test using steel wool on the first surface performed under the following conditions.
Abrasion resistance test: Steel wool #0000 is used as an abrasive piece and is reciprocated for 1000 cycles under a load of 1000 g at a movement speed of 80 mm/second, with a one-way travel distance being 40 mm.

[20] The optical sheet according to any one of [1] to [19], wherein the optical sheet has resistance to an abrasion resistance test using felt on the first surface performed under the following conditions.
Abrasion resistance test: "Jumbo Wearaser®; product number, CS-7," manufactured by TABER Industries, is used as an abrasive piece and is reciprocated for 10000 cycles under a load of 200 g at a movement speed of 200 mm/second, with a one-way travel distance being 50 mm.

21] A sheet article including multiple optical sheets according to any one of [1] to [20].

[22] The sheet article according to [21], wherein the article is rolled with a roll axis as a center.

[23] A polarizing plate including:
a first protection sheet, a polarizer, and a second protection sheet, wherein:
the first protection sheet and/or the second protection sheet includes the optical sheet according to any one of [1] to [20].

[24] A display device including:

an image formation unit; and
the optical sheet according to any one of [1] to [20] stacked to the image formation unit.

[25] A panel including:

a bonding target article; and
the optical sheet according to any one of [1] to [20] bonded to the bonding target article.

[26] An optical sheet selection method relating to:
optical sheets having a first surface and a second surface opposite the first surface, the optical sheets including:
a substrate and a functional layer in order from the second surface toward the first surface, wherein:
the functional layer contains a binder component, hollow silica particles, and metal oxide particles other than silica particles, the method including:

measuring an arithmetical mean roughness Sa on the first surface; and

selecting an optical sheet for which the arithmetical mean roughness Sa is 5.2 nm or less.

[27] An optical sheet manufacturing method including:
producing optical sheets having a first surface and a second surface opposite the first surface, the optical sheets including:
a substrate and a functional layer in order from the second surface toward the first surface, wherein:

the functional layer contains a binder component, hollow silica particles, and metal oxide particles other than silica particles; and

evaluating an arithmetical mean roughness Sa on the first surface and selecting an optical sheet for which the arithmetical mean roughness Sa is 5.2 nm or less.

[28] An optical sheet selection method relating to:

optical sheets having a first surface and a second surface opposite the first surface, the optical sheets including:
a substrate and a functional layer in order from the second surface toward the first surface, wherein:
the functional layer contains a binder component and hollow silica particles, the method including:

measuring an indentation hardness of the first surface with an press-in depth set to 100 nm and composite elastic modulus of the first surface with an press-in depth set to 30 nm; and

selecting an optical sheet based on the indentation hardness and a standard deviation of the composite elastic modulus at ten different points on the first surface.

[29] An optical sheet manufacturing method including:
producing optical sheets having a first surface and a second surface opposite the first surface, the optical sheets including:
a substrate and a functional layer in order from the second surface toward the first surface, wherein:

the functional layer contains a binder component and hollow silica particles; and

selecting an optical sheet based on an indentation hardness of the first surface as determined with an press-in depth set to 100 nm and a standard deviation of composite elastic modulus at ten different points on the first surface as determined with an press-in depth set to 30 nm.

The details of the first and second embodiments of the present disclosure will now be described. In the drawings attached hereto, the scale, aspect ratios, and other details differ from those of actual objects and are exaggerated as appropriate for the sake of convenience in illustration and ease of understanding.

As used herein, terms such as "sheet," "film," and "plate" are not differentiated from one another solely based on the difference in nominal designation. For example, an "optical sheet" cannot be differentiated from, for instance, an element referred to as an optical film or an optical plate solely by the difference in nominal designation.

Herein, multiple candidate upper limits and multiple candidate lower limits for a numerical range may be specified in separate sentences. In this type of statement, the numerical range may be constituted by pairing any one candidate upper limit with any one candidate lower limit. As an example, the following statement is discussed: "Parameter B may be A1 or more, may be A2 or more, or may be A3 or more. Parameter B may be A4 or less, may be A5 or less, or may be A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

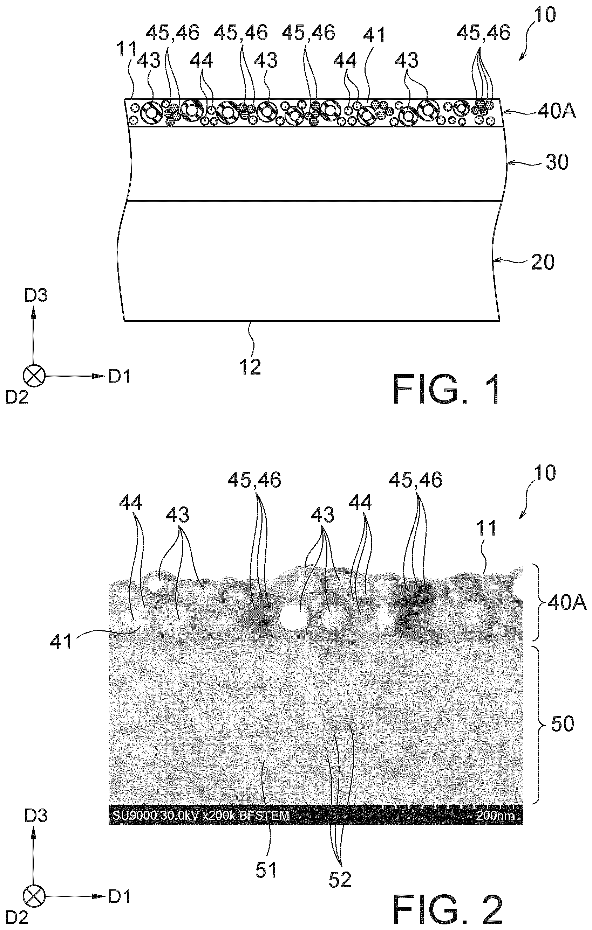

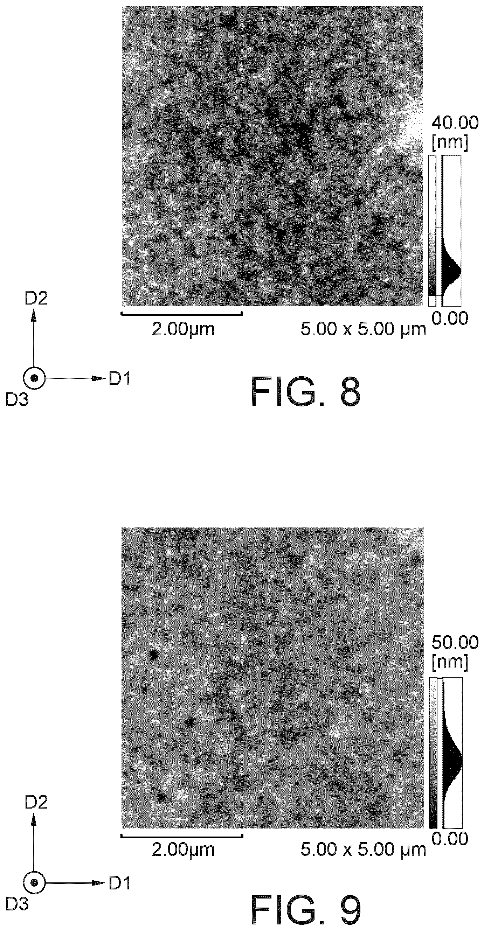

To clarify dimensional relationship among the drawings, some drawings indicate the same directions using arrows with reference signs common to the drawings. The distal side of an arrow is the first side of that direction. The side opposite the distal end of an arrow is the second side of that direction. An arrow pointing toward the back of the page of the drawing along the direction perpendicular to the page is indicated by a symbol of × in a circle, for example as illustrated in Fig. 1. An arrow pointing toward the front of the page of the drawing along the direction perpendicular to the page is indicated by a symbol of a dot in a circle, for example as illustrated in Fig. 8.

<<<<First Embodiment>>>>

The first embodiment will be described.

<<<Optical Sheet 10>>>

As illustrated in Fig. 1, an optical sheet 10 according to the first embodiment includes a first surface 11 and a second surface 12. The optical sheet 10 includes a substrate 20 and a functional layer 40A in order from the second surface 12 to the first surface 11. The functional layer 40A contains a binder component 41, hollow silica particles 43, and metal oxide particles 45. The arithmetical mean roughness Sa on the first surface 11 is 5.2 nm or less. The refractive index of the functional layer 40A, in the context of investigating the reflection-reducing function of the functional layer 40A, is lower than the refractive index of the binder component 41 by virtue of the inclusion of the hollow silica particles 43. With the functional layer 40A having a low refractive index, the reflection of light incident on the first surface 11 can be reduced.

The thickness of the functional layer 40A having a reflection-reducing function is as small as approximately 100 nm. Known optical sheets have experienced damage to the first surface, for example when the low-refractive-index layer is rubbed with a finger. The low-refractive-index layer contains hollow silica particles to reduce the refractive index. The hollow silica particles have a relatively large particle diameter. The hollow silica particles, however, readily break because of their hollow structure, and readily detach from the binder component 41, for example as a result of deformation. For this reason, the surface of the low-refractive-index layer of known optical sheets has been inferior in abrasion resistance.

By contrast, with the optical sheet 10 according to the first embodiment, in which the functional layer 40A contains metal oxide particles 45 in addition to hollow silica particles 43 and for which the arithmetical mean roughness Sa on the first surface 11 is 5.2 nm or less, the first surface 11 has excellent abrasion resistance. The details of the reason for the improved abrasion resistance are unclear, but the it is presumed that the following matters contribute to the improvement in abrasion resistance. The present disclosure, however, is not bound to the following presumption.

First, the functional layer 40A contains metal oxide particles 45 in addition to hollow silica particles 43. Inside the binder component 41, metal oxide particles 45 are dispersed in addition to hollow silica particles 43. Metal oxide particles 45 are interposed between hollow silica particles 43 within the binder component 41. By virtue of this, hydroxyl groups in the metal oxide particles 45 can undergo hydrogen bonding with hydroxyl groups in the hollow silica particles 43. The hydroxyl groups in the metal oxide particles 45, furthermore, can also undergo hydrogen bonding with hydrogen groups in the binder component. It is speculated that, for example, as a result of the dispersion of the metal oxide particles 45 in addition to the hollow silica particles 43 within the binder component 41 as a binder resin, crosslinking in the functional layer 40A proceeds. The metal oxide particles 45 can connect hollow silica particles 43 and hollow silica particles 43. The metal oxide particles 45 can connect the hollow silica particles 43 and the binder component 41. Overall, it is presumed that with the metal oxide particles 45, the strength and hardness of the functional layer 40A are enhanced, and the abrasion resistance on the first surface 11, which is formed by the functional layer 40A, is fortified.

<Arithmetical Mean Roughness Sa>

The arithmetical mean roughness Sa on the first surface 11, furthermore, is 5.2 nm or less. By reducing this arithmetical mean roughness Sa to 5.2 nm or less, excellent lubricity is imparted to the first surface 11. Through the combination of improved lubricity resulting from the significant reduction in arithmetical mean roughness Sa and the reinforcing effect provided by the metal oxide particles 45, the abrasion resistance of the first surface 11 was considerably improved, as also demonstrated in the Examples section below. For improvement in abrasion resistance, the arithmetical mean roughness Sa may be 4.2 nm or less or may be 3.5 nm or less.

The lower limit to the arithmetical mean roughness Sa on the first surface 11 is not particularly specified. The arithmetical mean roughness Sa on the first surface 11 may be 0 nm or more or may be more than 0 nm.

The arithmetical mean roughness Sa on the first surface 11 may be 0 nm or more and 5.2 nm or less, may be 0 nm or more and 4.2 nm or less, or may be 0 nm or more and 3.5 nm or less. The arithmetical mean roughness Sa on the first surface 11 may be more than 0 nm and 5.2 nm or less, may be more than 0 nm and 4.2 nm or less, or may be more than 0 nm and 3.5 nm or less.

In the aforementioned PTL 1 (WO 2021/020504A), the inorganic oxide particles are used to form projections on the surface. The metal oxide particles in PTL 1 are expected to protect the hollow silica particles by forming projections on the surface. In the first embodiment, metal oxide particles 45 are used in the expectation of effects substantially different from those in PTL 1. As a result, the configuration is substantially different from that in PTL 1 in terms of surface profile as well, yet abrasion resistance remarkably superior to that in PTL 1 can be achieved. In this regard, the advantages provided by the first embodiment are significant ones far beyond what can be predicted from the technical level at the time of filing of the present application.

The arithmetical mean roughness Sa is the three-dimensional arithmetical mean roughness as defined in ISO 25178. The three-dimensional arithmetical mean roughness is an extension of the arithmetical mean roughness Ra relating to two-dimensional roughness into three dimensions. The arithmetical mean roughness Sa is calculated according to formula (i) below, with the X- and Y-axes in a Cartesian coordinate system defined on the reference plane and with the roughness curve expressed as Z(x,y) and the dimensions of the reference plane expressed as Lx and Ly. It should be noted that in formula (i), A = Lx × Ly.

[Math. 1]

$$\mathrm{Sa} = \frac{1}{A} \int_0^{Lx} \int_0^{Ly} |Z(x,y)| dxdy \quad (i)$$

The arithmetical mean roughness Sa is a value obtained using an atomic force microscope (AFM). A sample for measurement is cut out from the optical sheet 10 of interest. The size of the sample for measurement is a 5 mm × 5 mm square. The sample for measurement is visually inspected to confirm the absence of adhering contaminants, flaws, and other abnormalities. In five measurement areas on the sample for measurement separate from one another, the profile of the surface formed by the first surface of the optical sheet is measured using an atomic force microscope. Each measurement area is a 10 μm × 10 μm square.

The atomic force microscope can be "SPM-9700," manufactured by Shimadzu Corporation. The cantilever can be NCHR, manufactured by NanoWorld AG (resonant frequency, 320 kHz; spring constant, 42 N/m). The measurement of the surface profile of the sample can be performed using "SPM Manager," the software provided with the atomic force microscope, in its On-Line (measurement) mode. The measurement conditions can be set as follows.

- Measurement mode: Phase

- Scanning size: 10 μm × 10 μm

- Scanning rate: 2.0 to 2.5 Hz (a 10-μm scanner is used)

- Number of pixels: 512 × 512

<Abrasion Resistance>

In the optical sheet 10 according to the first embodiment, the functional layer 40A contains a binder component 41, hollow silica particles 43, and metal oxide particles 45. The arithmetical mean roughness Sa on the first surface 11 is 5.2 nm or less. The optical sheet 10 according to the first embodiment has excellent abrasion resistance. An optical sheet to which excellent abrasion resistance has been imparted is superior in both steel wool resistance and felt resistance. A known measure representing abrasion resistance on the surface of an optical sheet is pencil hardness. Pencil hardness is an indicator of resistance when a hard object comes into contact under stress approximating a point load. During repeated frictions or prolonged use, however, gently applied surface loads can cause microscopic scratches. A reasonable approach to evaluate resistance to this type of flaw is the use of steel wool resistance and felt resistance. In an abrasion resistance test using steel wool on the first surface 11, the optical sheet 10 may have high resistance. In an abrasion resistance test using felt on the first surface 11, the optical sheet 10 may have high resistance.

(Steel Wool Abrasion Resistance)

Test results from a steel wool abrasion resistance test serve as an indicator of resistance to flaws and other defects that occur when steel wool is pressed against the test sample under evaluation and relatively moved. The optical sheet 10 may have resistance to a steel wool abrasion resistance test performed under the conditions specified below.

The test sample of the optical sheet under evaluation is shaped like a rectangle. The short sides of the rectangular shape are cut to 50 mm, and the long sides are cut to 100 mm. The test sample is visually inspected to confirm the absence of dust, flaws, and other abnormalities. The rectangularly shaped sample is stretched along a level surface so that no crease or warp is formed on the tester. The four corners of the stretched sample are fixed on the tester using mending tape. The mending tape may be trade name "810-3-18," manufactured by 3M Company.

Steel wool as the abrasive piece (abrasive block, slider piece, slider block) is brought into contact with the surface of the sample formed by the first surface of the optical sheet. The steel wool is "BONSTAR B-204," made of yarn #0000, manufactured by Nippon Steel Wool Co., Ltd. The BONSTAR B-204 used has the following dimensions for industrial use: width, approximately 390 mm; length, approximately 75 mm; thickness, approximately 110 mm. The area of contact between the test sample and the abrasive piece is 20 mm × 20 mm. A load of 1000 g is applied to the abrasive piece from above in the vertical direction, thereby pressing the abrasive piece against the test sample stretched to fit over a level surface.

With the abrasive piece pressed against the test sample from above in the vertical direction, the abrasive piece and the sample are relatively moved in the horizontal direction. The abrasive piece and the sample are relatively moved in the direction parallel to the direction in which the fibers in the steel wool primarily extend. The relative movements are reciprocating motions along a straight pathway. The number of cycles of the reciprocating motions is 1000. The speed of the reciprocating motions is 80 mm/second. The stroke in the reciprocating motions is 40 mm in both the forward and backward movements. The reciprocating motions are made in the direction parallel to the long sides of the sample.

The testing environment is at a temperature of 23°C ± 2°C and a relative humidity of 50% ± 5%. The test sample is placed in the testing environment for 16 hours before the start of the test.

The abrasive piece is an unused one. Before the testing of the subject of evaluation is conducted, pretreatment of the steel wool is performed by rubbing the steel wool against a preparatory sample. The tester to be used for the testing of the sample under evaluation is also used for the pretreatment of the steel wool. The preparatory sample is a polyethylene terephthalate film. The preparatory sample was shaped like a rectangle measuring 50 mm along the short sides and 100 mm along the long sides. The steel wool is rubbed against an untreated surface of the polyethylene terephthalate film. The preparatory sample is stretched along a level surface, and the four corners of the preparatory sample are fixed on the tester using mending tape. The steel wool is pressed against the preparatory sample from above in the vertical direction. The area of contact between the preparatory sample and the steel wool is 20 mm × 20 mm. The load for pressing the steel wool against the preparatory sample is 300 g. The steel wool pressed against the preparatory sample is relatively moved, in relation to the preparatory sample, in the horizontal direction. The steel wool and the preparatory sample are relatively moved in the direction parallel to the direction in which the fibers in the steel wool primarily extend. The relative movements are reciprocating motions. The number of cycles of the reciprocating motions is 300. The speed of the reciprocating motions is 80 mm/second. The stroke in the reciprocating motions is 40 mm in both the forward and backward movements. The steel wool pressed against the preparatory sample in such a manner is used for the testing of the subject of evaluation.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less.

When a flaw or other defect of a severity that poses a problem in application to display devices is observed on the test sample, the optical sheet 10 under evaluation is assessed as lacking resistance to the abrasion resistance test using steel wool on the first surface 11. One optical sheet 10 under evaluation undergoes five runs of the abrasion resistance test. When no defect of a severity that poses a problem in application to display devices occurs throughout the five runs of the test, the optical sheet 10 under evaluation is assessed as having resistance to the abrasion resistance test using steel wool on the first surface 11. During the five runs of the test, the steel wool is replaced each time. The aforementioned pretreatment of the steel wool is performed before the start of testing in each of the five runs of the test.

(Felt Resistance)

Test results from a felt abrasion resistance test serve as an indicator of resistance to flaws and other defects that occur when felt is pressed against the test sample under evaluation and relatively moved. The optical sheet 10 may have resistance to a felt abrasion resistance test performed under the following conditions using "Jumbo Wearaser® CS-7," manufactured by TABER Industries, as the abrasive piece.

The test sample of the optical sheet under evaluation is shaped like a rectangle. The short sides of the rectangular shape are cut to 50 mm, and the long sides are cut to 100 mm. The test sample is visually inspected to confirm the absence of dust, flaws, and other abnormalities. The rectangularly shaped sample is stretched along a level surface so that no crease or warp is formed on the tester. The four corners of the stretched sample are fixed on the tester using mending tape. The mending tape may be trade name "810-3-18," manufactured by 3M Company.

Felt as the abrasive piece is brought into contact with the surface of the sample formed by the first surface of the optical sheet. The felt is "Jumbo Wearaser® CS-7," manufactured by TABER Industries. The area of contact between the test sample and the abrasive piece is a circle having a diameter of 12 mm. A load of 200 g is applied to the abrasive piece from above in the vertical direction, thereby pressing the abrasive piece against the test sample stretched to fit over a level surface.

With the abrasive piece pressed against the test sample from above in the vertical direction, the abrasive piece and the sample are relatively moved in the horizontal direction. The relative movements are reciprocating motions along a straight pathway. The number of cycles of the reciprocating motions is 10000. The speed of the reciprocating motions is 200 mm/second. The stroke in the reciprocating motions is 50 mm in both the forward and backward movements. The reciprocating motions are made in the direction parallel to the long sides of the sample.

The testing environment is at a temperature of 23°C ± 2°C and a relative humidity of 50% ± 5%. The test sample is placed in the testing environment for 16 hours before the start of the test.

The abrasive piece is an unused one. Before the testing of the subject of evaluation is conducted, pretreatment of the felt is performed by rubbing the felt against a preparatory sample. The tester to be used for the testing of the sample under evaluation is also used for the pretreatment of the felt. The preparatory sample is "One Side Primer Treated type: A4160," manufactured by Toyobo Co., Ltd. The preparatory sample was shaped like a rectangle measuring 50 mm along the short sides and 100 mm along the long sides. The preparatory sample is stretched along a level surface, and the four corners of the surface of the preparatory sample not treated with a primer (the surface on which PET is exposed) are fixed on the tester using mending tape. The felt is rubbed against the untreated surface of the preparatory sample. The felt is pressed against the preparatory sample from above in the vertical direction. The area of contact between the preparatory sample and the felt is a circle having a diameter of 12 mm. The load for pressing the felt against the preparatory sample is 600 g. The felt pressed against the preparatory sample is relatively moved, in relation to the preparatory sample, in the horizontal direction. The relative movements are reciprocating motions. The number of cycles of the reciprocating motions is 150. The speed of the reciprocating motions is 220 mm/second. The stroke in the reciprocating motions is 50 mm in both the forward and backward movements. The felt pressed against the preparatory sample in such a manner is used for the testing of the subject of evaluation. After it is confirmed that the smoothened surface of the pressed felt is free of fuzz and flat, the test is conducted.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less.

When a flaw or other defect of a severity that poses a problem in application to display devices is observed on the test sample, the optical sheet 10 under evaluation is assessed as lacking resistance to the abrasion resistance test using CS-7 as the abrasive piece on the first surface 11. One optical sheet 10 under evaluation undergoes five runs of the abrasion resistance test. When no defect of a severity that poses a problem in application to display devices occurs throughout the five runs of the test, the optical sheet 10 under evaluation is assessed as having resistance to the abrasion resistance test using CS-7 as the abrasive piece on the first surface 11. Throughout the five runs of the test, the same piece of CS-7 is used. The aforementioned pretreatment of CS-7 is performed before the start of testing in each of the five runs of the test.

<Dynamic Coefficients of Friction>

Dynamic coefficients of friction on the first surface 11 may be reduced. By reducing dynamic coefficients of friction, the lubricity of the first surface 11 is increased, and abrasion resistance can be improved.

The dynamic coefficient of friction of the first surface 11 against felt under an applied load of 500 g may be 0.20 or less, may be 0.19 or less, may be 0.18 or less, or may be 0.16 or less. The dynamic coefficient of friction of the first surface 11 against steel wool under an applied load of 500 g may be 0.25 or less, may be 0.24 or less, may be 0.20 or less, or may be 0.15 or less. The lower limit to the dynamic coefficients of friction of the first surface 11 is not particularly specified. The dynamic coefficients of friction of the first surface 11 may be 0 or greater or may be greater than 0.

The dynamic coefficient of friction of the first surface 11 against felt under an applied load of 500 g may be 0 or greater and 0.20 or less, may be 0 or greater and 0.19 or less, may be 0 or greater and 0.18 or less, or may be 0 or greater and 0.16 or less. The dynamic coefficient of friction of the first surface 11 against felt under an applied load of 500 g may be greater than 0 and 0.20 or less, may be greater than 0 and 0.19 or less, may be greater than 0 and 0.18 or less, or may be greater than 0 and 0.16 or less.

The dynamic coefficient of friction of the first surface 11 against steel wool under an applied load of 500 g may be 0 or greater and 0.25 or less, may be 0 or greater and 0.24 or less, may be 0 or greater and 0.20 or less, or may be 0 or greater and 0.15 or less. The dynamic coefficient of friction of the first surface 11 against steel wool under an applied load of 500 g may be greater than 0 and 0.25 or less, may be greater than 0 and 0.24 or less, may be greater than 0 and 0.20 or less, or may be greater than 0 and 0.15 or less.

Each dynamic coefficient of friction is identified as the average of 20 measured dynamic coefficients of friction obtained for a test sample cut out from the optical sheet under measurement. The test sample is visually inspected to confirm the absence of dust, flaws, and other abnormalities. A dynamic coefficient of friction of the test sample is measured as follows.

The test sample of the optical sheet is fixed to the measuring instrument for the dynamic coefficient of friction as follows. First, the test sample is stretched on a table as the sample mount stage so that no crease, warp, or other deformation is formed. The table extends along a level surface. The test sample is stretched along the level surface. The size of the test sample is 15 cm × 25 cm. The four corners of the test sample in the stretched state are fixed on the table using mending tape. The mending tape may be trade name "810-3-18," manufactured by 3M Company. For the test sample of the optical sheet fixed on the table, the second surface is in contact with the table, and the first surface faces opposite the table.

Then the abrasive piece, which serves as the counterpart against which the coefficient of friction of the first surface 11 is measured, is prepared. As mentioned above, the abrasive piece is felt or steel wool. The felt is "Polishing Felt Sheet (No. 56901)," having a thickness of 1.0 mm, manufactured by Nakanishi Inc., Japan. The steel wool is "BONSTAR B-204," made of yarn #0000, manufactured by Nippon Steel Wool Co., Ltd. The size of the abrasive piece is 5 cm × 5 cm. A glass plate having a size of 5 cm × 5 cm is prepared. The abrasive piece is fixed on the glass plate. The glass plate is positioned such that the abrasive piece fixed thereon is in contact with the first surface of the test sample fixed on the table. An auxiliary plate is fixed on the glass plate using double-sided adhesive tape. The auxiliary plate is configured such that a hook or nylon thread connected to a weight can be attached thereto.

With the abrasive piece pressed against the first surface of the test sample from above in the vertical direction using a 500-g weight, the abrasive piece is moved in the horizontal direction. The direction of movement of the abrasive chip is the direction along the long sides of the sample. The speed of movement of the abrasive piece with the attached weight is 10 cm/minute. The stroke of the abrasive piece is 10 cm. During a one-stroke movement of the abrasive piece, the dynamic frictional force in the horizontal direction acting on the abrasive chip is measured every 0.01 seconds. The value obtained by dividing the average of the measured dynamic frictional force by the load of the weight (500 g) is reported as the dynamic coefficient of friction.

The testing environment is at a temperature of 23°C ± 2°C and a relative humidity of 50% ± 5%. The test sample is placed in the testing environment for 16 hours before the start of the test.

Before the testing of the subject of evaluation is conducted, pretreatment of the abrasive piece is performed by rubbing the abrasive chip against a preparatory sample. A 5 cm × 5 cm abrasive piece fixed on a 5 cm × 5 cm glass plate undergoes the pretreatment. The tester to be used for the testing of the sample under evaluation is also used for the pretreatment of the abrasive piece. The preparatory sample is "One Side Primer Treated type: A4160," manufactured by Toyobo Co., Ltd. The preparatory sample is stretched along a level surface, and the four corners of the surface of the preparatory sample not treated with a primer (the surface on which PET is exposed) are fixed on the tester using mending tape. The abrasive piece is pressed against the preparatory sample from above in the vertical direction. The load for pressing the abrasive piece against the preparatory sample is 600 g. The abrasive piece pressed against the preparatory sample is relatively moved, in relation to the preparatory sample, in the horizontal direction. The relative movements are reciprocating motions. The number of cycles of the reciprocating motions is 150. The speed of the reciprocating motions is 220 mm/second. The stroke in the reciprocating motions is 50 mm in both the forward and backward movements. The abrasive piece pressed against the preparatory sample in such a manner is used for the testing of the subject of evaluation.

One test sample undergoes 20 measurements. The average of the measured dynamic coefficients of friction calculated across the 20 tests is reported as the value of the dynamic coefficient of friction of the subject of evaluation. Throughout the 20 tests on the subject of evaluation, the same abrasive piece is used. The pretreatment of the abrasive piece is performed in each of the 20 tests.

For conditions other than those described above, the dynamic coefficients of friction are measured according to JIS K7125: 1999.

<Relationship between the Average Particle Diameter of the Metal Oxide Particles 45 and the Average Thickness of the Functional Layer 40A>

The average particle diameter of the metal oxide particles 45 may be smaller than the average thickness of the functional layer 40A. The average particle diameter of the metal oxide particles 45 may be smaller than half the average thickness of the functional layer 40A, may be smaller than 1/3 of the average thickness of the functional layer 40A, may be smaller than 1/4 of the average thickness of the functional layer 40A, or may be smaller than 1/5 of the average thickness of the functional layer 40A.

By setting the average particle diameter of the metal oxide particles 45 and the average thickness of the functional layer 40A as specified above, the formation of large projections on the surface of the functional layer 40A by the metal oxide particles 45 can be reduced. It becomes, furthermore, easier for the metal oxide particles 45 to penetrate between adjacent hollow silica particles 43. The adjacent hollow silica particles 43 are connected by the metal oxide particles 45. Through these, the strength and hardness of the functional layer 40A are enhanced by the metal oxide particles 45. The detachment of the hollow silica particles 43, furthermore, is reduced. By adjusting the average particle diameter of the metal oxide particles 45 as specified above, the lubricity of the first surface 11 is improved, and the functional layer 40A is also reinforced, whereby the abrasion resistance of the first surface 11 can be improved.

The ratio of the average particle diameter of the metal oxide particles 45 to the average thickness of the functional layer 40A (the average particle diameter of the metal oxide particles 45/the average thickness of the functional layer 40A) may be 0 or greater and less than 1, may be 0 or greater and less than 0.5, may be 0 or greater and less than 1/3, may be 0 or greater and less than 0.25, or may be 0 or greater and less than 0.2. The ratio of the average particle diameter of the metal oxide particles 45 to the average thickness of the functional layer 40A may be greater than 0 and less than 1, may be greater than 0 and less than 0.5, may be greater than 0 and less than 1/3, may be greater than 0 and less than 0.25, or may be greater than 0 and less than 0.2.

An "average particle diameter" used with respect to particles such as the metal oxide particles 45, the hollow silica particles 43, and solid silica particles 44, which will be described later, is defined as a value identified through the following (1) to (3).

(1) A cross-section of the optical sheet including the particles is observed using a transmission electron microscope (TEM), and an observation image is acquired through imaging.

(2) Any ten particles are extracted from the observation image, and the particle diameter of each particle is measured. When the cross-section of the particle is sandwiched between two parallel straight lines, there exists a combination of two straight lines such that the distance between the two straight lines is maximized. The particle diameter (nm) is defined as the distance between the straight lines in this combination. That is, the particle diameter is the maximum length of the particle in the observation image.

(3) The operations in (1) and (2) above are performed five times for the same optical sheet under measurement, whereby the particle diameters of a total of 50 particles are measured. The average of a total of 50 measured particle diameters is reported as the average particle diameter (nm) of the particles.

Fig. 2 is an example of an observation image of an optical sheet obtained using a scanning transmission electron microscope (STEM), a type of transmission electron microscope. In this observation, the acceleration voltage was set to 10 kv to 30 kV, and the magnification was set to 50,000 times to 300,000 times. The image in Fig. 2 illustrates observation results obtained with the acceleration voltage set to 30 kV and the magnification set to 200,000 times. As illustrated in Fig. 2, particles may aggregate. The particle diameter, however, is identified as the particle diameter (maximum length) of each individual particle. In other words, the particle diameter is the primary particle diameter, and the average particle diameter is the average primary particle diameter.

The "average thickness" of the functional layer 40A is defined as a value identified through the following (4) to (6).

(4) A cross-section of the optical sheet including the functional layer is imaged using a transmission electron microscope (TEM).

(5) In the obtained image, the thickness of the functional layer at the midpoint in the direction along the sheet plane of the optical sheet and the thicknesses of the functional layer at the points 100 nm away from this midpoint on both sides in the direction along the sheet plane of the optical sheet are measured. The thickness is defined as the length (nm) of the functional layer along the direction perpendicular to the sheet plane of the optical sheet.

(6) The operations in (4) and (5) above are performed five times for the same optical sheet under measurement, whereby the thickness of the functional layer is measured at a total of 15 points. The average of a total of 15 measured thicknesses is reported as the average thickness (nm) of the functional layer.

<Relationship between the Average Particle Diameter of the Metal Oxide Particles 45 and the Average Particle Diameter of the Hollow Silica Particles 43>

The average particle diameter (nm) of the metal oxide particles 45 may be smaller than the average particle diameter (nm) of the hollow silica particles 43. The average particle diameter (nm) of the metal oxide particles 45 may be smaller than 1/2 of the average particle diameter (nm) of the hollow silica particles 43, may be smaller than 1/3 of the average particle diameter (nm) of the hollow silica particles 43, may be smaller than 1/4 of the average particle diameter (nm) of the hollow silica particles 43, or may be smaller than 1/5 of the average particle diameter (nm) of the hollow silica particles 43.

By adjusting the average particle diameter of the metal oxide particles 45 and the average particle diameter of the hollow silica particles 43 as specified above, it is ensured that the metal oxide particles 45 can penetrate between the hollow silica particles 43 within the functional layer 40A. As a result of the penetration of the metal oxide particles 45 between the hollow silica particles 43, bonding between the metal oxide particles 45 and the hollow silica particles 43 is encouraged. Crosslinking proceeds within the functional layer 40A, through which the functional layer 40A is further reinforced. The total quantity of particles contained in the functional layer 40A, furthermore, is increased, yet uniform dispersion of particles, including the hollow silica particles 43 and the metal oxide particles 45, within the functional layer 40A can be achieved, and it becomes less likely that projections are formed on the first surface 11. As a result, the lubricity of the first surface 11 is also increased. Through these, the abrasion resistance of the first surface 11 can be further improved.

The ratio of the average particle diameter of the metal oxide particles 45 to the average particle diameter of the hollow silica particles 43 (the average particle diameter of the metal oxide particles 45/the average particle diameter of the hollow silica particles 43) may be 0 or greater and less than 1, may be 0 or greater and less than 0.5, may be 0 or greater and less than 1/3, may be 0 or greater and less than 0.25, or may be 0 or greater and less than 0.2. The ratio of the average particle diameter of the metal oxide particles 45 to the average particle diameter of the hollow silica particles 43 may be greater than 0 and less than 1, may be greater than 0 and less than 0.5, may be greater than 0 and less than 1/3, may be greater than 0 and less than 0.25, or may be greater than 0 and less than 0.2.

When the ratio of the average particle diameter of the metal oxide particles 45 to the average particle diameter of the hollow silica particles 43 is small, aggregation of the metal oxide particles 45 proceeds as illustrated in Fig. 1 and Fig. 2. Mediated by these aggregated metal oxide particles 45, two adjacent hollow silica particles 43 are more firmly connected. Mediated by these aggregated metal oxide particles 45, the hollow silica particles 43 and the binder component 41 are more firmly connected. Through these, the strength and hardness of the functional layer 40A are enhanced, whereby the abrasion resistance of the first surface 11 can be further improved.

The metal oxide particles 45 may include alumina particles 46. Alumina, which is an oxide of aluminum, can become bound to the hollow silica particles 43 and the binder component 41 within the functional layer 40A. Accordingly, crosslinking proceeds within the functional layer 40A, through which the functional layer 40A is further reinforced. The strength and hardness of the functional layer 40A are enhanced, whereby the abrasion resistance of the first surface 11 can be further improved. In addition, alumina has a relatively low refractive index among metal oxide particles. Alumina, therefore, can reduce the refractive index of the functional layer 40A and impart an excellent reflection-reducing function to the functional layer 40A.

The functional layer 40A may contain solid silica particles 44. The solid silica particles 44 can promote crosslinking within the functional layer 40A through hydrogen bonding with the metal oxide particles 45. In general, the particle diameters of solid silica particles 44 are smaller than the particle diameters of hollow silica particles 43. The solid silica particles 44, therefore, can penetrate between adjacent hollow silica particles 43 within the functional layer 40A. Through the inclusion of solid silica particles 44 in the functional layer 40A, the strength and hardness of the functional layer 40A are enhanced, whereby the abrasion resistance of the first surface 11 can be further improved. The refractive index of solid silica particles 44, furthermore, is lower than the refractive indices of most types of metal oxide particles 45. Through the inclusion of solid silica particles 44 in the functional layer 40A along with the metal oxide particles 45, therefore, the refractive index of the functional layer 40A can be reduced. In other words, through the inclusion of solid silica particles 44 in the functional layer 40A along with the metal oxide particles 45, the reflection-reducing function of the functional layer 40A can be enhanced.

<Luminous Reflectance Y>

The optical sheet 10 has a reflection-reducing function that reduces the reflection of light incident on the first surface 11. The luminous reflectance Y on the first surface 11 as measured at an angle of incidence of 5° may be 1.0% or less, may be 0.8% or less, may be 0.7% or less, may be 0.6% or less, or may be 0.5% or less.

The lower limit to the luminous reflectance is not particularly specified. The luminous reflectance Y on the first surface 11 as measured at an angle of incidence of 5° may be 0% or more or may be more than 0%. The luminous reflectance Y on the first surface 11 may be 0% or more and 1.0% or less, may be 0% or more and 0.8% or less, may be 0% or more and 0.7% or less, may be 0% or more and 0.6% or less, or may be 0% or more and 0.5% or less. The luminous reflectance Y on the first surface 11 may be more than 0% and 1.0% or less, may be more than 0% and 0.8% or less, may be more than 0% and 0.7% or less, may be more than 0% and 0.6% or less, or may be more than 0% and 0.5% or less.

The luminous reflectance Y refers to the luminous reflectance Y in the CIE 1931 standard colorimetric system. The luminous reflectance Y is measured using a spectrophotometer as follows.

A sample is cut out from the optical sheet 10 under evaluation. The sample is visually inspected to confirm the absence of dust, flaws, and other abnormalities. To the surface of the sample formed by the second surface of the optical sheet, a black board is attached with an optically transparent adhesive sheet interposed therebetween. The optically transparent adhesive sheet is "PANACLEAN PD-S1," manufactured by Panac Co., Ltd. The black board is "COMOGLAS DFA2CG 502K (black)," manufactured by Kuraray Co., Ltd. The thickness of the black board is 2 mm. The total transmittance of the black board is 1% or less. Through these, evaluation sample A, which includes an optical sheet, an optically transparent adhesive sheet, and a black board, is prepared.

The surface of evaluation sample A formed by the first surface of the optical sheet is irradiated with light at an angle of incidence of 5°. Based on the light specularly reflected from evaluation sample A, the reflectance (luminous reflectance Y) of the evaluation sample is measured. On the basis of specular reflectance measured at 0.5-nm intervals within the range of 300 nm to 780 nm, both inclusive, using supplementary illuminant C and a 2-degree field of view, the luminous reflectance Y (%) is determined. Before the measurement of the luminous reflectance Y of the optical sheet 10, the supplementary illuminant C is left on for 15 minutes to stabilize the output of the supplementary illuminant C. The testing environment during the measurement of the luminous reflectance is at a temperature of 23°C ± 2°C and a relative humidity of 50% ± 5%. The sample is placed in the testing environment for 16 hours before the start of the test.

The other measurement conditions during the measurement of the luminous reflectance shall comply with JIS Z 8722: 2009.

The luminous reflectance is determined as the arithmetical mean of five measured values. The five measured values are measured values measured at five measurement points on the optical sheet under evaluation. The five measurement points are located 10 mm or more apart from one another.

<Total Transmittance>

The total transmittance of the optical sheet 10 may be 50% or more, may be 70% or more, may be 80% or more, or may be 90% or more. The total transmittance of the optical sheet 10 has no specific upper limit.

The total transmittance of the optical sheet 10 may be 100% or less or may be less than 100%. The total transmittance of the optical sheet 10 may be 50% or more and 100% or less, may be 70% or more and 100% or less, may be 80% or more and 100% or less, or may be 90% or more and 100% or less. The total transmittance of the optical sheet 10 may be 50% or more and less than 100%, may be 70% or more and less than 100%, may be 80% or more and less than 100%, or may be 90% or more and less than 100%.

The measurement of the total transmittance (%) is performed using a light source that simulates the spectrum of standard illuminant D65 (referred to as "a D65 light source"). Before the total transmittance of the optical sheet 10 is measured, the D65 light source is left on for 15 minutes to stabilize the output of the D65 light source. The angle of incidence on the sample during the measurement of the total transmittance is 0°. The incident surface for the measurement of the total transmittance is the second surface 12 of the optical sheet 10. The testing environment during the measurement of the total transmittance is at a temperature of 23°C ± 2°C and a relative humidity of 50% ± 5%. The sample is placed in the testing environment for 16 hours before the start of the test. The other measurement conditions during the measurement of the total transmittance shall comply with JIS K7361-1: 1997.

The total transmittance is determined as the arithmetical mean of five measured values. The five measured values are measured values measured at five measurement points on the optical sheet under evaluation. The five measurement points are located 10 mm or more apart from one another.

<Transmission Haze>

The transmission haze of the optical sheet 10 may be 1.0% or less, may be 0.5% or less, or may be 0.2% or less. The transmission haze of the optical sheet 10 has no specific lower limit. The transmission haze of the optical sheet 10 may be 0% or may be more than 0%.

The transmission haze of the optical sheet 10 may be 0% or more and 1.0% or less, may be 0% or more and 0.5% or less, or may be 0% or more and 0.2% or less. The transmission haze of the optical sheet 10 may be more than 0% and 1.0% or less, may be more than 0% and 0.5% or less, or may be more than 0% and 0.2% or less.

The measurement of the transmission haze (%) is performed using a D65 light source. Before the transmission haze of the optical sheet 10 is measured, the D65 light source is left on for 15 minutes to stabilize the output of the D65 light source. The angle of incidence on the sample during the measurement of the transmission haze is 0°. The incident surface for the measurement of the transmission haze is the second surface 12 of the optical sheet 10. The testing environment during the measurement of the transmission haze is at a temperature of 23°C ± 2°C and a relative humidity of 50% ± 5%. The sample is placed in the testing environment for 16 hours before the start of the test. The other measurement conditions during the measurement of the transmission haze shall comply with JIS K7136: 2000.

The transmission haze is determined as the arithmetical mean of five measured values. The five measured values are measured values measured at five measurement points on the optical sheet under evaluation. The five measurement points are located 10 mm or more apart from one another.

As illustrated in Fig. 1, the optical sheet 10 may include a resin layer 30 positioned between the substrate 20 and the functional layer 40A. The resin layer 30 may contain the cured product of a curable resin composition. A resin layer 30 containing the cured product of a curable resin composition has high strength and high hardness. Through the placement and support of the functional layer 40A on the resin layer 30, the abrasion resistance of the first surface 11 can be further improved.

In the following, each layer of the optical sheet 10 illustrated in Fig. 1 will be described in further detail. In the example illustrated in Fig. 1, the substrate 20, the resin layer 30, and the functional layer 40A are stacked in a third direction D3; that is, the third direction D3 is the stacking direction. The substrate 20, the resin layer 30, and the functional layer 40A extend in a first direction D1 and a second direction D2, which are perpendicular to the third direction D3. In the illustrated example, the first direction D1 and the second direction D2 are perpendicular to each other. For the optical sheet 10 illustrated in Fig. 1, the first surface 11 is formed by the functional layer 40A. The second surface 12 is formed by the substrate 20.

In some cases, the optical sheet 10 may further have layers such as an antistatic layer and an antifouling layer, and these layers may be supported by the functional layer 40A to form the first surface 11. These antistatic, antifouling, and other layers are very thin layers. If not, the functional layer 40A cannot effectively exhibit even its reflection-reducing function. Accordingly, even in cases in which layers such as an antistatic layer and an antifouling layer form the first layer 11, the abrasion resistance on the first surface 11 is still influenced by the functional layer 40A. With a functional layer 40A as described above, therefore, the abrasion resistance of the first surface 11 can be significantly improved.

<<Substrate 20>>

The substrate 20 supports the resin layer 30 and the functional layer 40A. The substrate 20 may be transparent. Transparent means that the total transmittance as defined in JIS K7361-1: 1997 is 50% or more. The total transmittance may be 70% or more, may be 80% or more, or may be 90% or more.

The material for the substrate 20 is not particularly limited; the material for the substrate 20 may be a resin or may be glass. Resins are preferred as they are lightweight and easy to manufacture.

The resin used in the substrate 20 may be a polyolefin resin, such as polyethylene or polypropylene. The resin used in the resin layer 30 may be a vinyl resin, such as polyvinyl chloride, polyvinylidene chloride, polyvinyl alcohol, an ethylene-vinyl acetate copolymer, or an ethylene-vinyl alcohol copolymer. The resin used in the substrate 20 may be a polyester resin, such as polyethylene terephthalate, polyethylene naphthalate, or polybutylene terephthalate. The resin used in the substrate 20 may be an acrylic resin, such as polymethyl (meth)acrylate or polyethyl (meth)acrylate. The resin used in the substrate 20 may be a styrene resin, such as polystyrene, may be a polyamide resin, such as nylon 6 or nylon 66, or may be a cellulose resin, such as triacetylcellulose. Examples of resins that can be used in the substrate 20 also include polycarbonate and similar resins, polyimide resins, and cycloolefin resins, which are obtained from cycloolefins, such as norbornene and dicyclopentadiene. The resin layer 30 may contain one such resin alone or may contain two or more such resins.

The thickness of a resin substrate 20 is not particularly limited. For handling reasons, the thickness of a resin substrate 20 may be 10 $\mu$m or more, may be 20 $\mu$m or more, or may be 50 $\mu$m or more. The thickness of a resin substrate 20 may be 500 $\mu$m or less, may be 400 $\mu$m or less, or may be 300 $\mu$m or less. The thickness of a resin substrate 20 may be 500 $\mu$m or more.

In the application of the optical sheet 10 in foldable uses, the substrate 20 may have flexibility. In that case, the thickness of a resin substrate 20 may be 10 $\mu$m or more and 40 $\mu$m or less. When the optical sheet 10 is used after being stacked with glass, the thickness of a resin substrate 20 may be 40 $\mu$m or more and 100 $\mu$m or less for the prevention of the shattering of the glass.

The substrate 20 may include a single layer alone or may include multiple layers. The substrate 20 may include a primer layer, such as an adhesion-promoting layer (an easily adhesive layer).

<<Functional Layer 40A>>

The functional layer 40A contains a binder component 41, hollow silica particles 43, and metal oxide particles 45 other than silica particles. By virtue of containing hollow silica particles 43, the functional layer 40A has a reduced refractive index. The functional layer 40A can have a refractive index lower than the refractive index of the binder component 41. The refractive index of the functional layer 40A may be lower than the refractive index of the substrate 20. The refractive index of the functional layer 40A may be lower than the refractive index of the layer adjacent to the functional layer 40A.

The functional layer 40A can exhibit the function of reducing the reflection of incident light by virtue of its refractive index and thickness. The antireflection function provided by the functional layer 40A is based on interference between rays of light reflected at the surfaces of the functional layer 40A on both sides. To make this reflection-reducing function effective, the refractive index of the functional layer 40A may be intermediate between the refractive indices of the two regions adjacent to the functional layer 40A on both sides. The thickness (nm) of the functional layer 40A, furthermore, may be approximately 1/4 of the wavelength $\lambda$ (nm) of the light whose reflection is to be reduced.

From the viewpoint of the reflection-reducing function, the refractive index of the functional layer and the average thickness of the functional layer can be set as follows.

The refractive index of the functional layer may be 1.10 or greater and 1.48 or less, may be 1.20 or greater and 1.48 or less, may be 1.26 or greater and 1.48 or less, may be 1.28 or greater and 1.48 or less, or may be 1.30 or greater and 1.48 or less. The refractive index of the functional layer may be 1.10 or greater and 1.45 or less, may be 1.20 or greater and 1.45 or less, may be 1.26 or greater and 1.45 or less, may be 1.28 or greater and 1.45 or less, or may be 1.30 or greater and 1.45 or less. The refractive index of the functional layer may be 1.10 or greater and 1.40 or less, may be 1.20 or greater and 1.40 or less, may be 1.26 or greater and 1.40 or less, may be 1.28 or greater and 1.40 or less, or may be 1.30 or greater and 1.40 or less. The refractive index of the functional layer may be 1.10 or greater and 1.38 or less, may be 1.20 or greater and 1.38 or less, may be 1.26 or greater and 1.38 or less, may be 1.28 or greater and 1.38 or less, or may be 1.30 or greater and 1.38 or less. The refractive index of the functional layer may be 1.10 or greater and 1.35 or less, may be 1.20 or greater and 1.35 or less, may be 1.26 or greater and 1.35 or less, may be 1.28 or greater and 1.35 or less, or may be 1.30 or greater and 1.35 or less. The refractive indices used with respect to structural elements constituting the optical sheet are refractive indices for a wavelength of 589.3 nm.

The thickness of the functional layer may be 80 nm or more and 150 nm or less, may be 85 nm or more and 150 nm or less, or may be 90 nm or more and 150 nm or less. The thickness of the functional layer may be 80 nm or more and 110 nm or less, may be 85 nm or more and 110 nm or less, or may be 90 nm or more and 110 nm or less. The thickness of the functional layer may be 80 nm or more and 105 nm or less, may be 85 nm or more and 105 nm or less, or may be 90 nm or more and 105 nm or less.

<Binder Component 41>

The binder component 41 is an element that holds the hollow silica particles 43. The binder component 41 may function as a binding agent for the formation of a coating. The binder component 41 may hold the particles contained in the functional layer 40A to allow the functional layer 40A to maintain its film form. The binder component 41 may contain a resin. The resin contained in the binder component 41 may be a natural resin or may be a synthetic resin. The binder component 41 may cover the particles contained in the functional layer 40A. The binder component 41 may completely encapsulate each particle contained in the functional layer 40A or may leave at least a subset of the particles contained in the functional layer 40A partially exposed.

The binder component 41 may contain the cured product of at least one curable resin composition. The curable resin composition may include one or more of thermosetting resin compositions and ionizing radiation-curable resin compositions. The cured product of a curable resin composition can impart high strength and high hardness to the functional layer 40A and improve the abrasion resistance of the first surface 11. Ionizing radiation-curable resin compositions are particularly advantageous from the viewpoint of the improvement of abrasion resistance.

A thermosetting resin composition contains a thermosetting resin. A thermosetting resin composition cures upon heating. Examples of thermosetting resins include acrylic resins, urethane resins, phenolic resins, urea-melamine resins, epoxy resins, unsaturated polyester resins, and silicone resins. A thermosetting resin composition may contain a curing agent.

An ionizing radiation-curable resin composition contains an ionizing radiation-curable compound. An ionizing radiation-curable compound contains an ionizing radiation-curable functional group. Examples of ionizing radiation-curable functional groups include ethylenically unsaturated linking groups, such as a (meth)acryloyl group, a vinyl group, and an allyl group, and an epoxy group and an oxetanyl group. An ionizing radiation-curable compound may contain two or more ionizing radiation-curable functional groups. An ionizing radiation-curable compound may be a compound having an ethylenically unsaturated linking group. An ionizing radiation-curable compound may be a (meth)acrylate compound, which has a (meth)acryloyl group. An ionizing radiation-curable compound may be a siloxane compound, which contains a siloxane linkage.

Hereinafter, a (meth)acrylate compound containing four or more ethylenically unsaturated linking groups is referred to as a "polyfunctional (meth)acrylate compound." A (meth)acrylate compound having two or three ethylenically unsaturated linking groups is referred to as a "low-functionality (meth)acrylate compound."

The (meth)acrylate compound may be a monomer or may be an oligomer. With ionizing radiation-curable compounds including a low-functionality (meth)acrylate compound, unevenness in shrinkage during curing can be reduced, and the surface of the functional layer 40A can be smoothened.

The percentage of the low-functionality (meth)acrylate compound in the ionizing radiation-curable compounds may be 60% by mass or more, may be 80% by mass or more, may be 90% by mass or more, may be 95% by mass or more, or may be 100% by mass. For the smoothening of irregularities on the surface of the functional layer 40A by reducing unevenness in shrinkage during curing, the low-functionality (meth)acrylate compound may be a (meth)acrylate compound containing two ethylenically unsaturated linking groups. When ionizing radiation-curable compounds include a large amount of polyfunctional (meth)acrylate compound, the surface of the functional layer can be smoothened by, as described later, appropriately adjusting the type of solvent and drying conditions.

Among (meth)acrylate compounds, examples of bifunctional (meth)acrylate compounds include isocyanuric acid di(meth)acrylate, ethylene glycol di(meth)acrylate, polyalkylene glycol di(meth)acrylates, such as polyethylene glycol diacrylate and polybutylene glycol di(meth)acrylate, bisphenol A tetraethoxydiacrylate, bisphenol A tetrapropoxydiacrylate, and 1,6-hexanediol diacrylate. Examples of trifunctional (meth)acrylate compounds include trimethylolpropane tri(meth)acrylate, pentaerythritol tri(meth)acrylate, and isocyanuric acid-modified tri(meth)acrylate. Examples of tetrafunctional and higher-functionality polyfunctional (meth)acrylate compounds include pentaerythritol tetra(meth)acrylate, dipentaerythritol hexa(meth)acrylate, and dipentaerythritol tetra(meth)acrylate. The (meth)acrylate compound may be, as described later, a modified one.

Examples of (meth)acrylate oligomers include acrylate polymers, such as urethane (meth)acrylate, epoxy (meth)acrylate, polyester (meth)acrylate, and polyether (meth)acrylate. Urethane (meth)acrylate is obtained through, for example, the reaction of a polyhydric alcohol and an organic diisocyanate with a hydroxy(meth)acrylate. Epoxy (meth)acrylate may be a (meth)acrylate obtained by allowing a trifunctional or higher-functionality aromatic epoxy resin, alicyclic epoxy resin, or aliphatic epoxy resin, for example, and (meth)acrylic acid to react. Epoxy (meth)acrylate may be a (meth)acrylate obtained by allowing a bifunctional or higher-functionality aromatic epoxy resin, alicyclic epoxy resin, or aliphatic epoxy resin, for example, a polybasic acid, and (meth)acrylic acid to react. Epoxy (meth)acrylate may be a (meth)acrylate obtained by allowing a bifunctional or higher-functionality aromatic epoxy resin, alicyclic epoxy resin, or aliphatic epoxy resin, for example, a phenolic compound, and (meth)acrylic acid to react.

The (meth)acrylate compound may have part of its molecular backbone modified for the reduction of unevenness in shrinkage caused by crosslinking. The (meth)acrylate compound may be modified with, for example, ethylene oxide, propylene oxide, caprolactone, isocyanuric acid, an alkyl, a cyclic alkyl, an aromatic, or bisphenol. The (meth)acrylate compound may be modified with an alkylene oxide, such as ethylene oxide or propylene oxide. The percentage of the alkylene oxide-modified (meth)acrylate compound in the ionizing radiation-curable compounds may be 60% by mass or more, may be 80% by mass or more, may be 90% by mass or more, may be 95% by mass or more, or may be 100% by mass. The alkylene oxide-modified (meth)acrylate compound may be a low-functionality (meth)acrylate compound or may be a (meth)acrylate compound having two ethylenically unsaturated linking groups.

Examples of alkylene oxide-modified (meth)acrylate compounds having two ethylenically unsaturated linking groups include bisphenol F alkylene oxide-modified di(meth)acrylates, bisphenol A alkylene oxide-modified di(meth)acrylates, isocyanuric acid alkylene oxide-modified di(meth)acrylates, and polyalkylene glycol di(meth)acrylates. The average number of alkylene glycol repeating units contained in a polyalkylene glycol di(meth)acrylate may be from three to five. The alkylene glycols contained in a polyalkylene glycol di(meth)acrylate may be ethylene glycol and/or polyethylene glycol. Examples of alkylene oxide-modified (meth)acrylate compounds having three ethylenically unsaturated linking groups include trimethylolpropane alkylene oxide-modified tri(meth)acrylates and isocyanuric acid alkylene oxide-modified tri(meth)acrylates.

Examples of siloxane compounds include (poly)dimethylsiloxane, (poly)diethylsiloxane, (poly)diphenylsiloxane, (poly)methylphenylsiloxane, alkyl-modified (poly)dimethylsiloxanes, azo-containing (poly)dimethylsiloxanes, dimethyl silicone, phenylmethyl silicone, alkyl-aralkyl-modified silicones, fluorosilicones, polyether-modified silicones, aliphatic acid ester-modified silicones, methyl hydrogen silicone, silanol-containing silicones, alkoxy-containing silicones, phenol-containing silicones, methacrylic-modified silicones, acrylic-modified silicones, amino-modified silicones, carboxylic acid-modified silicones, carbinol-modified silicones, epoxy-modified silicones, mercapto-modified silicones, fluorine-modified silicones, and polyether-modified silicones.

One ionizing radiation-curable compound may be used alone, or two or more ionizing radiation-curable compounds may be used in combination.

When the ionizing radiation-curable compound is an ultraviolet-curable compound, the curable resin composition forming the binder component 41 may contain additives such as a photoinitiator and a photoaccelerator. An example of a photoinitiator is one or more selected from compounds such as acetophenone, benzophenone, $\alpha$-hydroxyalkylphenones, Michler's ketone, benzoin, benzyl dimethyl ketal, benzoyl benzoate, $\alpha$-acyl oxime esters, $\alpha$-aminoalkylphenones, and thioxanthones. The photoaccelerator accelerates the curing rate by mitigating the inhibition of polymerization by air during curing. An example of a photoaccelerator is one or more selected from compounds such as isoamyl p-dimethylaminobenzoate and ethyl p-dimethylaminobenzoate.

<Particles (hollow silica particles 43, solid silica particles 44, and metal oxide particles 45)>

In addition to the binder component 41, the functional layer 40A contains hollow silica particles 43 and metal oxide particles 45 other than silica particles. The functional layer 40A may contain other particles. Examples of additional particles include inorganic particles, such as magnesium fluoride particles, and organic particles.

The functional layer 40A contains hollow silica particles 43 as silica particles. The hollow silica particles 43 have a shell layer formed of silica. For the hollow silica particles 43, the interior of the particles enclosed by shell layer is a cavity. Air may be contained inside the cavity. By virtue of containing an internal cavity, the hollow silica particles 43 have a refractive index lower than the refractive index of silica. The refractive index of the hollow silica particles 43 decreases with increasing volume of the internal cavity. The hollow silica particles 43 reduce the overall refractive index of the functional layer 40A. By using hollow silica particles 43 with an increased proportion of internal space and a larger particle diameter, the refractive index of the functional layer 40A can be further reduced.

The hollow silica particles 43 may be uniformly dispersed within the functional layer 40A. Through uniform dispersion of the hollow silica particles 43 within the functional layer 40A, the first surface 11 is smoothened, whereby arithmetical mean roughness Sa of the first surface 11 can be reduced. As a result of this, the lubricity of the first surface 11 is improved, and the abrasion resistance of the first surface 11 is enhanced. By taking measures such as reducing variations in particle diameter among the hollow silica particles 43, adjusting the average particle diameter of the hollow silica particles 43 relative to the average film thickness of the binder component 41, adjusting the compatibility between the hollow silica particles 43 and the binder component 41, adjusting the ratio between the amounts of the hollow silica particles 43 and the other particles and the ratio between their average particle diameters, and adjusting the compatibility between the hollow silica particles 43 and the other particles, the hollow silica particles 43 can be uniformly dispersed within the functional layer 40A.

As illustrated in Fig. 1, the functional layer 40A may contain solid silica particles 44 in addition to the hollow silica particles 43. The solid silica particles 44 are nonhollow silica particles. The solid silica particles 44 are particles having no internal cavity. The solid silica particles 44 may be silica particles that are solid. By being dispersed in the binder component 41, the solid silica particles play the role of improving the abrasion resistance of the functional layer 40A.

The solid silica particles 44 may be uniformly dispersed within the functional layer 40A together with the hollow silica particles 43. Through uniform dispersion of the solid silica particles 44 within the functional layer 40A together with the hollow silica particles 43, the first surface 11 is smoothened, whereby the arithmetical mean roughness Sa of the first surface 11 can be reduced. As a result of this, the lubricity of the first surface 11 is improved, and the abrasion resistance of the first surface 11 is enhanced. By taking measures such as adjusting the ratio between the amounts of the solid silica particles 44 and the other particles and the ratio between their average particle diameters and adjusting the compatibility between the solid silica particles 44 and the other particles, the solid silica particles 44 can be uniformly dispersed within the functional layer 40A together with the hollow silica particles 43. In the example illustrated in Fig. 2, the hollow silica particles 43 and the solid silica particles 44 are uniformly dispersed within the functional layer 40A.

The functional layer 40A contains metal oxide particles 45 other than silica particles. As mentioned above, the metal oxide particles 45 other than silica particles enhance the strength and hardness of the functional layer 40A, thereby improving the abrasion resistance of the first surface 11. An example of metal oxide particles 45 is an oxide of any of titanium, tantalum, zirconium, chromium, niobium, cerium, hafnium, or yttrium or a mixture of such oxides.

The metal oxide particles 45 may include alumina particles 46. Alumina particles 46 have a relatively low refractive index among metal oxides. Alumina is a type of aluminum oxide represented by $Al_2O_3$, and its known forms include $\alpha$-form, $\gamma$-form, $\sigma$-form, and their mixtures. The alumina particles 46 may be modified alumina particles, which have a modified surface. Examples of modified alumina particles include (meth)acrylic-modified alumina particles and silicone-modified alumina particles. The metal oxide particles 45 may be hollow particles, which have an internal space, or may be solid particles, which have no internal space.

The shape of the particles dispersed within the functional layer 40A, such as the hollow silica particles 43, the solid silica particles 44, and the metal oxide particles 45, is not particularly limited. The shape of the particles dispersed within the functional layer 40A, such as the hollow silica particles 43, the solid silica particles 44, and the metal oxide particles 45, may be perfectly spherical, spheroidal, substantially spherical, such as a polygonal shape that can be approximated to a sphere, rod-like, sheet-like, fibrous, or indefinite. By making the shape of the particles dispersed within the functional layer 40A, such as the hollow silica particles 43, the solid silica particles 44, or the metal oxide particles 45, perfectly spherical, spheroidal, or substantially spherical, the lubricity of the first surface 11 is improved, and the abrasion resistance of the first surface 11 is enhanced.

The particles dispersed within the functional layer 40A, such as the hollow silica particles 43, the solid silica particles 44, and the metal oxide particles 45, may have a surface coated with a silane coupling agent. The silane coupling agent may contain a (meth)acryloyl group or an epoxy group. By applying a surface treatment with a silane coupling agent to the particles, the compatibility between the particles and the binder component is improved, and the likelihood of particle aggregation is reduced. As a result of this, the particles are more uniformly dispersed within the binder component.

Examples of silane coupling agents include 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, tris-(trimethoxysilylpropyl) isocyanurate, 3-mercaptopropylmethyldimethoxysilane, 3-mercaptopropyltrimethoxysilane, 3-isocyanatopropyltriethoxysilane, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, trifluoropropyltrimethoxysilane, vinyltrimethoxysilane, and vinyltriethoxysilane. In particular, the silane coupling agent may be one or more selected from 3-methacryloxypropylmethyldimethoxysilane, 3-methacryloxypropyltrimethoxysilane, 3-methacryloxypropylmethyldiethoxysilane, and 3-methacryloxypropyltriethoxysilane.

As illustrated in Fig. 2, the particles contained in the functional layer 40A, such as the hollow silica particles 43 and the solid silica particles 44, may be present at a high concentration within the functional layer 40A and uniformly dispersed within the functional layer 40A. With such a configuration, as mentioned above, the first surface 11 is smoothened, and the dynamic coefficient of friction of the first surface 11 is also reduced, whereby the abrasion resistance of the first surface 11 can be improved. As illustrated in Fig. 1 and Fig. 2, hollow silica particles 43 having a large average particle diameter are dispersed at a high density within the functional layer 40A. The metal oxide particles 45 and the solid silica particles 44 are dispersed within the functional layer 40A such that they fill the gaps between the hollow silica particles 43. Within the functional layer 40A, the metal oxide particles 45 and the solid silica particles 44 are positioned in proximity to the hollow silica particles 43.

In the example illustrated in Fig. 2, hollow silica particles 43 having a larger average particle diameter are densely dispersed at a high density within the functional layer 40A, and solid silica particles 44 and metal oxide particles 45 having a smaller average particle diameter are packed within the functional layer 40A in such a manner as to fill the gaps between the hollow silica particles 43. In this example, the functional layer 40A has high hardness, and, at the same time, the surface of the functional layer 40A is smooth. As a result of this, the arithmetical mean roughness Sa on the first surface 11 and the dynamic coefficient of friction on the first surface 11 are reduced, and the abrasion resistance of the first surface 11 can be improved.

The average particle diameter of the hollow silica particles 43 may be greater than the average particle diameters of the solid silica particles 44 and the metal oxide particles 45. The average particle diameter of the hollow silica particles 43 may be 50 nm or more or may be 65 nm or more. The average particle diameter of the hollow silica particles 43 may be 100 nm or less or may be 80 nm or less.

The average particle diameter of the solid silica particles 44 may be 5 nm or more or may be 10 nm or more. The average particle diameter of the solid silica particles 44 may be 20 nm or less or may be 15 nm or less. The average particle diameter of the metal oxide particles 45 and the average particle diameter of the alumina particles 46 may be 5 nm or more or may be 10 nm or more. The average particle diameter of the metal oxide particles 45 and the average particle diameter of the alumina particles 46 may be 20 nm or less or may be 15 nm or less.

By setting lower limits to the average particle diameters of the solid silica particles 44 and the metal oxide particles 45, it can be ensured that these particles can contribute to reinforcing the strength and hardness of the functional layer 40A. By setting an upper limit to the average particle diameter of the hollow silica particles 43, it can ensured that the binder component 41 can stably hold the hollow silica particles 43. In other words, the detachment of the hollow silica particles 43 from the functional layer 40A can be reduced, whereby abrasion resistance can be improved. By setting upper limits to the average particle diameters of the solid silica particles 44 and the metal oxide particles 45 and setting a lower limit for the hollow silica particles 43, the solid silica particles 44 and the metal oxide particles 45 can be positioned in proximity to hollow silica particles 43 having a large average particle diameter. In other words, the particles can be uniformly dispersed at a high concentration within the functional layer 40A. Through these, consistently excellent abrasion resistance can be imparted to the functional layer 40A and the optical sheet 10.

As mentioned above, the average particle diameter (nm) of the metal oxide particles 45 may be smaller than 1/2 of the average particle diameter (nm) of the hollow silica particles 43, may be smaller than 1/3 of the average particle diameter (nm) of the hollow silica particles 43, may be smaller than 1/4 of the average particle diameter (nm) of the hollow silica particles 43, or may be smaller than 1/5 of the average particle diameter (nm) of the hollow silica particles 43. By setting the average particle diameter of the metal oxide particles 45 and the average particle diameter of the hollow silica particles 43 in such a manner, the particles 43 and 45 can be uniformly dispersed at a high concentration within the functional layer 40A. Through this, consistently excellent abrasion resistance can be imparted to the functional layer 40A and the optical sheet 10.

As the amount of the hollow silica particles 43 increases, the refractive index of the functional layer 40A decreases, allowing the functional layer 40A to exhibit an excellent reflection-reducing function. A lower limit, therefore, may be set on the amount of the hollow silica particles 43 from the viewpoint of the reflection-reducing function of the functional layer 40A. By setting a lower limit on the amounts of the particles other than the hollow silica particles 43, the smoothness, strength, and hardness of the functional layer 40A can be ensured. By setting a lower limit on the amount of the binder component 41, it can be ensured that the binder component 41 stably holds the particles. Through these, the detachment of the particles can be reduced, whereby excellent abrasion resistance can be ensured. By setting an upper limit on the amount of the binder component 41, it can be ensured that the refractive index of the functional layer 40A decreases, allowing the functional layer 40A to exhibit an excellent reflection-reducing function. By setting an upper limit on the amount of each group of particles, significant aggregation of the particles can be reduced.

The amount of the hollow silica particles may be 100 parts by mass or more and 300 parts by mass or less, may be 150 parts by mass or more and 300 parts by mass or less, or may be 175 parts by mass or more and 300 parts by mass or less, per 100 parts by mass of the binder component. The amount of the hollow silica particles may be 100 parts by mass or more and 250 parts by mass or less, may be 150 parts by mass or more and 250 parts by mass or less, or may be 175 parts by mass or more and 250 parts by mass or less, per 100 parts by mass of the binder component.

The amounts of the metal oxide particles and the alumina particles may be 10 parts by mass or more and 200 parts by mass or less, may be 50 parts by mass or more and 200 parts by mass or less, may be 70 parts by mass or more and 200 parts by mass or less, or may be 100 parts by mass or more and 200 parts by mass or less, per 100 parts by mass of the binder component. The amounts of the metal oxide particles and the alumina particles may be 10 parts by mass or more and 150 parts by mass or less, may be 50 parts by mass or more and 150 parts by mass or less, may be 70 parts by mass or more and 150 parts by mass or less, or may be 100 parts by mass or more and 150 parts by mass or less, per 100 parts by mass of the binder component. The amounts of the metal oxide particles and the alumina particles may be 10 parts by mass or more and 100 parts by mass or less, may be 50 parts by mass or more and 100 parts by mass or less, or may be 70 parts by mass or more and 100 parts by mass or less, per 100 parts by mass of the binder component.

The amounts of the metal oxide particles and the alumina particles may be 30 parts by mass or more and 80 parts by mass or less, may be 35 parts by mass or more and 80 parts by mass or less, or may be 40 parts by mass or more and 80 parts by mass or less, per 100 parts by mass of the hollow silica particles. The amounts of the metal oxide particles and the alumina particles may be 30 parts by mass or more and 75 parts by mass or less, may be 35 parts by mass or more and 75 parts by mass or less, or may be 40 parts by mass or more and 75 parts by mass or less, per 100 parts by mass of the hollow silica particles. The amounts of the metal oxide particles and the alumina particles may be 30 parts by mass or more and 70 parts by mass or less, may be 35 parts by mass or more and 70 parts by mass or less, or may be 40 parts by mass or more and 70 parts by mass or less, per 100 parts by mass of the hollow silica particles.

The amount of the solid silica particles may be 10 parts by mass or more and 200 parts by mass or less, may be 50 parts by mass or more and 200 parts by mass or less, may be 70 parts by mass or more and 200 parts by mass or less, or may be 100 parts by mass or more and 200 parts by mass or less, per 100 parts by mass of the binder component. The amount of the solid silica particles may be 10 parts by mass or more and 150 parts by mass or less, may be 50 parts by mass or more and 150 parts by mass or less, may be 70 parts by mass or more and 150 parts by mass or less, or may be 100 parts by mass or more and 150 parts by mass or less, per 100 parts by mass of the binder component. The amount of the solid silica particles may be 10 parts by mass or more and 100 parts by mass or less, may be 50 parts by mass or more and 100 parts by mass or less, or may be 70 parts by mass or more and 100 parts by mass or less, per 100 parts by mass of the binder component.

The amount of the solid silica particles may be 30 parts by mass or more and 80 parts by mass or less, may be 35 parts by mass or more and 80 parts by mass or less, may be 40 parts by mass or more and 80 parts by mass or less, per 100 parts by mass of the hollow silica particles. The amount of the solid silica particles may be 30 parts by mass or more and 75 parts by mass or less, may be 35 parts by mass or more and 75 parts by mass or less, or may be 40 parts by mass or more and 75 parts by mass or less, per 100 parts by mass of the hollow silica particles. The amount of the solid silica particles may be 30 parts by mass or more and 70 parts by mass or less, may be 35 parts by mass or more and 70 parts by mass or less, may be 40 parts by mass or more and 70 parts by mass or less, per 100 parts by mass of the hollow silica particles.

<Functional Layer 40A Production Method>

The functional layer 40A may be produced using a coating solution containing a curable resin composition and the particles. Curing treatment of a coating of the coating solution may yield the functional layer 40A. In that case, the functional layer coating solution, which is for producing the functional layer 40A, may contain additives, such as an antistatic agent, an antioxidant, a surfactant, a dispersant, and an ultraviolet absorber. The functional layer coating solution may contain a silicone leveling agent (a silicone compound) as an additive. Through the inclusion of a silicone leveling agent in the functional layer coating solution, the surface of the functional layer 40A can be further smoothened. With a silicone leveling agent, excellent lubricity and excellent antifouling properties (ease of wiping off finger prints and large angles of contact with purified water and hexadecane) can be imparted to the surface of the functional layer 40A.

<<Resin Layer 30 (hard-coat layer)>>

The optical sheet 10 may include a resin layer 30 between the substrate 20 and the functional layer 40A. The resin layer 30 contains the cured product of at least one curable resin composition. The curable resin composition may include one or more of thermosetting resin compositions and ionizing radiation-curable resin compositions. The curable resin composition may contain one or more of thermosetting resins and ionizing radiation-curable compounds. The resin layer 30 may be a hard-coat layer. The resin layer 30 can impart high strength and high hardness to the optical sheet 10 and the first surface 11 and improve the abrasion resistance of the first surface 11. The curable resin composition used for the formation of the resin layer 30 may be identical to the curable resin composition for forming the functional layer 40A. The resin layer 30 may be composed of the resin identical to the resin constituting the binder component 41 of the functional layer 40A.

The thickness of the resin layer 30 may be 0.1 μm or more and 100 μm or less, may be 0.5 μm or more and 100 μm or less, or may be 1 μm or more and 100 μm or less. The thickness of the resin layer 30 may be 0.1 μm or more and 20 μm or less, may be 0.5 μm or more and 20 μm or less, or may be 1 μm or more and 20 μm or less. The thickness of the resin layer 30 may be 0.1 μm or more and 10 μm or less, may be 0.5 μm or more and 10 μm or less, or may be 1 μm or more and 10 μm or less. By setting the thickness of the resin layer 30 in such a manner, the development of cracks during the processing, such as cutting, of the optical sheet 10 can be reduced while ensuring excellent abrasion resistance.

The refractive index of the resin layer 30 may be lower than the refractive index of the functional layer 40A for the reflection-reducing function provided by the functional layer 40A. The refractive index of the resin layer 30 may be set to 1.45 or greater and 1.70 or less.

When the optical sheet 10 includes a high-refractive-index layer as described later, the refractive index of the resin layer 30 may be lower than the refractive index of the high-refractive-index layer. In that case, the refractive index of the resin layer 30 may be 1.50 or greater and 1.65 or less, may be 1.55 or greater and 1.65 or less, may be 1.50 or greater and 1.60 or less, or may be 1.55 or greater and 1.60 or less. By setting the refractive index of the resin layer 30 in such a manner, it can be ensured that the resin layer 30 functions as a medium-refractive-index layer. An interference effect among the three layers of the resin layer 30 as a medium-refractive-index layer, the high-refractive-index layer, and the functional layer 40A as a low-refractive-index layer is made possible, whereby reflectance can be further reduced. The refractive index of the resin layer 30 can be adjusted by the resin and particles contained in the curable resin composition.

The refractive indices are values identified through the fitting of a reflection spectrum measured using a reflection photometer to a reflection spectrum calculated from an optical model of a multilayer thin film using Fresnel coefficients.

The resin layer 30 may be produced using a coating solution containing the curable resin composition. Curing treatment of a coating of the coating solution may yield the resin layer 30. In that case, the resin layer coating solution, which is for producing the resin layer 30, may contain additives that can be used in the functional layer coating solution. That is, the resin layer coating solution may contain a photoinitiator and a photoaccelerator. The resin layer coating solution may contain a leveling agent.

<<Second Functional Layer 50 (high-refractive-index layer)>>

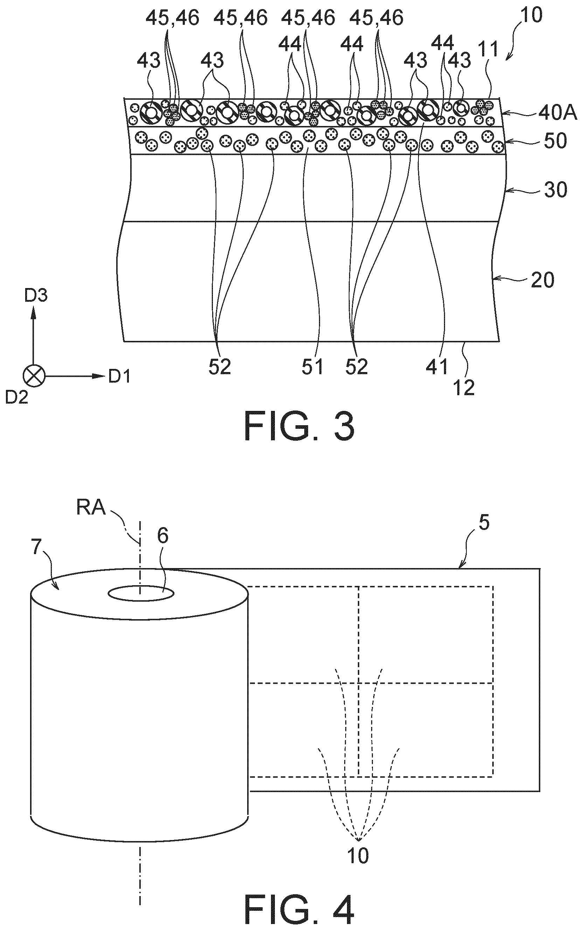

As illustrated in Fig. 3, the optical sheet 10 may further include a second functional layer 50. The second functional layer 50 is positioned between the functional layer 40A and the resin layer 30 in the stacking direction or the third direction D3. As described immediately above, the second functional layer 50 is configured as a layer having a higher refractive index than the resin layer 30 and the functional layer 40A and fortifies the reflection-reducing function of the optical sheet 10.

From the viewpoint of the reflection-reducing function, the refractive index of the second functional layer and the average thickness of the functional layer can be set as follows. The refractive index of the second functional layer may be 1.55 or greater and 1.85 or less, may be 1.56 or greater and 1.85 or less, may be 1.55 or greater and 1.75 or less, or may be 1.56 or greater and 1.75 or less. The thickness of the second functional layer may be 50 nm or more and 200 nm or less or may be 50 nm or more and 180 nm or less.

As illustrated in Fig. 3, the second functional layer 50 may contain a binder component 51 and particles 52. The binder component 51 is an element that holds the particles 52. The binder component 51 may function as a binding agent for the formation of a coating. The binder component 51 may hold the particles contained in the second functional layer 50 to allow the second functional layer 50 to maintain its film form. The binder component 51 may contain a resin. The binder component 51 can be configured identically to the binder component 41 in the functional layer 40A.

The particles 52 are particles for adjusting the refractive index and may have an average particle diameter on the order of nanometers. Similarly to the functional layer 40A, the second functional layer 50 can be produced using at least one curable resin composition. The curable resin composition may include one or more of thermosetting resin compositions and ionizing radiation-curable resin compositions. The curable resin composition may contain one or more of thermosetting resins and ionizing radiation-curable compounds. The thermosetting resin(s) and ionizing radiation-curable compound(s) used for the formation of the second functional layer 50 may be identical to the thermosetting resin(s) and ionizing radiation-curable compound(s) used for the formation of the functional layer 40A.

The particles 52 may be particles having a refractive index higher than the refractive index of the binder component 51. Examples of particles 52 include antimony pentoxide, zinc oxide, titanium oxide, cerium oxide, tin-doped indium oxide, antimony-doped tin oxide, yttrium oxide, and zirconium oxide. Zirconium oxide, antimony pentoxide, and titanium oxide can impart high strength and high hardness to the second functional layer 50 and contribute to improving the abrasion resistance of the first surface 11.

The average particle diameter of the particles 52 may be 5 nm or more and 200 nm or less, may be 10 nm or more and 200 nm or less, may be 5 nm or more and 100 nm or less, may be 10 nm or more and 100 nm or less, may be 5 nm or more and 80 nm or less, or may be 10 nm or more and 80 nm or less.

The amount of the particles 52 can be set from the viewpoints of increasing the refractive index of the second functional layer 50 and of the strength of the second functional layer 50. The amount of the particles 52 may be 100 parts by mass or more and 2500 parts by mass or less, may be 300 parts by mass or more and 2500 parts by mass or less, or may be 500 parts by mass or more and 2500 parts by mass or less, per 100 parts by mass of the binder component 51. The amount of the particles 52 may be 100 parts by mass or more and 2200 parts by mass or less, may be 300 parts by mass or more and 2200 parts by mass or less, or may be 500 parts by mass or more and 2200 parts by mass or less, per 100 parts by mass of the binder component 51. The amount of the particles 52 may be 100 parts by mass or more and 2000 parts by mass or less, may be 300 parts by mass or more and 2000 parts by mass or less, or may be 500 parts by mass or more and 2000 parts by mass or less, per 100 parts by mass of the binder component 51.

The second functional layer 50 may be produced using a coating solution containing a curable resin composition and the particles 52. Curing treatment of a coating of the coating solution may yield the second functional layer 50. In that case, the second functional layer coating solution, which is for producing the second functional layer 50, may contain additives that can be used in the functional layer coating solution. That is, the second functional layer coating solution may contain a photoinitiator and a photoaccelerator. The second functional layer coating solution may contain additives such as an antistatic agent, an antioxidant, a surfactant, a dispersant, an ultraviolet absorber, and a leveling agent.

<<Optical Sheet Manufacturing Method>>

The resin layer 30, the functional layer 40A, and the second functional layer 50 included in the optical sheet 10 can be produced by the wet process, in which coating solutions containing the components constituting the respective layers 30, 40A, and 50 are applied onto the substrate 20, dried, and cured. The coating solutions may contain a solvent in addition to the resin compositions and particles used for the formation of the respective layers. The resin compositions may contain solid components constituting the respective layers and additives, such as a polymerization initiator.

An optical sheet 10 including a substrate 20 and a functional layer 40A can be produced as follows. First, a functional layer coating solution, which is for forming the functional layer 40A, is prepared. Then the functional layer coating solution is applied onto a substrate 20 to form a coating. After that, the coating is dried, and then the coating is cured.

Through these, a functional layer 40A is produced on the substrate 20, yielding the optical sheet 10.

When the optical sheet 10 includes a resin layer 30 in addition to the functional layer 40A, the resin layer 30 is produced on the substrate 20 before the production of the functional layer 40A. Applying a resin layer coating solution, which is for forming the resin layer 30, onto the substrate 20 and drying and curing the coating gives the resin layer 30. Producing the functional layer 40A on the resin layer 30 thereafter yields the optical sheet 10. It should be noted that the resin layer 30 may be produced in an uncured or semi-cured state on the substrate 20, and the resin layer 30 may be completely cured together with the functional layer 40A during the curing of the functional layer 40A.

When the optical sheet 10 includes a second functional layer 50 in addition to the resin layer 30 and the functional layer 40A, the second functional layer 50 is produced on the resin layer 30 after the production of the resin layer 30 and before the production of the functional layer 40A. Applying a second functional layer coating solution, which is for forming the second functional layer 50, onto the resin layer 30 and drying and curing the coating gives the second functional layer 50. Producing the functional layer 40A on the second functional layer 50 thereafter yields the optical sheet 10. It should be noted that one or more of the resin layer 30 and the second functional layer 50 may be produced in an uncured or semi-cured state, and the one or more of the resin layer 30 and the second functional layer 50 may be completely cured together with the functional layer 40A during the curing of the functional layer 40A.

By incorporating a solvent in the coating solutions, the viscosity of the coating solutions can be adjusted, and the individual components can be dissolved or dispersed within the coating solutions. The solvent may be, for example, one or more types of solvents such as ketones (e.g., acetone, methyl ethyl ketone, methyl isobutyl ketone, and cyclohexanone), ethers (e.g., dioxane and tetrahydrofuran), aliphatic hydrocarbons (e.g., hexane), alicyclic hydrocarbons (e.g., cyclohexane), aromatic hydrocarbons (e.g., toluene and xylene), carbon halides (e.g., dichloromethane and dichloroethane), esters (e.g., methyl acetate, ethyl acetate, and butyl acetate), alcohols (e.g., butanol and cyclohexanol), cellosolves (e.g., methyl cellosolve and ethyl cellosolve), cellosolve acetates, sulfoxides (e.g., dimethylsulfoxide), glycol ethers (e.g., 1-methoxy-2-propyl acetate), and amides (e.g., dimethylformamide and dimethylacetamide).

When the volatilization of the solvent is too rapid, the solvent actively circulates by convection during the drying of the coating solution. The particles contained in the coating solution, such as the hollow silica particles 43, the solid silica particles 44, the metal oxide particles 45, or the particles 52, can become unevenly distributed due to convection caused by the volatilization of the solvent during the drying of the coating solution. In other words, the particles within the coating are not uniformly dispersed. For this reason, the coating solutions may contain a solvent having a slow evaporation rate. The relative evaporation rate of a solvent contained in a coating solution may be 70 or less or may be 30 or greater and 60 or less. The relative evaporation rate is the evaporation rate of the solvent of interest expressed as a comparison to the evaporation rate of n-butyl acetate, with the evaporation rate of n-butyl acetate as 100. As an example, the relative evaporation rate of isobutyl alcohol is 64. The relative evaporation rate of 1-butanol is 47. The relative evaporation rate of 1-methoxy-2-propyl acetate is 44. The relative evaporation rate of ethyl cellosolve is 38. The relative evaporation rate of cyclohexanone is 32.

The solvent having a relative evaporation rate of 70 or less may constitute 10% by mass or more and 50% by mass or less or may constitute 20% by mass or more and 40% by mass or less of all solvents. In that case, a solvent superior in resin solubility may be contained in the coating solution as a solvent other than the solvent having a relative evaporation rate of 70 or less. The relative evaporation rate of the solvent superior in resin solubility may be 100 or greater.

From the viewpoint of reducing solvent circulation by convection during the drying of the coating solutions, the drying temperatures during the drying of the coating solutions may be lowered. In particular, the drying temperature during the drying of the functional layer coating solution may be lowered. The drying temperatures can be set as appropriate in view of factors such as the types of solvents, the dispersibility of the particles, and the production speed.

By adjusting the types and proportions of solvents and the drying conditions for coatings as described above, uniform dispersion of the particles, such as the hollow silica particles 43 and solid silica particles 44, within the functional layer 40A can be achieved.

Examples of means for curing the coatings for forming the respective layers include irradiation with ionizing radiation, such as ultraviolet radiation or an electron beam, and heating. Curing treatment through irradiation with ionizing radiation is superior in productivity because it allows the coatings to be cured in a short time.

With this optical sheet 10 manufacturing method using the wet process, a long sheet article 5 including a large number of optical sheets 10 as illustrated in Fig. 4 can be manufactured. Cutting the long sheet article 5 into a predetermined size yields optical sheets 10. In this case, optical sheets 10 having various dimensions can be obtained from the long sheet article 5 to meet the needs. Optical sheets 10 having various dimensions, therefore, can be provided on an as-needed basis. As illustrated in Fig. 4, by handling the sheet article 5 as a scroll 7 rolled around a roll core with a roll axis RA as the center, the handling of the sheet article 5 can be improved.

The optical sheet manufacturing method may further include a step of selecting a manufactured optical sheet 10 in addition to the above-described step of manufacturing an optical sheet. The step of selecting an optical sheet 10 may further include a step of measuring the arithmetical mean roughness Sa on the first surface 11 of manufactured optical sheets 10 and a step of selecting an optical sheet for which the arithmetical mean roughness Sa is equal to or smaller than a predetermined value. In this context, the predetermined value may be 5.2 nm, may be 4.2 nm, or may be 3.5 nm. An optical sheet in which the functional layer 40A contains hollow silica particles 43 and metal oxide particles 45 and for which the arithmetical mean roughness Sa on the first surface 11 is, for example, 5.2 nm or less has excellent abrasion resistance. Through this selection step, optical sheets having excellent abrasion resistance can be selected with high precision without performing abrasion tests using felt or steel wool.

The selection step may include a step of confirming that the functional layer 40A contains metal oxide particles 45 and a step of confirming that the functional layer 40A contains alumina particles 46. The presence of metal oxide particles 45 or alumina particles 46 in the functional layer 40A can be confirmed by energy dispersive x-ray spectroscopy, also called EDX. By EDX, the particles under measurement can be determined in an image of a vertical section of the optical sheet acquired using a scanning transmission microscope (an image of a cross-section along the third direction, as illustrated in Fig. 2), and elements detected in these particles and their amounts can be identified. Based on the detected elements and their amounts, the presence of metal oxide particles 45 or alumina particles 46 in the functional layer 40A can be confirmed.

<<<Polarizing Plate 60>>>

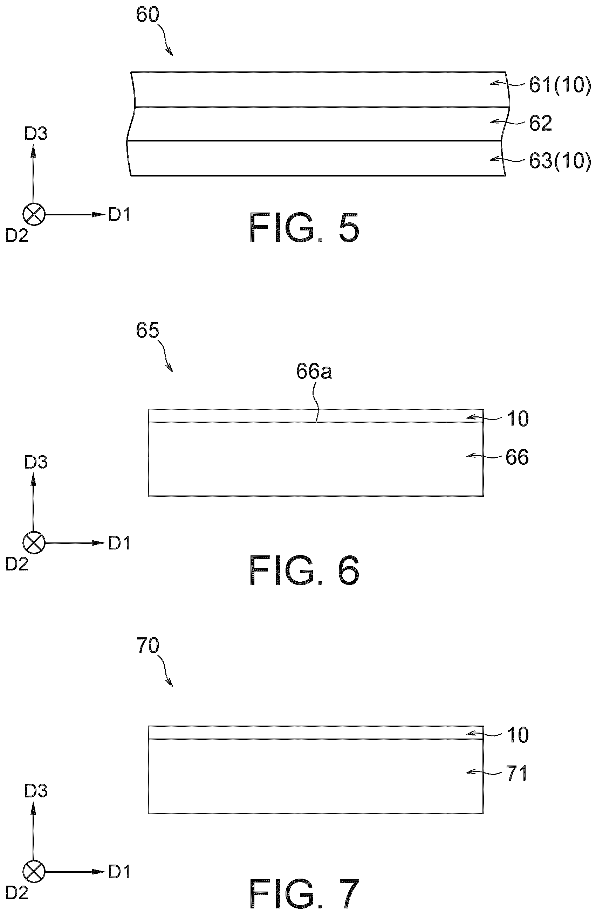

The optical sheet 10 according to the first embodiment and the optical sheet 10 according to the second embodiment, which will be described later, may be applied to a polarizing plate 60. In the example illustrated in Fig. 5, the polarizing plate 60 includes a first protection sheet 61, a polarizer 62, and a second protection sheet 63. The first protection sheet 61 and the second protection sheet 63 sandwich the polarizer 62 therebetween, covering it from both sides. At least one of the first protection sheet 61 or the second protection sheet 63 may include the optical sheet 10. When only one of the first protection sheet 61 or the second protection sheet 63 includes the optical sheet 10, the other protection sheet may include the substrate 20.

The polarizer 62 transmits a first linear polarization component (one linear polarization component) and blocks a second linear polarization component (the other linear polarization component). The polarizer 62 may be an absorptive polarizer, which absorbs the second linear polarization component. The polarizer 62 may be a reflective polarizer, which reflects the second linear polarization component. The polarizer 62 may be a sheet polarizer, such as a polyvinyl alcohol film, polyvinyl formal film, polyvinyl acetal film, or ethylene-vinyl acetate copolymer saponified film that has been dyed, for example with iodine, and stretched. The polarizer 62 may be a wire-grid polarizer, which is composed of a large number of metal wires arranged in parallel. The polarizer 62 may be a coated polarizer to which a lyotropic liquid crystal or a dichroic guest-host material has been applied, or may be a multilayer thin-film polarizer.

<<<Image Display Device 65>>>

The optical sheet 10 according to the first embodiment and the optical sheet 10 according to the second embodiment, which will be described later, may be applied to a display device 65. In the example illustrated in Fig. 6, the display device 65 includes an image formation unit 66 and the optical sheet 10. The image formation unit 66 has a display surface 66a, on which it displays images. The optical sheet 10 is overlaid on the image formation unit 66 such that its second surface 12 faces the display surface 66a. The optical sheet 10 may be bonded to the image formation unit 66 with a bonding layer that includes, for example, a permanent adhesive material or a temporary adhesive material interposed therebetween. The observer can clearly observe images displayed by the image formation unit 66 through the optical sheet 10, with reflection on the first surface 11 of the optical sheet 10 reduced. The image formation unit 66 is not particularly limited. Examples of image formation units 66 include a liquid-crystal display element, an EL display element, a plasma display element, and an electronic paper element.

<<<Panel 70>>>

The optical sheet 10 according to the first embodiment and the optical sheet 10 according to the second embodiment, which will be described later, are applicable to various uses. Fig. 7 illustrates a panel 70 to which an optical sheet 10 is applied. The panel 70 includes the optical sheet 10 and a bonding target article 71 to which the optical sheet 10 has been bonded. By virtue of the optical sheet 10, the panel 70 constitutes a reflection-reducing article, which has a function of reducing reflection. The optical sheet 10 is overlaid on the bonding target article 71 such that its second surface 12 faces the bonding target article 71. The optical sheet 10 may be bonded to the bonding target article 71 with a bonding layer that includes, for example, a permanent adhesive material or a temporary adhesive material interposed therebetween. Examples of bonding target articles 71 include an instrument panel, a timepiece, a display case, a display window, and window glazing.

**FIRST EXAMPLES**

The first embodiment will be described in further detail with examples. The first embodiment is not limited by the examples below.

1. Measurements and Evaluations

Measurements and evaluations of optical sheets of Examples and Comparative Examples were conducted as described below. The atmosphere during each measurement and evaluation was at a temperature of 23°C $\pm$ 5°C and a relative humidity of 50% $\pm$ 5%. Before the start of each measurement and evaluation, the sample of interest was exposed to the above atmosphere for 30 minutes or more. Then the measurement and evaluation of the sample of interest were performed.

1-1. Luminous Reflectance Y

A 5 cm $\times$ 5 cm sample was cut from the optical sheets of the Examples and Comparative Examples. The samples were visually inspected to confirm the absence of dust, flaws, and other abnormalities. Using the method described above, the luminous reflectance Y (%) of the optical sheet according to each example or comparative example was measured. The measurement of luminous reflectance Y was performed using "V780" UV-visible/NIR spectrophotometer, manufactured by JASCO Corporation. The measurement results are presented in the "Y value" section of Table 1.

1-2. Total Transmittance and Transmission Haze

A 10 cm $\times$ 5 cm sample was cut from the optical sheets of the Examples and Comparative Examples. The samples were visually inspected to confirm the absence of dust, flaws, and other abnormalities. Using the methods described above, the total transmittance (%) and transmission haze (%) of the optical sheet according to each example or comparative example were measured. "HM-150" haze meter, manufactured by Murakami Color Research Laboratory Co., Ltd., was used for the measurement of total transmittance and transmission haze. The measurement results for total transmittance (%) are presented in the "Tt" section of Table 1. The measurement results for transmission haze (%) are presented in the "Hz" section of Table 1.

1-3. Arithmetical Mean Roughness Sa

A 5 cm $\times$ 5 cm sample was cut from the optical sheets of the Examples and Comparative Examples. The samples were visually inspected to confirm the absence of dust, flaws, and other abnormalities. For each of the Examples and Comparative Examples, a sample to be measured was prepared. Using an atomic force microscope, the profile of the surface of each sample formed by the first surface of the optical sheet was measured. The atomic force microscope used was "SPM-9700," manufactured by Shimadzu Corporation. The measurement of the surface profile of the samples was performed using "SPM Manager," the software provided with the atomic force microscope, in its On-Line (measurement) mode. The measurement conditions were as follows.

(AFM Measurement Conditions)

- Measurement mode: Phase

- Scanning size: 5 $\mu$m $\times$ 5 $\mu$m

- Scanning rate: 2.0 to 2.5 Hz (a 10-$\mu$m scanner was used)

- Number of pixels: 512 $\times$ 512

- Cantilever used: NCHR, manufactured by NanoWorld AG (resonant frequency, 320 kHz; spring constant, 42 N/m)

Using the Off-Line (analysis) mode of "SPM Manager," a tilt correction treatment was performed using the line fitting function, and the surface profile of each sample was obtained as a grayscale image. In the grayscale image, points at a height of 0 nm were displayed in black, and colors closer to white were used as the height increased. The lowest points within the scope of measurement were defined as the points at a height of 0 nm. The resulting grayscale image was analyzed to determine the three-dimensional arithmetical mean roughness Sa for each sample. For each of the Examples and Comparative Examples, the average of measured values at five points on the prepared sample was reported as the arithmetical mean roughness Sa in that example or comparative example. The measurement results are presented in the "Sa" section of Table 1.

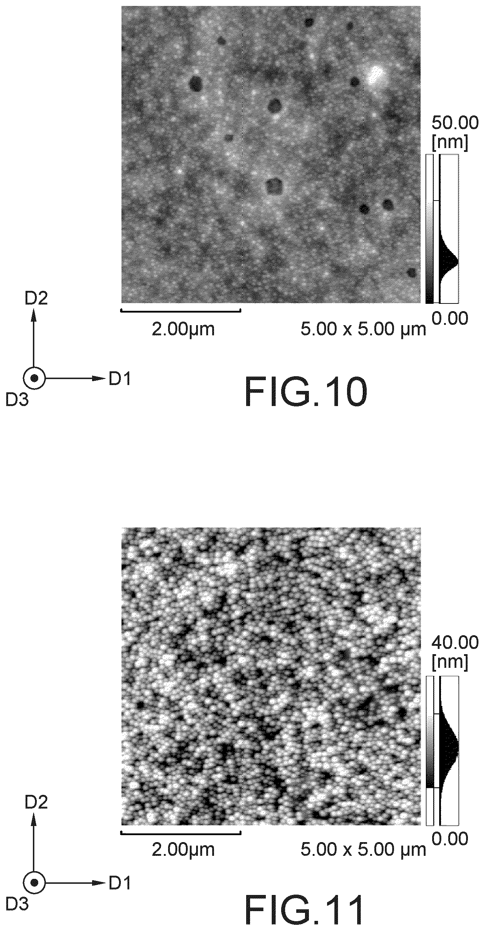

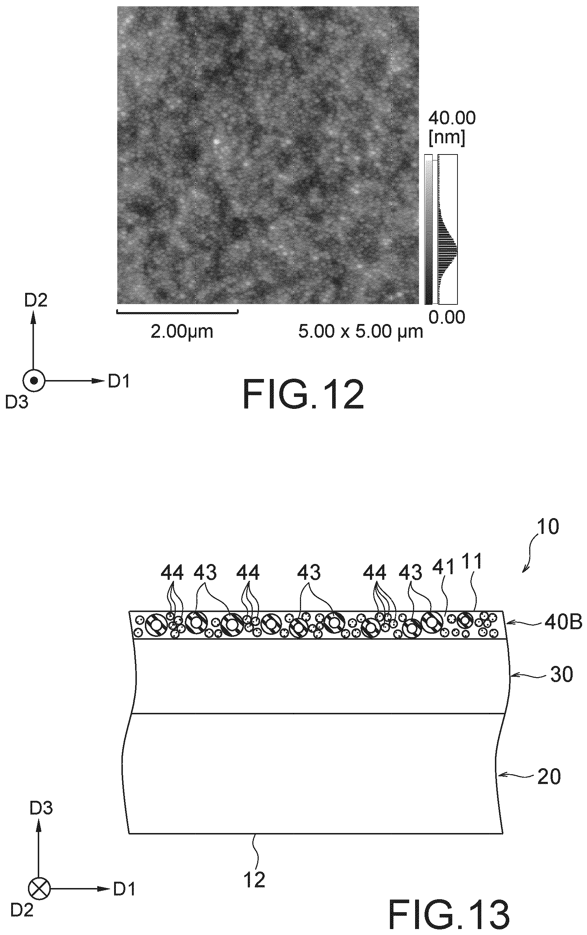

Fig. 8 is a grayscale image illustrating the first surface 11 of the optical sheet 10 according to Example 1, which will be described later. Fig. 9 is a grayscale image illustrating the first surface 11 of the optical sheet 10 according to Example 2, which will be described later. Fig. 10 is a grayscale image illustrating the first surface 11 of the optical sheet 10 according to Example 3, which will be described later. Fig. 11 is a grayscale image illustrating the first surface 11 of the optical sheet 10 according to Comparative Example 1, which will be described later. Fig. 12 is a grayscale image illustrating the first surface 11 of the optical sheet 10 according to Comparative Example 2, which will be described later.

1-4. Dynamic Coefficient of Friction against Steel Wool

A 15 cm × 25 cm sample was cut from the optical sheets of the Examples and Comparative Examples. The samples were visually inspected to confirm the absence of dust, flaws, and other abnormalities. Using the method described above, the dynamic coefficient of friction against steel wool of the optical sheet according to each example or comparative example was measured. The measurement of the dynamic coefficients of friction was performed using an apparatus that combined "EZ-LX" compact tabletop taster, manufactured by Shimadzu Corporation, with a friction coefficient measuring instrument as a friction test jig available from Shimadzu Corporation. The measurement results are presented in the "SW-resistant" section under "Dynamic coefficients of friction" in Table 1.

1-5. Dynamic Coefficient of Friction against Felt

A 15 cm × 25 cm sample was cut from the optical sheets of the Examples and Comparative Examples. The samples were visually inspected to confirm the absence of dust, flaws, and other abnormalities. Using the method described above, the dynamic coefficient of friction against felt of the optical sheet according to each example or comparative example was measured. The measurement of the dynamic coefficients of friction was performed using an apparatus that combined "EZ-LX" compact tabletop taster, manufactured by Shimadzu Corporation, with a friction coefficient measuring instrument as a friction test jig available from Shimadzu Corporation. The measurement results are presented in the "Felt-resistant" section under "Dynamic coefficients of friction" in Table 1.

1-6. Steel Wool Abrasion Resistance

A 5 cm × 10 cm sample was cut from the optical sheets of the Examples and Comparative Examples. The samples were visually inspected to confirm the absence of dust, flaws, and other abnormalities. Using the method described above, a steel wool abrasion resistance test was performed on the optical sheet according to each example or comparative example. The steel wool abrasion resistance test was performed using "AB-301-S" colorfastness rubbing tester, manufactured by Tester Sangyo Co., Ltd.

The sample that completed a 1000-cycle steel wool abrasion resistance test under a load of 1000 g was removed from the tester, and the surface of the sample formed by the first surface of the optical sheet was observed under the observation conditions specified above. Based on the observation results, each sample was evaluated according to the criteria below. The evaluation result for each of the Examples and Comparative Examples is presented in the "Resistance to SW" section under "Evaluation results" in Table 1. The evaluation of five samples was performed for each example or comparative example, and the worst evaluation result in that example or comparative example is presented in Table 1.

AA: No surface flaws were observed on the surface.

A: A faint, flaw-like pattern was observed on the surface, but the severity of the pattern was acceptable for use as a product.

B: Flaws were observed on the surface.

In the above criteria, "AA" has the highest abrasion resistance. In "AA" and "A," no defect is present that poses a problem in application to display devices. "AA" and "A" are assessed as having resistance to the steel wool abrasion resistance test. In "B," a defect is present that poses a problem in application to display devices. "B" is assessed as lacking resistance to the steel wool abrasion resistance test. It should be noted that the test conditions of "a load of 1000 g and 1000 cycles" in the steel wool abrasion resistance test are conditions more severe than the conditions that antireflection sheets (AR sheets or LR sheets) attached to the display surface of display devices are typically required to withstand.

1-7. Felt Abrasion Resistance

A 50 mm × 100 mm sample was cut from the optical sheets according to the Examples and Comparative Examples. The samples were visually inspected to confirm the absence of dust, flaws, and other abnormalities. Using the method described above, a felt abrasion resistance test was performed on the optical sheet according to each example or comparative example. The felt abrasion resistance test was performed using "AB-301-S" colorfastness rubbing tester, manufactured by Tester Sangyo Co., Ltd.

The sample that completed a 10000-cycle abrasion resistance test against felt under a load of 200 g was removed from the tester, and the surface of the sample formed by the first surface of the optical sheet was observed under the observation conditions specified above. Based on the observation results, the sample in each example or comparative example was graded as one of "AA," "A," or "B" in the same manner as in the evaluation criteria in the abrasion resistance test against steel wool. The evaluation result for each of the Examples and Comparative Examples is presented in the "Resistance to felt" section under "Evaluation results" in Table 1. The evaluation of five samples was performed for each example or comparative example, and the worst evaluation result in that example or comparative example is presented in Table 1.

2. Fabrication of Optical Sheets

[COMPARATIVE EXAMPLE 1]

Onto an 80-$\mu$m thick triacetylcellulose substrate, resin layer coating solution 1 (HC layer coating solution 1), having the formula specified below, was applied. Then the coating was dried at 70°C × 1 minute to volatilize the solvents. Subsequently, the coating was irradiated with ultraviolet radiation at an integrated intensity of 100 mJ/cm$^2$, whereby a resin layer (a hard-coat layer) having a dry thickness of 10 $\mu$m was produced.

Thereafter, second functional layer coating solution 1 (high-refractive-index layer coating solution 1), having the formula specified below, was applied onto the resin layer, and then the coating was dried at 70°C × 1 minute to volatilize the solvents. Subsequently, the coating was irradiated with ultraviolet radiation at an integrated intensity of 100 mJ/cm$^2$, whereby a second functional layer (a high-refractive-index layer) having a dry thickness of 150 nm was formed.

After that, functional layer coating solution 1 (low-refractive-index layer coating solution 1), having the formula specified below, was applied onto the second functional layer. Then the coating was dried at 50°C × 30 seconds (drying air velocity, 0.5 m/s) and then further dried at 50°C × 30 seconds (drying air velocity, 5 m/s) to volatilize the solvents. Subsequently, the coating was irradiated with ultraviolet radiation at an integrated intensity of 200 mJ/cm$^2$, whereby a functional layer (a low-refractive-index layer) having a dry thickness of 100 nm was formed. In this manner, an optical sheet of Example 1 was obtained.

<Resin Layer Coating Solution 1 (hard-coat layer coating solution 1)>

- Ultraviolet-curable acrylate-containing composition, 100 parts by mass
  (manufactured by Toagosei Co., Ltd.; trade name "ARONIX M-450"; solids content, 100%)

- Ultraviolet-curable acrylate-containing composition, 77 parts by mass
  (manufactured by DKS Co., Ltd.; trade name "NEW FRONTIER R-1403MB"; solids content, 80%)

- Fluorine leveling agent, 5 parts by mass
  (DIC Corporation; trade name "MEGAFACE F-568")

- Photoinitiator, 5 parts by mass
  (IGM Resins B.V.; trade name "Omnirad 184")

- Methyl isobutyl ketone, 68 parts by mass

- Methyl ethyl ketone, 200 parts by mass

<Second Functional Layer Coating Solution 1 (high-refractive-index layer coating solution 1)>

- PETA, 100 parts by mass
  (manufactured by Toagosei Co., Ltd.; trade name "ARONIX M-305"; solids content, 100%)
- High-refractive-index particles, 300 parts by mass
  (Nippon Shokubai Co., Ltd.; trade name "ZIRCOSTAR"; solids content, 70%)
- Fluorine leveling agent, 0.7 parts by mass
  (DIC Corporation; trade name "MEGAFACE F251"; solids content, 100%)
- Photoinitiator, 9 parts by mass
  (trade name "Omnirad 127," manufactured by IGM Resins B.V.; solids content, 100%)
- Methyl isobutyl ketone, 3173 parts by mass
- Propylene glycol monomethyl ether, 3173 parts by mass

<Functional Layer Coating Solution 1 (low-refractive-index layer coating solution 1)>

- Polyfunctional acrylate composition, 100 parts by mass
  (manufactured by DKS Co., Ltd.; trade name "NEW FRONTIER MF-001")
- Hollow silica particles, 200 parts by mass
  (average particle diameter, 75 nm; particles having a surface treated with a silane coupling agent having a methacryloyl group)
- Solid silica particles, 110 parts by mass
  (average particle diameter, 12.5 nm; particles having a surface treated with a silane coupling agent having a methacryloyl group)
- Silicone leveling agent, 13 parts by mass
  (Shin-Etsu Chemical Co., Ltd.; trade name "X-22-164E"; solids content, 100%)
- Photoinitiator, 4.3 parts by mass
  (IGM Resins B.V.; trade name "Omnirad 127")
- Solvents, 14,867 parts by mass
  (A solvent mixture of methyl isobutyl ketone and 1-methoxy-2-propyl acetate. Ratio by mass = 68/32)

[EXAMPLE 1]

Resin layer coating solution 2 (HC layer coating solution 2), having the formula specified below, was applied onto a substrate. The applied coating was dried and cured, whereby a resin layer (a hard-coat layer) having a dry thickness of 10 μm was produced. The substrate used in Example 1 was identical to the substrate used in Comparative Example 1 above. The resin layer in Example 1 was produced using a method and conditions that were different from those in Comparative Example 1 above in that the resin layer coating solution was changed and were otherwise identical to those in Comparative Example 1.

Thereafter, functional layer coating solution 2 (low-refractive-index layer coating solution 2), having the formula specified below, was applied onto the resin layer. The applied coating was dried and cured, whereby a functional layer (a low-refractive-index layer) having a dry thickness of 100 nm was formed. In this manner, an optical sheet of Example 1 was obtained. The optical sheet of Example 1, therefore, included no second functional layer, unlike the optical sheet of Comparative Example 1. The functional layer in Example 1 was produced using a method and conditions that were different from those in Comparative Example 1 above in that the functional layer coating solution was changed and were otherwise identical to those in Comparative Example 1.

<Resin Layer Coating Solution 2 (hard-coat layer coating solution 2)>

- Ultraviolet-curable acrylate-containing composition, 100 parts by mass
  (manufactured by Toagosei Co., Ltd.; trade name "ARONIX M-450"; solids content, 100%)
- Solid silica particles, 109 parts by mass
  (average particle diameter, 12.5 nm; particles having a surface treated with a silane coupling agent having a

- methacryloyl group; solids content, 46%)
- Silicone leveling agent, 2 parts by mass
  (manufactured by Dainichiseika Color & Chemicals Mfg. Co., Ltd.; trade name "10-301"; solids content, 5%)
- Photoinitiator, 4 parts by mass
  (IGM Resins B.V.; trade name "Omnirad 184"; solids content, 100%)
- Methyl isobutyl ketone, 69 parts by mass
- Methyl ethyl ketone, 297 parts by mass
- Propylene glycol monomethyl ether, 33 parts by mass

<Functional Layer Coating Solution 2 (low-refractive-index layer coating solution 2)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1111 parts by mass
  (average particle diameter, 65 nm; particles having a surface treated with a silane coupling agent having a methacryloyl group; solids content, 20%)
- Solid silica particles, 36 parts by mass
  (average particle diameter, 9.0 nm; particles having a surface treated with a silane coupling agent having a methacryloyl group; solids content, 50%)
- Alumina particles, 60 parts by mass
  (average particle diameter, 15.0 nm; particles having a surface treated with a silane coupling agent having a methacryloyl group; solids content, 30%)
- Leveling agent, 201 parts by mass
  (Shin-Etsu Chemical Co., Ltd.; trade name "X-71-1203M"; solids content, 20%)
- Photoinitiator, 6 parts by mass
  (IGM Resins B.V.; trade name "Omnirad 127"; solids content, 100%)
- Methyl isobutyl ketone, 15263 parts by mass
- Propylene glycol monomethyl ether acetate, 1819 parts by mass

[EXAMPLE 2]

In Example 2, an optical sheet of Example 2 was obtained using materials and a method that were different from those in Example 1 above in that functional layer coating solution 2 was changed to functional layer coating solution 3, specified below, and were otherwise the same as in Example 1.

<Functional Layer Coating Solution 3 (low-refractive-index layer coating solution 3)>

- Ultraviolet-curable siloxane compound-containing composition, 100 parts by mass
  (manufactured by Toagosei Co., Ltd.; trade name "AS-SQ TA-100"; solids content, 100%)

- Ultraviolet-curable acrylate-containing composition, 43 parts by mass
  (manufactured by Toagosei Co., Ltd.; trade name "ARONIX M-305"; solids content, 100%)

- Hollow silica particles, 1111 parts by mass
  (average particle diameter, 65 nm; particles having a surface treated with a silane coupling agent having a methacryloyl group; solids content, 20%)

- Solid silica particles, 36 parts by mass
  (average particle diameter, 9.0 nm; particles having a surface treated with a silane coupling agent having a methacryloyl group; solids content, 50%)

- Alumina particles, 60 parts by mass

(average particle diameter, 15.0 nm; particles having a surface treated with a silane coupling agent having a methacryloyl group; solids content, 30%)

- Leveling agent, 201 parts by mass
  (Shin-Etsu Chemical Co., Ltd.; trade name "X-71-1203M"; solids content, 20%)

- Leveling agent, 54 parts by mass
  (Arakawa Chemical Industries, Ltd.; trade name "OPSTAR TU2225"; solids content, 15%)

- Photoinitiator, 6 parts by mass
  (IGM Resins B.V.; trade name "Omnirad 127"; solids content, 100%)

- Methyl isobutyl ketone, 15511 parts by mass

- Propylene glycol monomethyl ether acetate, 1851 parts by mass

[EXAMPLE 3]

In Example 3, an optical sheet of Example 3 was obtained using materials and a method that were different from those in Example 1 above in that functional layer coating solution 2 was changed to functional layer coating solution 4, specified below, and were otherwise the same as in Example 1.

<Functional Layer Coating Solution 4 (low-refractive-index layer coating solution 4)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1143 parts by mass
  (average particle diameter, 65 nm; particles having a surface treated with a silane coupling agent having a methacryloyl group; solids content, 20%)
- Solid silica particles, 50 parts by mass
  (average particle diameter, 9.0 nm; particles having a surface treated with a silane coupling agent having a methacryloyl group; solids content, 50%)
- Alumina particles, 83 parts by mass
  (average particle diameter, 15.0 nm; particles having a surface treated with a silane coupling agent having a methacryloyl group; solids content, 30%)
- Leveling agent, 633 parts by mass
  (Shin-Etsu Chemical Co., Ltd.; trade name "X-71-1203M"; solids content, 20%)
- Leveling agent, 113 parts by mass
  (Arakawa Chemical Industries, Ltd.; trade name "OPSTAR TU2225"; solids content, 15%)
- Photoinitiator, 6 parts by mass
  (IGM Resins B.V.; trade name "Omnirad 127")
- Methyl isobutyl ketone, 19354 parts by mass
- Propylene glycol monomethyl ether acetate, 2320 parts by mass

[COMPARATIVE EXAMPLE 2]

In Comparative Example 2, an optical sheet of Comparative Example 2 was obtained using materials and a method that were different from those in Example 1 above in that functional layer coating solution 2 was changed to functional layer coating solution 5, specified below, and were otherwise the same as in Example 1.

<Functional Layer Coating Solution 5 (low-refractive-index layer coating solution 5)>

- Ultraviolet-curable acrylate-containing composition, 100 parts by mass
  (manufactured by Toagosei Co., Ltd.; trade name "ARONIX M-305"; solids content, 100%)
- Hollow silica particles, 800 parts by mass
  (average particle diameter, 65 nm; particles having a surface treated with a silane coupling agent having a methacryloyl group; solids content, 20%)
- Solid silica particles, 68 parts by mass
  (average particle diameter, 12.5 nm; particles having a surface treated with a silane coupling agent having a methacryloyl group; solids content, 37%)
- Leveling agent, 143 parts by mass
  (Shin-Etsu Chemical Co., Ltd.; trade name "X-71-1203M"; solids content, 20%)
- Photoinitiator, 4 parts by mass
  (IGM Resins B.V.; trade name "Omnirad 127"; solids content, 100%)
- Methyl isobutyl ketone, 9504 parts by mass
- Propylene glycol monomethyl ether acetate, 1144 parts by mass

[Table 1]

| Table 1 Samples and Evaluation Results | | Comparative Example 1 | Comparative Example 2 | Example 1 | Example 2 | Example 3 |
|---|---|---|---|---|---|---|
| Non-silica metal oxide particles | | No | No | Yes | Yes | Yes |
| Y value (%) | | 0.1 | 1.0 | 1.0 | 1.0 | 1.0 |
| Tt (%) | | 95.9 | 95.2 | 95.2 | 95.2 | 95.2 |
| Hz (%) | | 0.3 | 0.3 | 0.3 | 0.3 | 0.3 |
| Sa (nm) | | 8.1 | 3.5 | 5.2 | 4.1 | 3.5 |
| Dynamic coefficients of friction | SW-resistant | 0.33 | 0.27 | 0.18 | 0.19 | 0.16 |
| | Felt-resistant | 0.29 | 0.30 | 0.24 | 0.25 | 0.12 |
| Evaluation results | Resistance to SW | B | B | AA | AA | AA |
| | Resistance to felt | B | B | A | A | AA |

<<<<Second Embodiment>>>>

The second embodiment of the present disclosure will now be described. The second embodiment of the present disclosure includes features relating to the indentation hardness on the first surface of the optical sheet 10 and the composite elastic modulus (reduced elastic modulus) on the first surface of the optical sheet 10. It should be noted that the first embodiment, described above, may include, similarly to the second embodiment, the features relating to the indentation hardness on the first surface of the optical sheet 10 and the composite elastic modulus on the first surface of the optical sheet 10. The first embodiment, described above, may include one or more of the features of the second embodiment, which will be described hereinafter.

In the second embodiment of the present disclosure, the functional layer 40B of the optical sheet 10 may be free of metal oxide particles other than silica particles, unlike that in the first embodiment. In the second embodiment of the present disclosure, the functional layer 40B of the optical sheet 10 may contain, similarly to that in the first embodiment, metal oxide particles other than silica particles. In the second embodiment of the present disclosure, the functional layer 40B of the optical sheet 10 may contain alumina.

In the second embodiment of the present disclosure, the arithmetical mean roughness Sa on the first surface of the optical sheet 10 may be greater than 5.2 nm, unlike that in the first embodiment. In the second embodiment of the present disclosure, the arithmetical mean roughness Sa on the first surface of the optical sheet 10 may fall within the same numerical range as in the first embodiment.

<<<Optical Sheet 10>>>

As illustrated in Fig. 13, an optical sheet 10 according to the second embodiment includes a first surface 11 and a second surface 12. The optical sheet 10 includes a substrate 20 and a functional layer 40B in order from the second surface 12 to the first surface 11. The functional layer 40B contains a binder component 41 and hollow silica particles 43. The refractive index of the functional layer 40B is lower than the refractive index of the binder component 41 by virtue of the inclusion of the hollow silica particles 43. With a functional layer 40B having a low refractive index, the reflection of light incident on the first surface 11 can be reduced.

As already described in the first embodiment, the abrasion resistance of the surface of the functional layer of known optical sheets has not been sufficient.

\<Indentation Hardness $H_{IT}$ and Standard Deviation $\sigma_{Er}$ of Composite Elastic Modulus $E_r$\>

In the second embodiment, measures for improving abrasion resistance are implemented. Specifically, a lower limit is specified for the indentation hardness $H_{IT}$ (GPa) of the first surface 11, and an upper limit is specified for the standard deviation $\sigma_{Er}$ of the composite elastic modulus (reduced elastic modulus) $E_r$ of the first surface 11. The indentation hardness $H_{IT}$ and the composite elastic modulus (reduced elastic modulus) $E_r$ are hardness and an elastic modulus as measured by nanoindentation. Nanoindentation is a method in which hardness and elastic modulus are measured based on a load-displacement curve. In nanoindentation, the load-displacement curve is obtained through the loading and unloading of the subject of evaluation using an indenter. The load-displacement curve indicates the relationship between indentation load and indentation depth. In nanoindentation, the hardness and elastic modulus of microscopic regions can be evaluated.

In the second embodiment, the indentation hardness $H_{IT}$ of the first surface 11 as determined with the press-in depth (the indentation depth) set to 100 nm is 0.45 GPa or more, and the standard deviation $\sigma_{Er}$ of composite elastic modulus $E_r$ at ten different points on the first surface 11 as determined with the press-in depth (the indentation depth) set to 30 nm is 1.1 GPa or less. By satisfying these conditions relating to indentation hardness $H_{IT}$ and the standard deviation $\sigma_{Er}$ of the composite elastic modulus $E_r$, abrasion resistance can be improved.

By ensuring that the indentation hardness of the first surface 11 as determined with the press-in depth set to 100 nm is 0.45 GPa or more, sufficient strength and sufficient hardness are imparted to the first surface 11 and the vicinity of the first surface 11. As a result of this, the abrasion resistance of the first surface 11 is improved.

For the improvement of the abrasion resistance of the first surface 11, the indentation hardness of the first surface 11 as determined with the press-in depth set to 100 nm may be 0.55 GPa or more, may be 0.56 GPa or more, may be 0.57 GPa or more, may be 0.59 GPa or more, or may be 0.60 GPa or more. The upper limit to the indentation hardness of the first surface 11 as determined with the press-in depth set to 100 nm is not particularly specified. The indentation hardness may be, for example, 3.0 GPa or less, may be 2.0 GPa or less, or may be 1.0 GPa or less.

The indentation hardness of the first surface 11 as determined with the press-in depth (the indentation depth) set to 100 nm may be 0.55 GPa or more and 3.0 GPa or less, may be 0.56 GPa or more and 3.0 GPa or less, may be 0.57 GPa or more and 3.0 GPa or less, may be 0.59 GPa or more and 3.0 GPa or less, or may be 0.60 GPa or more and 3.0 GPa or less. The indentation hardness of the first surface 11 as determined with the press-in depth set to 100 nm may be 0.55 GPa or more and 2.0 GPa or less, may be 0.56 GPa or more and 2.0 GPa or less, may be 0.57 GPa or more and 2.0 GPa or less, may be 0.59 GPa or more and 2.0 GPa or less, or may be 0.60 GPa or more and 2.0 GPa or less. The indentation hardness of the first surface 11 as determined with the press-in depth set to 100 nm may be 0.55 GPa or more and 1.0 GPa or less, may be 0.56 GPa or more and 1.0 GPa or less, may be 0.57 GPa or more and 1.0 GPa or less, may be 0.59 GPa or more and 1.0 GPa or less, or may be 0.60 GPa or more and 1.0 GPa or less.

A known measure representing abrasion resistance on the surface of an optical sheet is pencil hardness. Pencil hardness is an indicator of resistance when a hard object comes into contact under stress approximating a point load. When an optical sheet is used over an extended period, however, repeatedly applied small surface loads can cause scratches. Abrasion resistance during prolonged use should be evaluated as steel wool resistance and felt resistance, rather than pencil hardness. In the evaluation of steel wool resistance and felt resistance, steel wool or felt as an abrasive chip is repeatedly rubbed against the subject of evaluation. The thickness of a functional layer that exhibits a reflection-reducing function is small. A thin functional layer can detach from the optical sheet when a surface load is repeatedly applied to it. Abrasion resistance that considers the detachment of the functional layer should take into account not only the hardness of the functional layer 40B but also adhesion between the functional layer 40B and the layer adjacent to the functional layer 40B and the hardness of the layer adjacent to the functional layer 40B.

The indentation hardness is measured using an press-in depth of 100 nm as a measurement condition, rather than using the maximum load as a measurement condition. The functional layer 40B, which possesses a reflection-reducing function, typically has a thickness of approximately 100 nm. In the measurement of indentation hardness, the press-in depth is set to 100 nm. The indentation hardness, therefore, serves as an evaluation measure that includes not only the hardness of the functional layer 40B but also adhesion between the functional layer 40B and the layer adjacent to the functional layer 40B and the hardness of the layer adjacent to the functional layer 40B. With the indentation hardness of the first surface 11 as determined with the press-in depth set to 100 nm, abrasion resistance on the first surface 11 can be evaluated with good accuracy. It is believed that this is the reason why bringing the indentation hardness of the first surface 11 as determined with the press-in depth set to 100 nm into the range specified above can impart sufficient hardness and sufficient strength to the vicinity of the first surface 11 and improve the abrasion resistance of the first surface 11.

It should be noted that the inventors of the present disclosure also investigated the relationship between indentation hardness measured with indentation depths other than 100 nm and abrasion resistance. The outcome of the investigation was that indentation hardness as determined with the press-in depth set to 100 nm demonstrated the strongest correlation with abrasion resistance. The above presumed reason is also consistent with such an investigational outcome.

The indentation hardness $H_{IT}$ is determined as a value measured using "TI-950 TriboIndenter," a measuring instrument manufactured by BRUKER Corporation. As for the indenter tip used for the measurement of the indentation hardness $H_{IT}$, "TI-0039," manufactured by BRUKER Corporation, is employed. This indenter tip is a Berkovich tip, having a three-sided pyramidal shape. The indenter is pressed into the first surface 11 in the direction normal to the optical sheet 10 to apply a load to the optical sheet 10 under evaluation. The rate of indentation of the indenter is 10 mm/second. The indenter is pressed into the optical sheet 10 until the press-in depth reaches 100 nm. With the indenter at a depth of 100 nm from the first surface 11 within the optical sheet 10, the indenter is held for 5 seconds. Thereafter, the indenter is retracted from the optical sheet 10 in the direction normal to the optical sheet 10 to remove the load from the optical sheet 10. The rate of retraction of the indenter is 10 nm/second.

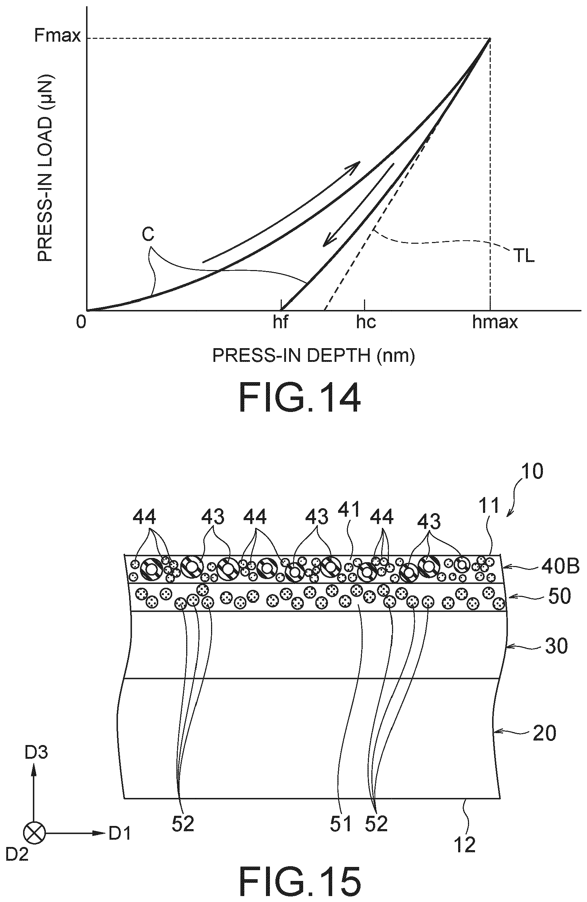

Through these operations of the indenter, a graph relating to the magnitude of the load applied to the first surface 11 via the indenter and the press-in depth of the indenter, or a load-displacement curve C, is obtained. Fig. 14 is an example of a load-displacement curve C obtained in such a manner. Depth hmax in the load-displacement curve C in Fig. 14 is the maximum indentation depth during unloading. The maximum indentation depth hmax is usually the press-in depth measured by the measuring instrument at the start of unloading. Depth hf in the load-displacement curve C in Fig. 14 is the depth of the indentation left in the first surface 11 after the load of the indenter is removed. Depth hf is the press-in depth measured by the measuring device at the end of unloading.

The contact depth hc in the load-displacement curve C in Fig. 14 is calculated according to equation (1) below in a measurement using a Berkovich indenter tip.

$$hc = hmax - 0.75 \times (Fmax/S) \ \ldots (1)$$

"Fmax" in equation (1) is the maximum load after the relaxation of residual stress. The maximum load Fmax is usually the load measured by the measuring instrument at the start of unloading. "S" in equation (1) is referred to as contact stiffness and is the slope of the load-displacement curve C at the start of unloading. In the example illustrated in Fig. 14, the slope of the tangent line TL to the load-displacement curve C at the start of unloading corresponds to the contact stiffness S.

The projected area of contact Ap relating to the indentation created in the surface of the first surface 11 through pressing with the indenter, which corresponds to the tip shape of the indenter, is calculated. The projected area of contact Ap is identified by the standard method for the measuring instrument. The indentation hardness $H_{IT}$ is identified according to equation (2) below as a value obtained by dividing the maximum load Fmax by the projected area of contact Ap.

$$H_{IT} = Fmax/Ap \ \ldots (2)$$

The indentation hardness $H_{IT}$ is determined as the arithmetical mean of ten measured values measured at ten measurement points for the optical sheet under evaluation. The ten measurement points were selected as ten points located along a straight line at a pitch of 10 $\mu$m.

In the second embodiment, an upper limit to the standard deviation $\sigma_{Er}$ of the composite elastic modulus $E_r$ is specified in addition to the lower limit to absolute indentation hardness. Specifically, the standard deviation $\sigma_{Er}$ (GPa) of composite elastic modulus $E_r$ (GPa) at ten different measurement points on the first surface 11 as determined with the press-in depth (the indentation depth) set to 30 nm is 1.1 GPa or less. In other words, the composite elastic modulus $E_r$ is measured at ten measurement points for the optical sheet under evaluation, and the standard deviation $\sigma_{Er}$ of the resulting ten measured composite elastic modulus is 1.1 GPa or less.

By ensuring that the standard deviation $\sigma_{Er}$ of composite elastic modulus $E_r$ at ten different measurement points on the first surface 11 as determined with the press-in depth set to 30 nm is 1.1 GPa or less, the lubricity of the first surface 11 is made sufficiently uniform. The abrasion resistance of the first surface 11, therefore, is improved.

For the improvement of the abrasion resistance of the first surface 11, the standard deviation $\sigma_{Er}$ of composite elastic modulus $E_r$ at ten different measurement points on the first surface 11 as determined with the press-in depth (the indentation depth) set to 30 nm may be 0.90 GPa or less, may be 0.88 GPa or less, may be 0.87 GPa or less, may be 0.78 GPa or less, may be 0.69 GPa or less, may be 0.60 GPa or less, or may be 0.59 GPa or less. This standard deviation $\sigma_{Er}$ of

the composite elastic modulus $E_r$ on the first surface 11 has no specific lower limit. This standard deviation $\sigma_{Er}$ of the composite elastic modulus $E_r$ on the first surface 11 may be, for example, 0.010 GPa or more, may be 0.050 GPa or more, or may be 0.10 GPa or more.

The standard deviation $\sigma_{Er}$ of the composite elastic modulus $E_r$ may be 0.010 GPa or more and 0.90 GPa or less, may be 0.010 GPa or more and 0.88 GPa or less, may be 0.010 GPa or more and 0.87 GPa or less, may be 0.010 GPa or more and 0.78 GPa or less, may be 0.010 GPa or more and 0.69 GPa or less, may be 0.010 GPa or more and 0.60 GPa or less, or may be 0.010 GPa or more and 0.59 GPa or less. The standard deviation $\sigma_{Er}$ of the composite elastic modulus $E_r$ may be 0.050 GPa or more and 0.90 GPa or less, may be 0.050 GPa or more and 0.88 GPa or less, may be 0.050 GPa or more and 0.87 GPa or less, may be 0.050 GPa or more and 0.78 GPa or less, may be 0.050 GPa or more and 0.69 GPa or less, may be 0.050 GPa or more and 0.60 GPa or less, or may be 0.050 GPa or more and 0.59 GPa or less. The standard deviation $\sigma_{Er}$ of the composite elastic modulus $E_r$ may be 0.10 GPa or more and 0.90 GPa or less, may be 0.10 GPa or more and 0.88 GPa or less, may be 0.10 GPa or more and 0.87 GPa or less, may be 0.10 GPa or more and 0.78 GPa or less, may be 0.10 GPa or more and 0.69 GPa or less, may be 0.10 GPa or more and 0.60 GPa or less, or may be 0.10 GPa or more and 0.59 GPa or less.

The composite elastic modulus $E_r$ (GPa) is an indicator of deformability for the first surface 11 and in its vicinity. The standard deviation $\sigma_{Er}$ of the composite elastic modulus $E_r$ (GPa) serves as an indicator of variability in deformability. When the standard deviation $\sigma_{Er}$ (GPa) of the composite elastic modulus is large, variability in deformability also increases. By setting an upper limit on the standard deviation $\sigma_{Er}$ (GPa) of the composite elastic modulus, variability in deformability is restricted. The degree of deformability of the first surface 11 does not significantly vary, resulting in smooth movement of the abrasive piece when the abrasive chip repeatedly moves over the first surface 11. As a result of this, the frictional force between the abrasive chip and the first surface 11 does not greatly change, and local exposure of the first surface 11 to a heavy load can be reduced. The standard deviation $\sigma_{Er}$ of the composite elastic modulus $E_r$ (GPa), therefore, serves as an indicator of uniformity in the lubricity of the first surface 11. It is believed that for this reason, bringing the standard deviation $\sigma_{Er}$ of composite elastic modulus $E_r$ at ten different measurement points on the first surface 11 as determined with the press-in depth set to 30 nm into the range specified above improves the abrasion resistance of the first surface 11.

It should be noted that the inventors of the present disclosure investigated the correlation between the standard deviation of composite elastic modulus measured with indentation depths other than 30 nm and abrasion resistance. The outcome of the investigation was that the standard deviation of composite elastic modulus measured with an press-in depth of 30 nm demonstrated the strongest correlation with abrasion resistance. Composite elastic modulus measured with an press-in depth of 30 nm can indicate deformability with effective reflection of factors such as the surface characteristics of the first surface 11 and the dispersion of particles, such as the hollow silica particles 43, within the functional layer 40B. Composite elastic modulus measured with an press-in depth of 30 nm, therefore, serve as an indicator of local deformability and local lubricity. For this reason, the inventors believe that with the standard deviation of composite elastic modulus measured with an press-in depth of 30 nm, uniformity in the lubricity of the first surface 11 can be evaluated with good accuracy.

The inventors of the present disclosure also investigated the correlation between the standard deviation of indentation hardness, instead of the composite elastic modulus, and abrasion resistance. The outcome of the investigation was that the standard deviation of the composite elastic modulus demonstrated a stronger correlation with abrasion resistance than the standard deviation of indentation hardness. The composite elastic modulus is a more direct indicator of deformability compared with indentation hardness. For this reason, it is believed that with the standard deviation of the composite elastic modulus, uniformity in the lubricity of the first surface 11 can be evaluated with good accuracy.

The inventors of the present disclosure also considered evaluating abrasion resistance on the first surface 11 using the surface roughness of the first surface 11 or the standard deviation of the surface roughness of the first surface 11 instead of the standard deviation of the composite elastic modulus. Surface roughness, however, cannot reflect deformability resulting from the dispersion of particles, such as the hollow silica particles 43, within the functional layer 40B. Composite elastic modulus measured with an press-in depth of 30 nm, by contrast, can reflect not only deformability resulting from the dispersion of particles within the functional layer 40B but also deformability associated with surface characteristics. For such reasons, it is believed that with the standard deviation of composite elastic modulus measured with an press-in depth of 30 nm, uniformity in the lubricity of the first surface 11 can be evaluated with good accuracy.

As in the measurement of the indentation hardness $H_{IT}$, the composite elastic modulus $E_r$ is measured using "TI-950 TriboIndenter," a measuring device manufactured by BRUKER Corporation. As for the indenter tip used for the measurement of the composite elastic modulus $E_r$, "TI-0039," manufactured by BRUKER Corporation, is employed, as in the measurement of the indentation hardness $H_{IT}$. This indenter tip is a Berkovich tip, having a three-sided pyramidal shape. The indenter is pressed into the first surface 11 in the direction normal to the optical sheet 10 to apply a load to the optical sheet 10 under evaluation. The rate of indentation of the indenter is 10 mm/second. The indenter is pressed into the optical sheet 10 until the press-in depth reaches 30 nm. With the indenter at a depth of 30 nm from the first surface 11 within the optical sheet 10, the indenter is held for 5 seconds. Thereafter, the indenter is retracted from the optical sheet 10 in the direction normal to the optical sheet 10 to remove the load from the optical sheet 10. The rate of retraction of the indenter is 10 mm/second.

Through these operations of the indenter, a load-displacement curve C, an example of which is illustrated in Fig. 14, is obtained in the same manner as in the measurement of the indentation hardness $H_{IT}$. Based on the load-displacement curve C, the projected area of contact Ap and the contact stiffness S are calculated in the same manner as in the measurement of the indentation hardness $H_{IT}$. The composite elastic modulus $E_r$ is obtained from equation (4) below, in which the projected area of contact Ap and the contact stiffness S are used.

[Math. 2]

$$E_r = \frac{S\sqrt{\pi}}{2\sqrt{Ap}} \qquad \cdots (4)$$

The composite elastic modulus $E_r$ is measured at ten measurement points for the optical sheet under evaluation. The ten measurement points were selected as ten points located along a straight line at a pitch of 10 μm. From the ten measured composite elastic modulus $E_r$ measured at the ten measuring points, the standard deviation $\sigma_{Er}$ (GPa) of the composite elastic modulus $E_r$ (GPa) is calculated.

It should be noted that indentation hardness can be adjusted using parameters such as the surface characteristics of the first surface 11, the thickness of the functional layer 40B, the materials and amount of the binder component 41 contained in the functional layer 40B, and the materials, amounts, average particle diameters, and dispersion of the particles contained in the functional layer 40B. The composite elastic modulus can also be adjusted using parameters such as the surface characteristics of the first surface 11, the thickness of the functional layer 40B, the materials and amount of the binder component 41 contained in the functional layer 40B, and the materials, amounts, average particle diameters, and dispersion of the particles contained in the functional layer 40B. The standard deviation of the composite elastic modulus can be adjusted using parameters such as the surface characteristics of the first surface 11 and the amounts, average particle diameters, standard deviation of average particle diameters, and dispersion of the particles contained in the functional layer 40B.

<Abrasion Resistance>

For the optical sheet 10 according to the second embodiment, a lower limit is specified for the indentation hardness $H_{IT}$ (GPa) of the first surface 11, and an upper limit is specified for the standard deviation $\sigma_{Er}$ of the composite elastic modulus $E_r$ of the first surface 11. The optical sheet 10 according to the second embodiment has excellent abrasion resistance. An optical sheet to which excellent abrasion resistance has been imparted is superior in both steel wool resistance and felt resistance. A known measure representing abrasion resistance on the surface of an optical sheet is pencil hardness. Pencil hardness is an indicator of resistance when a hard object comes into contact under stress approximating a point load. During repeated frictions or prolonged use, however, gently applied surface loads can cause microscopic scratches. A reasonable approach to evaluate resistance to this type of flaw is the use of steel wool resistance and felt resistance. In an abrasion resistance test using steel wool on the first surface 11, the optical sheet 10 may have high resistance. In an abrasion resistance test using felt on the first surface 11, the optical sheet 10 may have high resistance.

(Steel Wool Abrasion Resistance)

A steel wool abrasion resistance test is an indicator of resistance to flaws and other defects that occur when steel wool is pressed against the test sample under evaluation and relatively moved. The optical sheet 10 may have resistance to a steel wool abrasion resistance test performed under the conditions specified below.

Abrasion resistance test: Steel wool #0000 is used as the abrasive piece and is reciprocated for 1000 cycles under a load of 1000 g at a movement speed of 80 mm/second, with the one-way travel distance being 40 mm.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less. When a flaw or other defect of a severity that poses a problem in application to display devices is observed on the test sample, the optical sheet 10 under evaluation is assessed as lacking resistance to the abrasion resistance test using steel wool on the first surface 11. One optical sheet 10 under evaluation undergoes five runs of the abrasion resistance test. When no defect of a severity that poses a problem in application to display devices occurs throughout the five runs of the test, the optical sheet 10 under evaluation is assessed as having resistance to the abrasion resistance test using steel wool on the first surface 11.

The method for the abrasion resistance test and the method for the evaluation of the sample after the abrasion resistance test are as described in the first embodiment.

(Felt Resistance)

A felt abrasion resistance test is an indicator of resistance to flaws and other defects that occur when felt is pressed against the test sample under evaluation and relatively moved. The optical sheet 10 may have resistance to a steel wool abrasion resistance test performed under the conditions specified below.

Abrasion resistance test: "Jumbo Wearaser®; product number, CS-7," manufactured by TABER Industries, is used as the abrasive piece and is reciprocated for 10000 cycles under a load of 200 g at a movement speed of 200 mm/second, with the one-way travel distance being 50 mm.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less. When a flaw or other defect of a severity that poses a problem in application to display devices is observed on the test sample, the optical sheet 10 under evaluation is assessed as lacking resistance to the abrasion resistance test using felt on the first surface 11. One optical sheet 10 under evaluation undergoes five runs of the abrasion resistance test. When no defect of a severity that poses a problem in application to display devices occurs throughout the five runs of the test, the optical sheet 10 under evaluation is assessed as having resistance to the abrasion resistance test using felt on the first surface 11.

The method for the abrasion resistance test and the method for the evaluation of the sample after the abrasion resistance test are as described in the first embodiment.

<Luminous Reflectance Y>

The optical sheet 10 has a reflection-reducing function that reduces the reflection of light incident on the first surface 11. The luminous reflectance Y on the first surface 11 as measured at an angle of incidence of 5° may be 1.0% or less, may be 0.8% or less, may be 0.7% or less, may be 0.6% or less, or may be 0.5% or less.

The lower limit to the luminous reflectance is not particularly specified. The luminous reflectance Y on the first surface 11 as measured at an angle of incidence of 5° may be 0% or more or may be more than 0%. The luminous reflectance Y on the first surface 11 may be 0% or more and 1.0% or less, may be 0% or more and 0.8% or less, may be 0% or more and 0.7% or less, may be 0% or more and 0.6% or less, or may be 0% or more and 0.5% or less. The luminous reflectance Y on the first surface 11 may be more than 0% and 1.0% or less, may be more than 0% and 0.8% or less, may be more than 0% and 0.7% or less, may be more than 0% and 0.6% or less, or may be more than 0% and 0.5% or less.

The luminous reflectance Y refers to the luminous reflectance Y in the CIE 1931 standard colorimetric system. The luminous reflectance Y is measured by the method described in the first embodiment.

<Total Transmittance>

The total transmittance of the optical sheet 10 may be 50% or more, may be 70% or more, may be 80% or more, or may be 90% or more. The total transmittance of the optical sheet 10 has no specific upper limit. The total transmittance of the optical sheet 10 may be 100% or less or may be less than 100%.

The total transmittance of the optical sheet 10 may be 50% or more and 100% or less, may be 70% or more and 100% or less, may be 80% or more and 100% or less, or may be 90% or more and 100% or less. The total transmittance of the optical sheet 10 may be 50% or more and less than 100%, may be 70% or more and less than 100%, may be 80% or more and less than 100%, or may be 90% or more and less than 100%.

The total transmittance is measured by the method described in the first embodiment.

<Transmission Haze>

The transmission haze of the optical sheet 10 may be 1.0% or less, may be 0.5% or less, or may be 0.2% or less. The transmission haze of the optical sheet 10 has no specific lower limit. The transmission haze of the optical sheet 10 may be 0% or may be more than 0%.

The transmission haze of the optical sheet 10 may be 0% or more and 1.0% or less, may be 0% or more and 0.5% or less, or may be 0% or more and 0.2% or less. The transmission haze of the optical sheet 10 may be more than 0% and 1.0% or less, may be more than 0% and 0.5% or less, or may be more than 0% and 0.2% or less.

The transmission haze is measured by the method described in the first embodiment.

As illustrated in Fig. 13, the optical sheet 10 may include a resin layer 30 positioned between the substrate 20 and the functional layer 40B. The resin layer 30 is adjacent to the functional layer 40B. The resin layer 30 may contain the cured product of a curable resin composition. A resin layer 30 containing the cured product of a curable resin composition has high strength and high hardness. Through the placement and support of the functional layer 40B on the resin layer 30, the indentation hardness of the first surface 11 is increased, and the abrasion resistance of the first surface 11 can be further improved.

In the following, layers that can be included in the optical sheet 10 illustrated in Fig. 13 will be described. In the example illustrated in Fig. 13, the substrate 20, the resin layer 30, and the functional layer 40B are stacked in a third direction D3; that is, the third direction D3 is the stacking direction. The substrate 20, the resin layer 30, and the functional layer 40B extend in a first direction D1 and a second direction D2, which are perpendicular to the third direction D3. In the illustrated example, the first direction D1 and the second direction D2 are perpendicular to each other. The third direction D3 is the direction normal to the optical sheet 10. The third direction D3 is also the direction normal to each layer included in the optical sheet 10. For the optical sheet 10 illustrated in Fig. 13, the first surface 11 is formed by the functional layer 40B. The second surface 12 is formed by the substrate 20.

It should be noted that in some cases, the optical sheet 10 may further have layers such as an antistatic layer and an antifouling layer, and these layers may form the first surface 11 by being supported by the functional layer 40B. These antistatic, antifouling, and other layers are very thin layers. If not, the functional layer 40B cannot effectively exhibit even its reflection-reducing function. Accordingly, even in cases in which layers such as an antistatic layer and an antifouling layer form the first layer 11, the abrasion resistance on the first surface 11 is still influenced by the functional layer 40B. With a functional layer 40B as described above, therefore, the abrasion resistance of the first surface 11 can be significantly improved.

In the second embodiment, the substrate 20 included in the optical sheet may be configured identically to the substrate 20 described in the first embodiment. In the second embodiment, the resin layer 30 included in the optical sheet may be configured identically to the resin layer 30 described in the first embodiment.

<<Functional Layer 40B>>

The functional layer 40B contains a binder component 41 and hollow silica particles 43. By virtue of containing hollow silica particles 43, the functional layer 40B has a reduced refractive index. The functional layer 40B can have a refractive index lower than the refractive index of the binder component 41. The refractive index of the functional layer 40B may be lower than the refractive index of the substrate 20. The refractive index of the functional layer 40B may be lower than the refractive index of the layer adjacent to the functional layer 40B.

The functional layer 40B can exhibit the function of reducing the reflection of incident light by virtue of its refractive index and thickness. The reflection-reducing function provided by the functional layer 40B is based on interference between rays of light reflected at the surfaces of the functional layer 40B on both sides. To make this reflection-reducing function effective, the refractive index of the functional layer 40B may be intermediate between the refractive indices of the two regions adjacent to the functional layer 40B on both sides. The thickness (nm) of the functional layer 40B, furthermore, may be approximately 1/4 of the wavelength $\lambda$ (nm) of the light whose reflection is to be reduced.

The refractive index of the functional layer and the average thickness of the functional layer can be selected in view of the reflection-reducing function. The refractive index of the functional layer may be set within the numerical ranges for refractive index specified in the first embodiment. The thickness of the functional layer may be set within the numerical ranges for thickness specified in the first embodiment.

<Binder Component 41>

The binder component 41 is an element that holds the hollow silica particles 43. The binder component 41 may function as a binding agent for the formation of a coating. The binder component 41 may hold the particles contained in the functional layer 40B to allow the functional layer 40B to maintain its film form. The binder component 41 may contain a resin. The resin contained in the binder component 41 may be a natural resin or may be a synthetic resin. The binder component 41 may cover the particles contained in the functional layer 40B. The binder component 41 may completely encapsulate each particle contained in the functional layer 40B or may leave at least a subset of the particles contained in the functional layer 40B partially exposed.

The binder component 41 may contain the cured product of at least one curable resin composition. The curable resin composition may include one or more of thermosetting resin compositions and ionizing radiation-curable resin compositions. The cured product of a curable resin composition can impart high strength and high hardness to the functional layer 40B. Through this, the indentation hardness of the first surface 11 is increased, and the abrasion resistance of the first surface 11 is further improved. Ionizing radiation-curable resin compositions are particularly advantageous from the viewpoint of the improvement of abrasion resistance.

The material(s) for the binder component 41 may be identical to the material(s) for the binder component 41 described in the first embodiment. For example, the binder component 41 may contain the cured product of one or more thermosetting resin compositions as described in the first embodiment. The binder component 41 may contain the cured product of one or more ionizing radiation-curable resin compositions as described in the first embodiment. The binder component 41 may contain one or more ionizing radiation-curable compounds as mentioned by way of example in the first embodiment.

The binder component may contain a (meth)acrylate compound as an ionizing radiation-curable compound. The (meth)acrylate compound may be a monomer or may be an oligomer. With ionizing radiation-curable compounds including a low-functionality (meth)acrylate compound, unevenness in shrinkage during curing can be reduced, and the surface of the functional layer 40B can be smoothened. By smoothening the surface of the functional layer 40B, the standard deviation of the composite elastic modulus of the first surface 11 is reduced, and the abrasion resistance of the first surface 11 is improved.

When ionizing radiation-curable compounds include a large amount of polyfunctional (meth)acrylate compound, the surface of the functional layer can be smoothened by appropriately adjusting the type of solvent and drying conditions. By smoothening the surface of the functional layer 40B, the standard deviation of the composite elastic modulus of the first surface 11 is reduced, and the abrasion resistance of the first surface 11 is improved.

<Particles (hollow silica particles 43 and solid silica particles 44)>

In addition to the binder component 41, the functional layer 40B contains hollow silica particles 43. The functional layer 40B may contain other particles. Examples of additional particles include inorganic particles, such as magnesium fluoride particles, and organic particles.

The functional layer 40B contains hollow silica particles 43 as silica particles. The hollow silica particles 43 have a shell layer formed of silica. For the hollow silica particles 43, the interior of the particles enclosed by the shell layer is a cavity. Air may be contained inside the cavity. By virtue of containing an internal cavity, the hollow silica particles 43 have a refractive index lower than the refractive index of silica. The refractive index of the hollow silica particles 43 decreases with increasing volume of the internal cavity. The hollow silica particles 43 reduce the overall refractive index of the functional layer 40B. By using hollow silica particles 43 with an increased proportion of internal space and a larger particle diameter, the refractive index of the functional layer 40B can be further reduced.

The hollow silica particles 43 may be uniformly dispersed within the functional layer 40B. Through uniform dispersion of the hollow silica particles 43 within the functional layer 40B, the first surface 11 is smoothened. As a result of this, the lubricity of the first surface 11 is improved, and the abrasion resistance of the first surface 11 is enhanced. By taking measures such as reducing variations in particle diameter among the hollow silica particles 43, adjusting the average particle diameter of the hollow silica particles 43 relative to the average film thickness of the binder component 41, adjusting the compatibility between the hollow silica particles 43 and the binder component 41, adjusting the ratio between the amounts of the hollow silica particles 43 and the other particles and the ratio between their average particle diameters, and adjusting the compatibility between the hollow silica particles 43 and the other particles, the hollow silica particles 43 can be uniformly dispersed within the functional layer 40B. Through this, the standard deviation of the composite elastic modulus of the first surface 11 is reduced, and the abrasion resistance of the first surface 11 is improved.

As illustrated in Fig. 13, the functional layer 40B may contain solid silica particles 44 in addition to the hollow silica particles 43. The solid silica particles 44 are nonhollow silica particles. The solid silica particles 44 are particles having no internal cavity. The solid silica particles 44 may be silica particles that are solid. By being dispersed in the binder component 41, the solid silica particles increase the indentation hardness of the first surface 11 and improve the abrasion resistance of the functional layer 40B.

The solid silica particles 44 may be uniformly dispersed within the functional layer 40B together with the hollow silica particles 43. Through uniform dispersion of the solid silica particles 44 within the functional layer 40B together with the hollow silica particles 43, the first surface 11 is smoothened. As a result of this, the lubricity of the first surface 11 is improved, the standard deviation of the composite elastic modulus of the first surface 11 is reduced, and the abrasion resistance of the first surface 11 is enhanced. By taking measures such as adjusting the ratio between the amounts of the solid silica particles 44 and the other particles, such as the hollow silica particles 43, and the ratio between their average particle diameters and adjusting the compatibility between the solid silica particles 44 and the other particles, such as the hollow silica particles 43, the solid silica particles 44 can be uniformly dispersed within the functional layer 40B together with the hollow silica particles 43. In the example illustrated in Fig. 13, the hollow silica particles 43 and the solid silica particles 44 are uniformly dispersed within the functional layer 40B.

The functional layer 40B may contain metal oxide particles other than silica particles. The metal oxide particles other than silica particles may be configured identically to the metal oxide particles other than silica particles described in the first embodiment. For example, the metal oxide particles may include alumina particles.

The shape of the particles dispersed within the functional layer 40B, such as the hollow silica particles 43 and the solid silica particles 44, may be as in the first embodiment. The shape of the particles dispersed within the functional layer 40B is not particularly limited. By making the shape of the particles dispersed within the functional layer 40B, such as the hollow silica particles 43 and the solid silica particles 44, perfectly spherical, spheroidal, or substantially spherical, the lubricity of the first surface 11 is improved. As a result of this, the standard deviation of the composite elastic modulus of the first surface 11 is reduced, and the abrasion resistance of the first surface 11 is improved.

As in the first embodiment, the particles dispersed within the functional layer 40B, such as the hollow silica particles 43 and the solid silica particles 44, may have a surface coated with a silane coupling agent. The silane coupling agent may be identical to the silane coupling agent described in the first embodiment. For example, the silane coupling agent may contain a (meth)acryloyl group or an epoxy group. By applying a surface treatment with a silane coupling agent to the particles, the compatibility between the particles and the binder resin is improved, and the likelihood of particle aggregation is reduced. As a result of this, the particles are more uniformly dispersed within the binder resin. Consequently, the standard deviation of the composite elastic modulus of the first surface 11 is reduced, and the abrasion resistance of the first surface 11 is improved.

As illustrated in Fig. 13, the particles contained in the functional layer 40B, such as the hollow silica particles 43 and the solid silica particles 44, may be present at a high concentration within the functional layer 40B and uniformly dispersed within the functional layer 40B. With such a configuration, as mentioned above, the first surface 11 is smoothened, and the dynamic coefficient of friction of the first surface 11 is also reduced. As a result of this, the standard deviation of the composite elastic modulus of the first surface 11 is reduced, and the abrasion resistance of the first surface 11 is improved as illustrated in Fig. 13, hollow silica particles 43 having a large average particle diameter are uniformly dispersed within the functional layer 40B. The solid silica particles 44 are dispersed within the functional layer 40B such that they fill the gaps between the hollow silica particles 43. Within the functional layer 40B, the solid silica particles 44 are positioned in proximity to the hollow silica particles 43.

In the example illustrated in Fig. 13, hollow silica particles 43 having a larger average particle diameter are uniformly dispersed within the functional layer 40B, and solid silica particles 44 having a smaller average particle diameter are packed within the functional layer 40B in such a manner as to fill the gaps between the hollow silica particles 43. In this example, the functional layer 40B has high hardness, and, at the same time, the surface of the functional layer 40B is smooth. In other words, the indentation hardness of the first surface 11 is increased, and the standard deviation of the composite elastic modulus of the first surface 11 is reduced. As a result of this, the abrasion resistance of the first surface 11 is improved.

The average particle diameter of the hollow silica particles 43 may be 50 nm or more and 100 nm or less, may be 65 nm or more and 100 nm or less, may be 50 nm or more and 80 nm or less, or may be 65 nm or more and 80 nm or less.

The average particle diameter of the solid silica particles 44 may be 5 nm or more and 20 nm or less, may be 10 nm or more and 20 nm or less, may be 5 nm or more and 15 nm or less, or may be 10 nm or more and 15 nm or less. The average particle diameter of the solid silica particles 44 may be smaller than the average particle diameter of the hollow silica particles 43.

By setting a lower limit to the average particle diameter of the solid silica particles 44, it can be ensured that the solid silica particles 44 can contribute to reinforcing the strength and hardness of the functional layer 40B. By setting an upper limit to the average particle diameter of the hollow silica particles 43, it can ensured that the binder component 41 can stably hold the hollow silica particles 43. In other words, the detachment of the hollow silica particles 43 from the functional layer 40B can be reduced, whereby abrasion resistance can be improved. By setting an upper limit to the average particle diameter of the solid silica particles 44 and setting a lower limit for the hollow silica particles 43, the solid silica particles 44 can be positioned in proximity to hollow silica particles 43 having a large average particle diameter. In other words, the hollow silica particles 43 and the solid silica particles 44 can be uniformly dispersed at a high concentration within the functional layer 40B. Through these, the indentation hardness of the first surface 11 is increased, and consistently excellent abrasion resistance can be imparted to the functional layer 40B and the optical sheet 10.

An "average particle diameter" used with respect to particles such as the hollow silica particles 43 and the solid silica particles 44 is defined as a value identified through procedural steps (1) to (3) described in the first embodiment.

The "average thickness" of the functional layer 40B is defined as a value identified through procedural steps (4) to (6) described in the first embodiment.

The average particle diameters of the particles and the thickness of the functional layer can be measured using H-7650 electron microscope, manufactured by Hitachi High-Technologies Corporation, which is a scanning transmission electron microscope (STEM), a type of transmission electron microscope.

As the amount of the hollow silica particles 43 increases, the refractive index of the functional layer 40B decreases, allowing the functional layer 40B to exhibit an excellent reflection-reducing function. A lower limit, therefore, may be set on the amount of the hollow silica particles 43 from the viewpoint of the reflection-reducing function of the functional layer 40B. By setting a lower limit on the amounts of the particles other than the hollow silica particles 43, the smoothness, strength, and hardness of the functional layer 40B can be ensured. By setting a lower limit on the amount of the binder component 41, it can be ensured that the binder component 41 stably holds the particles. Through these, the detachment of the particles can be reduced, whereby excellent abrasion resistance can be ensured. By setting an upper limit on the amount of the binder component 41, it can be ensured that the refractive index of the functional layer 40B decreases, allowing the functional layer 40B to exhibit an excellent reflection-reducing function. By setting an upper limit on the amount of each group of particles, significant aggregation of the particles can be reduced.

The amount of the hollow silica particles per 100 parts by mass of the binder component may be set within the numerical ranges specified in the first embodiment. The amount of the solid silica particles per 100 parts by mass of the binder component may be set within the numerical ranges specified in the first embodiment. The amount of the solid silica particles per 100 parts by mass of the hollow silica particles may be set within the numerical ranges specified in the first embodiment.

<Functional Layer 40B Production Method>

The functional layer 40B may be produced using a coating solution containing a curable resin composition and the particles. Curing treatment of an applied coating of the coating solution may yield the functional layer 40B. The functional layer coating solution, which is for producing the functional layer 40B, may contain additives, such as an antistatic agent, an antioxidant, a surfactant, a dispersant, and an ultraviolet absorber. The functional layer coating solution may contain a silicone leveling agent (a silicone compound) as an additive. Through the inclusion of a silicone leveling agent in the functional layer coating solution, the surface of the functional layer 40B can be further smoothened. With a silicone leveling agent, excellent lubricity and excellent antifouling properties (ease of wiping off finger prints and large angles of contact with purified water and hexadecane) can be imparted to the surface of the functional layer 40B. The functional layer coating solution may contain one or more of acrylic leveling agents, methacrylic leveling agents, vinyl leveling agents, and aromatic leveling agents instead of a silicone leveling agent or in addition to a silicone leveling agent.

<<Second Functional Layer 50 (high-refractive-index layer)>>

As illustrated in Fig. 15, the optical sheet 10 may further include a second functional layer 50. The second functional layer 50 is positioned between the functional layer 40B and the resin layer 30 in the stacking direction or the third direction D3. The second functional layer 50 may be adjacent to the functional layer 40B in the third direction D3. As described immediately above, the second functional layer 50 is configured as a layer having a higher refractive index than the resin layer 30 and the functional layer 40B and fortifies the reflection-reducing function of the optical sheet 10.

The second functional layer 50 may be configured identically to the second functional layer 50 described in the first embodiment. The refractive index of the second functional layer 50 may be set within the ranges for the refractive index of the second functional layer 50 specified in the first embodiment. The thickness of the second functional layer 50 may be set within the ranges for the thickness of the second functional layer 50 specified in the first embodiment. The materials for the second functional layer 50 may include one or more of the materials for the second functional layer 50 described in the first embodiment.

<<Optical Sheet Manufacturing Method>>

The resin layer 30, the functional layer 40B, and the second functional layer 50 included in the optical sheet 10 can be produced by the wet process, in which coating solutions containing the components constituting the respective layers 30, 40B, and 50 are applied onto the substrate 20, dried, and cured. The coating solutions may contain a solvent in addition to the resin compositions and particles used for the formation of the respective layers. The resin compositions may contain solid components constituting the respective layers and additives, such as a polymerization initiator.

An optical sheet 10 including a substrate 20 and a functional layer 40B can be produced as follows. First, a functional layer coating solution, which is for forming the functional layer 40B, is prepared. Then the functional layer coating solution is applied onto a substrate 20 to form an applied coating. After that, the applied coating is dried, and then the applied coating is cured. Through these, a functional layer 40B is produced on the substrate 20, yielding the optical sheet 10.

When the optical sheet 10 includes a resin layer 30 in addition to the functional layer 40B, the resin layer 30 is produced on the substrate 20 before the production of the functional layer 40B. Applying a resin layer coating solution, which is for forming the resin layer 30, onto the substrate 20 and drying and curing the applied coating gives the resin layer 30. Producing the functional layer 40B on the resin layer 30 thereafter yields the optical sheet 10. It should be noted that the resin layer 30 may be produced in an uncured or semi-cured state on the substrate 20, and the resin layer 30 may be completely cured together with the functional layer 40B during the curing of the functional layer 40B.

When the optical sheet 10 includes a second functional layer 50 in addition to the resin layer 30 and the functional layer 40B, the second functional layer 50 is produced on the resin layer 30 after the production of the resin layer 30 and before the production of the functional layer 40B. Applying a second functional layer coating solution, which is for forming the second functional layer 50, onto the resin layer 30 and drying and curing the applied coating gives the second functional layer 50. Producing the functional layer 40B on the second functional layer 50 thereafter yields the optical sheet 10. It should be noted that one or more of the resin layer 30 and the second functional layer 50 may be produced in an uncured or semi-cured state, and the one or more of the resin layer 30 and the second functional layer 50 may be completely cured together with the functional layer 40B during the curing of the functional layer 40B.

By incorporating a solvent in the coating solutions, the viscosity of the coating solutions can be adjusted, and the individual components can be dissolved or dispersed within the coating solutions. The solvent may be identical to the solvent described in the first embodiment. As described in the first embodiment, the drying rates of the coating solutions can be adjusted using parameters such as the type and amount of the solvent.

With an optical sheet 10 manufacturing method using the wet process, a long sheet article 5 including a large number of optical sheets 10 can be manufactured, as described in the first embodiment with reference to Fig. 4. Cutting the long sheet article 5 into a predetermined size yields optical sheets 10. In this case, optical sheets 10 having various dimensions can be obtained from the long sheet article 5 to meet the needs. Optical sheets 10 having various dimensions, therefore, can be provided on an as-needed basis. As illustrated in Fig. 4, by handling the sheet article 5 as a scroll 7 rolled around a roll core with a roll axis RA as the center, the handling of the sheet article 5 can be improved.

The optical sheet manufacturing method may further include a step of selecting a manufactured optical sheet 10 in addition to the above-described step of manufacturing an optical sheet. The step of selecting an optical sheet 10 may include a step of measuring the indentation hardness of the first surface 11 with the press-in depth set to 100 nm and composite elastic modulus of the first surface 11 with the press-in depth set to 30 nm and a step of selecting an optical sheet based on the indentation hardness and the standard deviation of the composite composite modulus at ten different points on the first surface 11. With the combination of the indentation hardness of the first surface 11 as determined with the press-in depth set to 100 nm and the standard deviation of composite elastic modulus at ten different points on the first surface 11 as determined with the press-in depth set to 30 nm, the abrasion resistance of the first surface 11 of optical sheets 10 can be evaluated with good accuracy. Through the selection step, therefore, optical sheets having excellent abrasion resistance can be selected with high precision without performing abrasion tests using felt or steel wool.

The selection step may include a step of determining whether any one or more of conditions A to C below are satisfied and selecting a qualifying optical sheet 10.

[A] The indentation hardness of the first surface as determined with the press-in depth (the indentation depth) set to 100 nm is 0.45 GPa or more, and the standard deviation of composite elastic modulus at ten different points on the first surface as determined with the press-in depth (the indentation depth) set to 30 nm is 1.1 GPa or less

[B] The indentation hardness is 0.55 GPa or more

[C] The standard deviation of composite elastic modulus is 0.80 GPa or less

<<<Polarizing Plate>>>

The optical sheet 10 according to the second embodiment may be applied to a polarizing plate 60, similarly to that according to the first embodiment. As illustrated in Fig. 5, the polarizing plate 60 includes a first protection sheet 61, a polarizer 62, and a second protection sheet 63. The first protection sheet 61 and the second protection sheet 63 sandwich the polarizer 62 therebetween, covering it from both sides. At least one of the first protection sheet 61 or the second protection sheet 63 may include the optical sheet 10. When only one of the first protection sheet 61 or the second protection sheet 63 includes the optical sheet 10, the other protection sheet may include the substrate 20.

<<<Image Display Device>>>

The optical sheet 10 according to the second embodiment may be applied to a display device 65, similarly to that according to the first embodiment. In the example illustrated in Fig. 6, the display device 65 includes an image formation unit 66 and the optical sheet 10. The observer can clearly observe images displayed by the image formation unit 66 through the optical sheet 10, with reflection on the first surface 11 of the optical sheet 10 reduced.

<<<Panel>>>

The optical sheet 10 according to the second embodiment are applicable to various uses, similarly to that according to the first embodiment. Fig. 7 illustrates a panel 70 to which the optical sheet 10 according to the second embodiment is applied. The panel 70 includes the optical sheet 10 and a bonding target article 71 to which the optical sheet 10 has been bonded. By virtue of the optical sheet 10, the panel 70 constitutes a reflection-reducing article, which has a function of reducing reflection. The optical sheet 10 is overlaid on the bonding target article 71 such that its second surface 12 faces the bonding target article 71. The optical sheet 10 may be bonded to the bonding target article 71 with a bonding layer that includes, for example, a permanent adhesive material or a temporary adhesive material interposed therebetween. Examples of bonding target articles 71 include an instrument panel, a timepiece, a display case, a display window, and window glazing.

SECOND EXAMPLES

The second embodiment will be described in further detail with examples. The second embodiment is not limited by the examples below.

1. Measurements and Evaluations

Measurements and evaluations of optical sheets of Examples and Comparative Examples were conducted as described below. The atmosphere during each measurement and evaluation was at a temperature of 23°C $\pm$ 5°C and a relative humidity of 50% $\pm$ 5%. Before the start of each measurement and evaluation, the sample of interest was exposed to the above atmosphere for 30 minutes or more. Then the measurement and evaluation of the sample of interest were performed.

1-1. Luminous Reflectance Y

A 5 cm $\times$ 5 cm sample was cut from the optical sheets of the Examples and Comparative Examples. The samples were visually inspected to confirm the absence of dust, flaws, and other abnormalities. Using the method described above, the luminous reflectance Y (%) of the optical sheet according to each example or comparative example was measured. The measurement of luminous reflectance Y was performed using "V780" UV-visible/NIR spectrophotometer, manufactured by JASCO Corporation. The measurement results are presented in the "Y value" section in Table 2.

1-2. Total Transmittance and Transmission Haze

A 10 cm $\times$ 5 cm sample was cut from the optical sheets of the Examples and Comparative Examples. The samples were visually inspected to confirm the absence of dust, flaws, and other abnormalities. Using the methods described above, the total transmittance (%) and transmission haze (%) of the optical sheet according to each example or comparative example were measured. "HM-150" haze meter, manufactured by Murakami Color Research Laboratory Co., Ltd., was used for the measurement of total transmittance and transmission haze. The measurement results for total transmittance (%) are presented in the "Tt" section of Table 2. The measurement results for transmission haze (%) are presented in the "Hz" section of Table 2.

1-3. Evaluations by Nanoindentation

1-3-1. Indentation Hardness $H_{IT}$

Using the method described above, the indentation hardness of the first surface as determined with the press-in depth set to 100 nm was measured. The measurement results for indentation hardness (GPa) are presented in the "$H_{IT}$" section of Table 2.

1-3-2. composite elastic modulus $E_r$

Using the method described above, the composite elastic modulus $E_r$ as determined with the press-in depth set to 30 nm was measured at ten different points on the first surface, and the standard deviation $\sigma_{Er}$ of the ten measured values was calculated. The standard deviation $\sigma_{Er}$ of composite elastic modulus is presented in the "$\sigma_{Er}$" section in Table 2.

1-4. Steel Wool Resistance

A 5 cm $\times$ 10 cm sample was cut from the optical sheets of the Examples and Comparative Examples. The samples were visually inspected to confirm the absence of dust, flaws, and other abnormalities. Using the method described above, a steel wool abrasion resistance test was performed on the optical sheet according to each example or comparative example. The steel wool abrasion resistance test was performed using "AB-301-S" colorfastness rubbing tester, manufactured by Tester Sangyo Co., Ltd.

The sample that completed a 1000-cycle steel wool abrasion resistance test under a load of 1000 g was removed from the tester, and the surface of the sample formed by the first surface of the optical sheet was observed under the observation conditions specified above. Based on the observation results, each sample was evaluated according to the criteria below. The evaluation result for each of the Examples and Comparative Examples is presented in the "Resistance to SW" section under "Evaluation results" in Table 2. The evaluation of five samples was performed for each example or comparative example, and the worst evaluation result in that example or comparative example is presented in Table 2.

AA: No surface flaws were observed on the surface.

A: A faint, flaw-like pattern was observed on the surface, but the severity of the pattern was acceptable for use as a product.

B: Flaws were observed on the surface.

In the above criteria, "AA" has the highest abrasion resistance. In "AA" and "A," no defect is present that poses a problem in application to display devices. "AA" and "A" are assessed as having resistance to the steel wool abrasion resistance test. In "B," a defect is present that poses a problem in application to display devices. "B" is assessed as lacking resistance to the steel wool abrasion resistance test. It should be noted that the test conditions of "a load of 1000 g and 1000 cycles" in the steel wool abrasion resistance test are conditions more severe than the conditions that antireflection sheets (AR sheets or LR sheets) attached to the display surface of display devices are typically required to withstand.

1-5. Felt Resistance

A 50 mm × 100 mm sample was cut from the optical sheets according to the Examples and Comparative Examples. The samples were visually inspected to confirm the absence of dust, flaws, and other abnormalities. Using the method described above, a felt abrasion resistance test was performed on the optical sheet according to each example or comparative example. The felt abrasion resistance test was performed using "AB-301-S" colorfastness rubbing tester, manufactured by Tester Sangyo Co., Ltd.

The sample that completed a 10000-cycle abrasion resistance test against felt under a load of 200 g was removed from the tester, and the surface of the sample formed by the first surface of the optical sheet was observed under the observation conditions specified above. The presence or absence of flaws was evaluated. Based on the observation results, the sample in each example or comparative example was graded as one of "AA," "A," or "B" in the same manner as in the evaluation criteria. The evaluation result for each of the Examples and Comparative Examples is presented in the "Resistance to felt" section under "Evaluation results" in Table 2. The evaluation of five samples was performed for each example or comparative example, and the worst evaluation result in that example or comparative example is presented in Table 2.

2. Fabrication of Optical Sheets

[COMPARATIVE EXAMPLE 11]

Onto an 80-μm thick triacetylcellulose substrate, resin layer coating solution 11 (HC layer coating solution 11), having the formula specified below, was applied. Then the coating was dried at 70°C × 1 minute to volatilize the solvents. Subsequently, the coating was irradiated with ultraviolet radiation at an integrated intensity of 100 mJ/cm$^2$, whereby a resin layer (a hard-coat layer) having a dry thickness of 10 μm was produced.

Thereafter, second functional layer coating solution 11 (high-refractive-index layer coating solution 11), having the formula specified below, was applied onto the resin layer, and then the coating was dried at 70°C × 1 minute to volatilize the solvents. Subsequently, the coating was irradiated with ultraviolet radiation at an integrated intensity of 100 mJ/cm$^2$, whereby a second functional layer (a high-refractive-index layer) having a dry thickness of 150 nm was formed.

After that, functional layer coating solution 11 (low-refractive-index layer coating solution 11), having the formula specified below, was applied onto the second functional layer. Then the applied coating was dried at 50°C × 30 seconds (drying air velocity, 0.5 m/s), and then the applied coating was dried at 50°C × 30 seconds (drying air velocity, 5 m/s) to volatilize the solvents. Subsequently, the applied coating was irradiated with ultraviolet radiation at an integrated intensity of 200 mJ/cm$^2$, whereby a functional layer (a low-refractive-index layer) having a dry thickness of 100 nm was formed. In this manner, an optical sheet of Comparative Example 11 was obtained.

<Resin Layer Coating Solution 11 (hard-coat layer coating solution 11)>

- Ultraviolet-curable acrylate-containing composition, 100 parts by mass
  (manufactured by Toagosei Co., Ltd.; trade name "ARONIX M-450"; solids content, 100%)
- Ultraviolet-curable acrylate-containing composition, 77 parts by mass
  (manufactured by DKS Co., Ltd.; trade name "NEW FRONTIER R-1403MB"; solids content, 80%)
- Fluorine leveling agent, 5 parts by mass

(DIC Corporation; trade name "MEGAFACE F-568")
- Photoinitiator, 5 parts by mass
  (IGM Resins B.V.; trade name "Omnirad 184")
- Methyl isobutyl ketone, 68 parts by mass
- Methyl ethyl ketone, 200 parts by mass

<Second Functional Layer Coating Solution 11 (high-refractive-index layer coating solution 11)>

- PETA, 100 parts by mass
  (manufactured by Toagosei Co., Ltd.; trade name "ARONIX M-305"; solids content, 100%)
- High-refractive-index particles, 300 parts by mass
  (Nippon Shokubai Co., Ltd.; trade name "ZIRCOSTAR"; solids content, 70%)
- Fluorine leveling agent, 0.7 parts by mass
  (DIC Corporation; trade name "MEGAFACE F251"; solids content, 100%)
- Photoinitiator, 9 parts by mass
  (trade name "Omnirad 127," manufactured by IGM Resins B.V.; solids content, 100%)
- Methyl isobutyl ketone, 3173 parts by mass
- Propylene glycol monomethyl ether, 3173 parts by mass

<Functional Layer Coating Solution 11 (low-refractive-index layer coating solution 11)>

- Polyfunctional acrylate composition, 100 parts by mass
  (manufactured by DKS Co., Ltd.; trade name "NEW FRONTIER MF-001")

- Hollow silica particles, 200 parts by mass
  (average particle diameter, 75 nm; particles having a surface treated with a silane coupling agent having a methacryloyl group)

- Solid silica particles, 110 parts by mass
  (average particle diameter, 12.5 nm; particles having a surface treated with a silane coupling agent having a methacryloyl group)

- Silicone leveling agent, 13 parts by mass
  (Shin-Etsu Chemical Co., Ltd.; trade name "X-22-164E"; solids content, 100%)

- Photoinitiator, 4.3 parts by mass
  (IGM Resins B.V.; trade name "Omnirad 127")

- Solvents, 14,867 parts by mass
  (A solvent mixture of methyl isobutyl ketone and 1-methoxy-2-propyl acetate. Ratio by mass = 68/32)

[EXAMPLE 11]

Resin layer coating solution 12 (HC layer coating solution 12), having the formula specified below, was applied onto a substrate. The applied coating was dried and cured, whereby a resin layer (a hard-coat layer) having a dry thickness of 10 μm was produced. The substrate used in Example 11 was identical to the substrate used in Comparative Example 11 above. The resin layer in Example 11 was prepared using a method and conditions that were different from those in Comparative Example 11 above in that the resin layer coating solution was changed and were otherwise identical to those in Comparative Example 11.

Thereafter, functional layer coating solution 12 (low-refractive-index layer coating solution 12), having the formula specified below, was applied onto the resin layer. The applied coating was dried and cured, whereby a functional layer (a low-refractive-index layer) having a dry thickness of 100 nm was formed. In this manner, an optical sheet of Example 11 was obtained. The optical sheet of Example 11, therefore, included no second functional layer, unlike the optical sheet of Comparative Example 11. The functional layer in Example 11 was prepared using a method and conditions that were different from those in Comparative Example 11 above in that the functional layer coating solution was changed and were otherwise identical to those in Comparative Example 11.

<Resin Layer Coating Solution 12 (hard-coat layer coating solution 12)>

- Ultraviolet-curable acrylate-containing composition, 100 parts by mass
  (manufactured by Toagosei Co., Ltd.; trade name "ARONIX M-450"; solids content, 100%)

- Solid silica particles, 109 parts by mass
  (average particle diameter, 12.5 nm; particles having a surface treated with a silane coupling agent having a methacryloyl group; solids content, 46%)

- Silicone leveling agent, 2 parts by mass
  (manufactured by Dainichiseika Color & Chemicals Mfg. Co., Ltd.; trade name "10-301"; solids content, 5%)

- Photoinitiator, 4 parts by mass
  (IGM Resins B.V.; trade name "Omnirad 184"; solids content, 100%)

- Methyl isobutyl ketone, 69 parts by mass

- Methyl ethyl ketone, 297 parts by mass

- Propylene glycol monomethyl ether, 33 parts by mass

<Functional Layer Coating Solution 12 (low-refractive-index layer coating solution 12)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 12 parts by mass
  (manufactured by Toagosei Co., Ltd.; trade name "ARONIX M-305"; solids content, 100%)
- Hollow silica particles, 842 parts by mass
  (average particle diameter, 65 nm; particles having a surface treated with a silane coupling agent having a methacryloyl group; solids content, 20%)
- Solid silica particles, 27 parts by mass
  (average particle diameter, 9.0 nm; particles having a surface treated with a silane coupling agent having a methacryloyl group; solids content, 50%)
- Alumina particles, 46 parts by mass
  (average particle diameter, 15.0 nm; particles having a surface treated with a silane coupling agent having a methacryloyl group; solids content, 30%)
- Leveling agent, 307 parts by mass
  (Shin-Etsu Chemical Co., Ltd.; trade name "X-71-1203M"; solids content, 20%)
- Leveling agent, 82 parts by mass
  (Arakawa Chemical Industries, Ltd.; trade name "OPSTAR TU2225"; solids content, 15%)
- Photoinitiator, 4 parts by mass
  (IGM Resins B.V.; trade name "Omnirad 127"; solids content, 100%)
- Methyl isobutyl ketone, 13126 parts by mass
- Propylene glycol monomethyl ether acetate, 1472 parts by mass

[EXAMPLE 12]

In Example 12, an optical sheet of Example 12 was obtained using materials and a method that were different from those in Example 11 above in that functional layer coating solution 12 was changed to functional layer coating solution 13, specified below, and were otherwise the same as in Example 11.

<Functional Layer Coating Solution 13 (low-refractive-index layer coating solution 13)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 42 parts by mass
  (manufactured by Toagosei Co., Ltd.; trade name "ARONIX M-305"; solids content, 100%)
- Hollow silica particles, 1096 parts by mass
  (average particle diameter, 65 nm; particles having a surface treated with a silane coupling agent having a methacryloyl group; solids content, 20%)
- Solid silica particles, 97 parts by mass
  (average particle diameter, 12.5 nm; particles having a surface treated with a silane coupling agent having a methacryloyl group; solids content, 37%)
- Leveling agent, 199 parts by mass
  (Shin-Etsu Chemical Co., Ltd.; trade name "X-71-1203M"; solids content, 20%)
- Photoinitiator, 5 parts by mass
  (IGM Resins B.V.; trade name "Omnirad 127"; solids content, 100%)
- Methyl isobutyl ketone, 15255 parts by mass
- Propylene glycol monomethyl ether acetate, 1696 parts by mass

[EXAMPLE 13]

In Example 13, an optical sheet of Example 13 was obtained using materials and a method that were different from those in Example 11 above in that functional layer coating solution 12 was changed to functional layer coating solution 14, specified below, and were otherwise the same as in Example 11.

<Functional Layer Coating Solution 14 (low-refractive-index layer coating solution 14)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1111 parts by mass
  (average particle diameter, 65 nm; particles having a surface treated with a silane coupling agent having a methacryloyl group; solids content, 20%)
- Solid silica particles, 36 parts by mass
  (average particle diameter, 9.0 nm; particles having a surface treated with a silane coupling agent having a methacryloyl group; solids content, 50%)
- Alumina particles, 60 parts by mass
  (average particle diameter, 15.0 nm; particles having a surface treated with a silane coupling agent having a methacryloyl group; solids content, 30%)
- Leveling agent, 201 parts by mass
  (Shin-Etsu Chemical Co., Ltd.; trade name "X-71-1203M"; solids content, 20%)
- Photoinitiator, 6 parts by mass
  (IGM Resins B.V.; trade name "Omnirad 127"; solids content, 100%)
- Methyl isobutyl ketone, 15263 parts by mass
- Propylene glycol monomethyl ether acetate, 1819 parts by mass

[EXAMPLE 14]

In Example 14, an optical sheet of Example 14 was obtained using materials and a method that were different from those in Example 11 above in that functional layer coating solution 12 was changed to functional layer coating solution 15, specified below, and were otherwise the same as in Example 11.

<Functional Layer Coating Solution 15 (low-refractive-index layer coating solution 15)>

- Ultraviolet-curable acrylate-containing composition, 100 parts by mass
  (manufactured by Toagosei Co., Ltd.; trade name "ARONIX M-305"; solids content, 100%)
- Hollow silica particles, 650 parts by mass
  (average particle diameter, 65 nm; particles having a surface treated with a silane coupling agent having a methacryloyl group; solids content, 20%)
- Solid silica particles, 67 parts by mass
  (average particle diameter, 12.5 nm; particles having a surface treated with a silane coupling agent having a methacryloyl group; solids content, 37%)
- Leveling agent, 128 parts by mass
  (Shin-Etsu Chemical Co., Ltd.; trade name "X-71-1203M"; solids content, 20%)
- Leveling agent, 34 parts by mass
  (Arakawa Chemical Industries, Ltd.; trade name "OPSTAR TU2225"; solids content, 15%)
- Photoinitiator, 7 parts by mass
  (IGM Resins B.V.; trade name "Omnirad 127"; solids content, 100%)
- Methyl isobutyl ketone, 8828 parts by mass
- Propylene glycol monomethyl ether acetate, 1034 parts by mass

[EXAMPLE 15]

In Example 15, an optical sheet of Example 15 was obtained using materials and a method that were different from those in Example 11 above in that functional layer coating solution 12 was changed to functional layer coating solution 16, specified below, and were otherwise the same as in Example 11.

<Functional Layer Coating Solution 16 (low-refractive-index layer coating solution 16)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 11 parts by mass
  (manufactured by Toagosei Co., Ltd.; trade name "ARONIX M-305"; solids content, 100%)
- Hollow silica particles, 777 parts by mass
  (average particle diameter, 65 nm; particles having a surface treated with a silane coupling agent having a methacryloyl group; solids content, 20%)
- Solid silica particles, 39 parts by mass
  (average particle diameter, 9.0 nm; particles having a surface treated with a silane coupling agent having a methacryloyl group; solids content, 50%)
- Alumina particles, 65 parts by mass
  (average particle diameter, 15.0 nm; particles having a surface treated with a silane coupling agent having a methacryloyl group; solids content, 30%)
- Leveling agent, 457 parts by mass
  (Shin-Etsu Chemical Co., Ltd.; trade name "X-71-1203M"; solids content, 20%)
- Leveling agent, 82 parts by mass
  (Arakawa Chemical Industries, Ltd.; trade name "OPSTAR TU2225"; solids content, 15%)
- Photoinitiator, 5 parts by mass
  (IGM Resins B.V.; trade name "Omnirad 127"; solids content, 100%)
- Methyl isobutyl ketone, 14107 parts by mass
- Propylene glycol monomethyl ether acetate, 1580 parts by mass

[EXAMPLE 16]

In Example 16, an optical sheet of Example 16 was obtained using materials and a method that were different from those in Example 11 above in that functional layer coating solution 12 was changed to functional layer coating solution 17, specified below, and were otherwise the same as in Example 11.

<Functional Layer Coating Solution 17 (low-refractive-index layer coating solution 17)>

- Ultraviolet-curable siloxane compound-containing composition, 100 parts by mass
  (manufactured by Toagosei Co., Ltd.; trade name "AS-SQ TA-100"; solids content, 100%)

- Ultraviolet-curable acrylate-containing composition, 43 parts by mass
  (manufactured by Toagosei Co., Ltd.; trade name "ARONIX M-305"; solids content, 100%)

- Hollow silica particles, 1111 parts by mass
  (average particle diameter, 65 nm; particles having a surface treated with a silane coupling agent having a methacryloyl group; solids content, 20%)

- Solid silica particles, 36 parts by mass
  (average particle diameter, 9.0 nm; particles having a surface treated with a silane coupling agent having a methacryloyl group; solids content, 50%)

- Alumina particles, 60 parts by mass
  (average particle diameter, 15.0 nm; particles having a surface treated with a silane coupling agent having a methacryloyl group; solids content, 30%)

- Leveling agent, 201 parts by mass
  (Shin-Etsu Chemical Co., Ltd.; trade name "X-71-1203M"; solids content, 20%)

- Leveling agent, 54 parts by mass
  (Arakawa Chemical Industries, Ltd.; trade name "OPSTAR TU2225"; solids content, 15%)

- Photoinitiator, 6 parts by mass
  (IGM Resins B.V.; trade name "Omnirad 127"; solids content, 100%)

- Methyl isobutyl ketone, 15511 parts by mass

- Propylene glycol monomethyl ether acetate, 1851 parts by mass

[EXAMPLE 17]

In Example 17, an optical sheet of Example 17 was obtained using materials and a method that were different from those in Example 11 above in that functional layer coating solution 12 was changed to functional layer coating solution 18, specified below, and were otherwise the same as in Example 11.

<Functional Layer Coating Solution 18 (low-refractive-index layer coating solution 18)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1143 parts by mass
  (average particle diameter, 65 nm; particles having a surface treated with a silane coupling agent having a methacryloyl group; solids content, 20%)
- Solid silica particles, 50 parts by mass
  (average particle diameter, 9.0 nm; particles having a surface treated with a silane coupling agent having a methacryloyl group; solids content, 50%)
- Alumina particles, 83 parts by mass
  (average particle diameter, 15.0 nm; particles having a surface treated with a silane coupling agent having a methacryloyl group; solids content, 30%)

- Leveling agent, 633 parts by mass
  (Shin-Etsu Chemical Co., Ltd.; trade name "X-71-1203M"; solids content, 20%)
- Leveling agent, 113 parts by mass
  (Arakawa Chemical Industries, Ltd.; trade name "OPSTAR TU2225"; solids content, 15%)
- Photoinitiator, 6 parts by mass
  (IGM Resins B.V.; trade name "Omnirad 127")
- Methyl isobutyl ketone, 19354 parts by mass
- Propylene glycol monomethyl ether acetate, 2320 parts by mass

[EXAMPLE 18]

In Example 18, an optical sheet of Example 18 was obtained using materials and a method that were different from those in Example 11 above in that functional layer coating solution 12 was changed to functional layer coating solution 19, specified below, and were otherwise the same as in Example 11.

<Functional Layer Coating Solution 19 (low-refractive-index layer coating solution 19)>

- Ultraviolet-curable siloxane compound-containing composition, 100 parts by mass
  (manufactured by Toagosei Co., Ltd.; trade name "AS-SQ TA-100"; solids content, 100%)

- Ultraviolet-curable acrylate-containing composition, 43 parts by mass
  (manufactured by Toagosei Co., Ltd.; trade name "ARONIX M-305"; solids content, 100%)

- Hollow silica particles, 1135 parts by mass
  (average particle diameter, 65 nm; particles having a surface treated with a silane coupling agent having a methacryloyl group; solids content, 20%)

- Solid silica particles, 65 parts by mass
  (average particle diameter, 9.0 nm; particles having a surface treated with a silane coupling agent having a methacryloyl group; solids content, 50%)

- Alumina particles, 109 parts by mass
  (average particle diameter, 15.0 nm; particles having a surface treated with a silane coupling agent having a methacryloyl group; solids content, 30%)

- Leveling agent, 651 parts by mass
  (Shin-Etsu Chemical Co., Ltd.; trade name "X-71-1203M"; solids content, 20%)

- Leveling agent, 116 parts by mass
  (Arakawa Chemical Industries, Ltd.; trade name "OPSTAR TU2225"; solids content, 15%)

- Photoinitiator, 6 parts by mass
  (IGM Resins B.V.; trade name "Omnirad 127")

- Methyl isobutyl ketone, 19935 parts by mass

- Propylene glycol monomethyl ether acetate, 2320 parts by mass

[COMPARATIVE EXAMPLE 12]

In Comparative Example 12, an optical sheet of Comparative Example 12 was obtained using materials and a method that were different from those in Example 11 above in that functional layer coating solution 12 was changed to functional layer coating solution 20, specified below, and were otherwise the same as in Example 11.

<Functional Layer Coating Solution 20 (low-refractive-index layer coating solution 20)>

- Ultraviolet-curable acrylate-containing composition, 100 parts by mass
  (manufactured by Toagosei Co., Ltd.; trade name "ARONIX M-305"; solids content, 100%)
- Hollow silica particles, 800 parts by mass
  (average particle diameter, 65 nm; particles having a surface treated with a silane coupling agent having a methacryloyl group; solids content, 20%)
- Solid silica particles, 68 parts by mass
  (average particle diameter, 12.5 nm; particles having a surface treated with a silane coupling agent having a methacryloyl group; solids content, 37%)
- Leveling agent, 143 parts by mass
  (Shin-Etsu Chemical Co., Ltd.; trade name "X-71-1203M"; solids content, 20%)
- Photoinitiator, 4 parts by mass
  (IGM Resins B.V.; trade name "Omnirad 127"; solids content, 100%)
- Methyl isobutyl ketone, 9504 parts by mass
- Propylene glycol monomethyl ether acetate, 1144 parts by mass

[Table 2]

Table 2 Samples and Evaluation Results

| | | Example 11 | Example 12 | Example 13 | Example 14 | Example 15 | Example 16 | Example 17 | Example 18 | Comparative Example 11 | Comparative Example 12 |
|---|---|---|---|---|---|---|---|---|---|---|---|
| Y value (%) | | 1.0 | 1.0 | 1.0 | 1.0 | 1.0 | 1.0 | 1.0 | 1.0 | 0.1 | 1.0 |
| Tt (%) | | 95.1 | 95.1 | 95.2 | 95.0 | 95.1 | 95.2 | 95.2 | 95.2 | 95.9 | 95.2 |
| Hz (%) | | 0.2 | 0.2 | 0.3 | 0.3 | 0.2 | 0.3 | 0.3 | 0.3 | 0.3 | 0.3 |
| $H_{IT}$ (Gpa) | | 0.59 | 0.60 | 0.57 | 0.49 | 0.57 | 0.57 | 0.56 | 0.70 | 0.42 | 0.42 |
| $\sigma_{Er}$ (Gpa) | | 0.78 | 0.60 | 0.87 | 0.21 | 0.88 | 0.59 | 0.69 | 0.54 | 1.2 | 0.54 |
| Evaluation results | Resistance to SW | AA | A | AA | A | A | AA | AA | AA | B | B |
| | Resistance to felt | A | AA | A | A | A | A | AA | A | B | B |

# EP 4 632 442 A1

Reference Signs List

5, sheet article; 6, roll core; 7, scroll; 10, optical sheet; 11, first surface; 12, second surface; 20, substrate; 30, resin layer; 40A, functional layer; 41, binder component; 43, hollow silica particles; 44, solid silica particles; 45, metal oxide particles; 46, alumina particles; 50, second functional layer; 51, binder component; 52, particles; 60, polarizing plate; 61, first protection sheet; 62, polarizer; 63, second protection sheet; 65, display device; 66, image formation unit; 66a, display surface; 70, panel; 71, bonding target article

**Claims**

1. An optical sheet having a first surface and a second surface opposite the first surface, the optical sheet comprising: a substrate and a functional layer in order from the second surface toward the first surface, wherein:

   the functional layer contains a binder component, hollow silica particles, and metal oxide particles other than silica particles; and
   an arithmetical mean roughness Sa on the first surface is 5.2 nm or less.

2. The optical sheet according to claim 1, wherein the arithmetical mean roughness Sa is 4.2 nm or less.

3. The optical sheet according to claim 1, wherein a dynamic coefficient of friction of the first surface against felt under an applied load of 500 g is 0.20 or less.

4. The optical sheet according to claim 1, wherein a dynamic coefficient of friction of the first surface against steel wool under an applied load of 500 g is 0.25 or less.

5. The optical sheet according to claim 1, wherein an average particle diameter of the metal oxide particles is smaller than an average thickness of the functional layer.

6. The optical sheet according to claim 1, wherein an average particle diameter of the metal oxide particles is smaller than an average particle diameter of the hollow silica particles.

7. The optical sheet according to claim 1, wherein the metal oxide particles contain alumina.

8. The optical sheet according to claim 1, wherein the functional layer contains solid silica particles.

9. The optical sheet according to claim 1, further comprising a resin layer positioned between the substrate and the functional layer,
   wherein the resin layer contains a cured product of a curable resin composition.

10. An optical sheet having a first surface and a second surface opposite the first surface, the optical sheet comprising: a substrate and a functional layer in order from the second surface toward the first surface, wherein:

    the functional layer contains a binder component and hollow silica particles;
    an indentation hardness of the first surface as determined with an press-in depth set to 100 nm is 0.45 GPa or more; and
    a standard deviation of composite elastic modulus at ten different points on the first surface as determined with an press-in depth set to 30 nm is 1.1 GPa or less.

11. The optical sheet according to claim 10, wherein the indentation hardness is 0.55 GPa or more.

12. The optical sheet according to claim 10, wherein the standard deviation of the composite elastic modulus is 0.80 GPa or less.

13. The optical sheet according to claim 10, wherein an average thickness of the functional layer is 80 nm or more and 150 nm or less.

14. The optical sheet according to claim 10, wherein an average particle diameter of the hollow silica particles is 50 nm or more and 100 nm or less.

**15.** The optical sheet according to claim 10, further comprising a resin layer positioned between the substrate and the functional layer and adjacent to the functional layer,
wherein:

the resin layer contains a cured product of a curable resin composition; and
an average thickness of the resin layer is 0.1 $\mu$m or more and 100 $\mu$m or less.

**16.** The optical sheet according to claim 10, further comprising a second functional layer positioned between the substrate and the functional layer and adjacent to the functional layer,
wherein:

the second functional layer contains a binder component and particles; and
an average thickness of the second functional layer is 50 nm or more and 200 nm or less.

**17.** The optical sheet according to claim 16, further comprising a resin layer positioned between the substrate and the second functional layer and adjacent to the second functional layer,
wherein

the resin layer contains a cured product of a curable resin composition; and
an average thickness of the resin layer is 0.1 $\mu$m or more and 100 $\mu$m or less.

**18.** A sheet article comprising a plurality of the optical sheets according to any one of claims 1 to 17.

**19.** The sheet article according to claim 18, wherein the article is rolled with a roll axis as a center.

**20.** A polarizing plate comprising:
a first protection sheet, a polarizer, and a second protection sheet, wherein:
the first protection sheet and/or the second protection sheet includes the optical sheet according to any one of claims 1 to 17.

**21.** A display device comprising:

an image formation unit; and
the optical sheet according to any one of claims 1 to 17 stacked to the image formation unit.

**22.** A panel comprising:

a bonding target article; and
the optical sheet according to any one of claims 1 to 17 bonded to the bonding target article.

**23.** An optical sheet selection method relating to:
optical sheets having a first surface and a second surface opposite the first surface, the optical sheets including:
a substrate and a functional layer in order from the second surface toward the first surface, wherein:
the functional layer contains a binder component, hollow silica particles, and metal oxide particles other than silica particles, the method comprising:

measuring an arithmetical mean roughness Sa on the first surface; and
selecting an optical sheet for which the arithmetical mean roughness Sa is 5.2 nm or less.

**24.** An optical sheet manufacturing method comprising:
producing optical sheets having a first surface and a second surface opposite the first surface, the optical sheets including:
a substrate and a functional layer in order from the second surface toward the first surface, wherein:

the functional layer contains a binder component, hollow silica particles, and metal oxide particles other than silica particles; and

evaluating an arithmetical mean roughness Sa on the first surface and selecting an optical sheet for which the arithmetical mean roughness Sa is 5.2 nm or less.

25. An optical sheet selection method relating to:
optical sheets having a first surface and a second surface opposite the first surface, the optical sheets including:
a substrate and a functional layer in order from the second surface toward the first surface, wherein:
the functional layer contains a binder component and hollow silica particles, the method comprising:

measuring an indentation hardness of the first surface with an press-in depth set to 100 nm and composite elastic modulus of the first surface with an press-in depth set to 30 nm; and
selecting an optical sheet based on the indentation hardness and a standard deviation of the composite elastic modulus at ten different points on the first surface.

26. An optical sheet manufacturing method comprising:
a step of producing optical sheets having a first surface and a second surface opposite the first surface, the optical sheets including:
a substrate and a functional layer in order from the second surface toward the first surface, wherein:

the functional layer contains a binder component and hollow silica particles; and
a step of selecting an optical sheet based on an indentation hardness of the first surface as determined with an press-in depth set to 100 nm and a standard deviation of composite elastic modulus at ten different points on the first surface as determined with an press-in depth set to 30 nm.

FIG. 1

FIG. 2

FIG. 3

FIG. 4

60

61(10)
62
63(10)

D3

D2 ⊗ → D1

# FIG. 5

65

66a

10
66

D3

D2 ⊗ → D1

# FIG. 6

70

10
71

D3

D2 ⊗ → D1

# FIG. 7

FIG. 8

FIG. 9

D2

D3 · D1

**FIG.10**

D2

D3 · D1

**FIG.11**

FIG.12

FIG.13

FIG.14

FIG.15

## INTERNATIONAL SEARCH REPORT

| International application No. |
|---|
| **PCT/JP2023/043607** |

**A. CLASSIFICATION OF SUBJECT MATTER**

*G02B 1/111*(2015.01)i; *B32B 7/022*(2019.01)i; *B32B 7/023*(2019.01)i; *B32B 27/20*(2006.01)i; *G02B 1/14*(2015.01)i; *G02B 5/30*(2006.01)i

FI: G02B1/111; B32B7/022; B32B7/023; B32B27/20 Z; G02B1/14; G02B5/30

According to International Patent Classification (IPC) or to both national classification and IPC

**B. FIELDS SEARCHED**

Minimum documentation searched (classification system followed by classification symbols)

G02B1/111; B32B7/022; B32B7/023; B32B27/20; G02B1/14; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/020504 A1 (HIGASHIYAMA FILM CO., LTD.) 04 February 2021 (2021-02-04) comparative example 2, examples 6, 10 | 1-5, 7-9, 18-24 |
| Y | | 1-9, 18-24 |
| Y | WO 2010/095325 A1 (KONICA MINOLTA OPTO, INC.) 26 August 2010 (2010-08-26) paragraphs [0005], [0017], [0021], table 1 | 1-5, 7-9, 18-24 |
| X | JP 2020-166236 A (DAINIPPON PRINTING CO LTD) 08 October 2020 (2020-10-08) examples 1, 6 | 10-22, 25-26 |
| Y | | 6 |
| X | JP 2014-041249 A (DAINIPPON PRINTING CO LTD) 06 March 2014 (2014-03-06) claims | 10-22, 25-26 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

PCT/JP2023/043607

| Box No. III | Observations where unity of invention is lacking (Continuation of item 3 of first sheet) |
|---|---|

This International Searching Authority found multiple inventions in this international application, as follows:

(Invention 1) Claims 1-9, 23-24, and claims 18-22 dependent on any of claims 1-9

Document 1 discloses the invention in claim 1. Accordingly, claim 1 lacks novelty in light of document 1, and thus does not have a special technical feature. However, claim 2 dependent on claim 1 has the special technical feature of "an optical sheet having a first side and a second side opposite the first side, and having a substrate and a functional layer in order from the second side toward the first side, wherein the functional layer includes a binder component, hollow silica particles, and metal oxide particles other than silica particles, and wherein the arithmetic mean roughness Sa on the first side is 4.2 nm or less." Thus, claims 1-2 are classified as invention 1.

Also, claims 3-9 and claims 18-22 dependent on any of claims 1-9 are dependent on claim 1 and inventively related to claim 1, and are thus classified as invention 1.

Also, claims 23-24 are inventively related to claim 1, and are thus classified as invention 1.

(Invention 2) Claims 10-17, 25-26, and claims 18-22 dependent on any of claims 10-17

It cannot be said that claims 10-17, 25-26, and claims 18-22 dependent on any of claims 10-17 have a technical feature identical or corresponding to that of claim 2 classified as invention 1.

In addition, claims 10-17, 25-26, and claims 18-22 dependent on any of claims 10-17 are not substantially identical or equivalent to any of the claims classified as invention 1.

Accordingly, claims 10-17, 25-26, and claims 18-22 dependent on any of claims 10-17 cannot be classified as invention 1.

In addition, claims 10-17, 25-26, and claims 18-22 dependent on any of claims 10-17 have the special technical feature of "an optical sheet having a first side and a second side opposite the first side, and having a substrate and a functional layer in order from the second side toward the first side, wherein the functional layer includes a binder component, and hollow silica particles, the indentation hardness of the first surface with an indentation depth of 100 nm is 0.45 GPa or more, and the standard deviation of the composite elastic modulus with an indentation depth of 30 nm at different positions of 10 on the first surface is 1.1 GPa or less," and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2023/043607**

| Patent document cited in search report | | | Publication date (day/month/year) | Patent family member(s) | | | Publication date (day/month/year) |
|---|---|---|---|---|---|---|---|
| WO | 2021/020504 | A1 | 04 February 2021 | EP | 4006592 | A1 | |
| | | | | comparative example 2, examples 6, 10 | | | |
| | | | | CN | 114174871 | A | |
| | | | | KR | 10-2022-0032637 | A | |
| | | | | TW | 202110619 | A | |
| WO | 2010/095325 | A1 | 26 August 2010 | TW | 201040576 | A | |
| JP | 2020-166236 | A | 08 October 2020 | US | 2022/0091303 | A1 | |
| | | | | examples 1, 6 | | | |
| | | | | WO | 2020/145373 | A1 | |
| | | | | EP | 3909764 | A1 | |
| | | | | CN | 113272136 | A | |
| | | | | TW | 202035581 | A | |
| | | | | KR | 10-2021-0113270 | A | |
| JP | 2014-041249 | A | 06 March 2014 | (Family: none) | | | |

Form PCT/ISA/210 (patent family annex) (July 2022)

**EP 4 632 442 A1**

**Patent documents cited in the description**

- WO 2021020504 A
- WO 2019208786 A